(19) Europäisches Patentamt
European Patent Office
Office européen des brevets

(11) EP 3 113 274 B1

(12) **EUROPEAN PATENT SPECIFICATION**

(45) Date of publication and mention of the grant of the patent:
**30.09.2020 Bulletin 2020/40**

(21) Application number: **15755198.7**

(22) Date of filing: **25.02.2015**

(51) Int Cl.:
***H01M 10/0567*** *(2010.01)* ***H01M 10/0525*** *(2010.01)*
***H01M 10/0568*** *(2010.01)* ***H01M 10/0569*** *(2010.01)*

(86) International application number:
**PCT/JP2015/055393**

(87) International publication number:
**WO 2015/129748 (03.09.2015 Gazette 2015/35)**

(54) **NON-AQUEOUS ELECTROLYTIC SOLUTION AND NON-AQUEOUS ELECTROLYTE SECONDARY BATTERY USING SAME**

WASSERFREIE ELEKTROLYTLÖSUNG UND SEKUNDÄRBATTERIE MIT WASSERFREIER ELEKTROLYTLÖSUNG

SOLUTION D'ÉLECTROLYTE NON AQUEUX ET BATTERIE SECONDAIRE À SOLUTION D'ÉLECTROLYTE NON AQUEUX L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.02.2014 JP 2014034395**

(43) Date of publication of application:
**04.01.2017 Bulletin 2017/01**

(73) Proprietor: **Mitsubishi Chemical Corporation**
**Tokyo (JP)**

(72) Inventors:
- **WATARAI, Atsushi**
**Chiyoda-ku,**
**Tokyo 100-8251 (JP)**
- **TAKEHARA, Masahiro**
**Chiyoda-ku,**
**Tokyo 100-8251 (JP)**

(74) Representative: **Vossius & Partner**
**Patentanwälte Rechtsanwälte mbB**
**Siebertstrasse 3**
**81675 München (DE)**

(56) References cited:
**WO-A1-2015/037380**
**CN-A- 102 074 738**
**JP-A- H01 134 873**
**JP-A- S62 290 069**
**JP-A- 2007 123 631**
**KR-A- 20090 082 780**
**KR-A- 20090 082 780**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

FIELD OF THE INVENTION

The present invention relates to a non-aqueous electrolytic solution and a non-aqueous electrolyte secondary battery using the same.

BACKGROUND ART

A non-aqueous electrolyte lithium secondary battery using a lithium-containing transition metal oxide in the positive electrode and using a non-aqueous solvent in the electrolytic solution can realize high energy density, and therefore has been applied to various uses in a wide range of from small-size power sources for a cell phone, a laptop personal computer and others to large-size power sources for automobile, railroad, and road leveling. However, recently, there are increasing demands for the non-aqueous electrolyte battery having higher performance, and an improvement of the secondary battery in various properties is strongly required.

In a non-aqueous electrolyte lithium secondary battery, there is used a non-aqueous electrolytic solution containing a non-aqueous solvent, for example, a cyclic carbonate, such as ethylene carbonate or propylene carbonate, a linear carbonate, such as dimethyl carbonate, diethyl carbonate, or ethylmethyl carbonate, a cyclic carboxylate, such as γ-butyrolactone or γ-valerolactone, or a linear carboxylate, such as methyl acetate, ethyl acetate, or methyl propionate, and a solute (electrolyte), such as $LiPF_6$, $LiBF_4$, $LiAsF_6$, $LiCLIO_4$, $LiCF_3SO_3$, or $LiN(CF_3SO_2)_2$.

In a non-aqueous electrolyte secondary battery using the above-mentioned non-aqueous electrolytic solution, the reactivity varies depending on the composition of the non-aqueous electrolytic solution, and therefore the battery characteristics are largely changed according to the non-aqueous electrolytic solution. For improving battery characteristics of the non-aqueous electrolyte secondary battery, such as load characteristics, cycle characteristics, and storage characteristics, and enhancing the safety of the battery upon being overcharged, various studies have been made on the non-aqueous solvent and electrolyte used in the non-aqueous electrolytic solution.

For example, patent document 1 discloses a technique in which, by using an electrolytic solution having added a specific compound, the specific compound is reacted on the electrode in the initial charging to form a film, improving the battery in initial charging/discharging efficiency. This patent document has a description that, in a 2016 type coin cell using a graphite electrode and metal Li, by using an electrolytic solution having added $LiClO_4$ as a solute, propylene carbonate as a solvent, and 5-phenyl-1,3-dioxolane-2,4-dione as an additive in an amount of 5% by mass, alkoxide anions formed due to charging serve as a polymerization initiator to polymerize 5-phenyl-1,3-dioxolane-2,4-dione, forming a polymer film on the electrode, so that the efficiency of the first charging/discharging of the battery is improved.

Patent document 2 discloses a technique in which, by using an organic electrolytic solution having added 1,3-dioxolane-2,5-dione, particularly, an organic electrolytic solution having the above compound and another solvent in a mixed ratio of 1:10 to 30:10, the electrolytic solution is unlikely to suffer decomposition even when the secondary battery is over-discharged, and thus the secondary battery is improved in over-discharge characteristics. This patent document shows results that, by using manganese dioxide as a positive electrode active material, metal Li as a negative electrode active material, and a mixed solvent of 1,3-dioxolane-2,5-dione and DME in a ratio of 1:10 to 30:10 as a solvent for electrolytic solution, the discharge capacity of the battery after being over-discharged is improved. Details are unclear, but there is a description that the low reactivity with the positive electrode in a discharged state improves the battery characteristics.

Patent document 3 discloses a technique in which, by using an organic electrolytic solution using $LiC1O_4$ as a solute and propylene carbonate-3-one as a solvent, the charging/discharging efficiency of the negative electrode is improved, improving the battery in cycle characteristics. This patent document shows results that, by using $TiS_2$ as a positive electrode active material and metal Li as a negative electrode active material, and using propylene carbonate-3-one solely as a solvent for electrolytic solution, the cycle characteristics of the battery are improved. Further, details are unclear, but this patent document discloses the use of propylene carbonate-3-one as a solvent which is unlikely to decompose, and has a description that the low reactivity of the compound with metal Li improves the negative electrode current efficiency.

PRIOR ART REFERENCES

Patent Documents

Patent document 1: Korean Patent Publication No. 10-2009-0082780

Patent document 2: Japanese Unexamined Patent Publication No. Hei 1-134873
Patent document 3: Japanese Unexamined Patent Publication No. Sho 62-290069

SUMMARY OF THE INVENTION

Problems to be Solved by the Invention

In recent years, there are increasing demands for the non-aqueous electrolyte secondary battery having improved properties, and the secondary battery is required to have various performance at high level. However, any techniques, including the above-mentioned techniques disclosed in patent documents 1 to 3, have not yet achieved such a secondary battery. Especially, the secondary battery has a problem in that it is difficult to improve the high-temperature cycle characteristics while suppressing an increase of the initial irreversible capacity of the secondary battery and keeping the initial efficiency high.

Further, from studies made by the inventors of the present invention, problems have been found in that, when the compound described in patent document 1 is used for forming a film on the electrode as mentioned above, gas is generated in a large amount inside the battery to markedly lower the yield of the battery, and in that the battery expands to markedly lower the energy density of the battery.

In view of the above problems, the present invention has been made. That is, an object of the present invention is to provide a non-aqueous electrolyte secondary battery which exhibits small initial irreversible capacity and high initial efficiency as well as excellent high-temperature cycle characteristics without sacrificing the yield of the battery.

Means for Solving the Problems

The present inventors have conducted extensive and intensive studies with a view toward solving the above-mentioned problems. As a result, it has been found that the problems can be solved by using a non-aqueous electrolytic solution which contains a compound represented by the general formula (1) below in an amount in a specific range, and the present invention has been completed.

[Chemical formula 1]

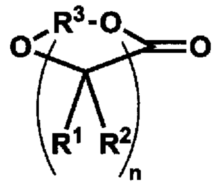

· · · (1)

Specifically, the gist of the present invention is as follows.

[1] A non-aqueous electrolytic solution for use in a non-aqueous electrolyte secondary battery which comprises a positive electrode capable of having occluded therein and releasing metal ions, a negative electrode capable of having occluded therein and releasing metal ions, and a non-aqueous electrolytic solution comprising a non-aqueous solvent and an electrolyte dissolved in the non-aqueous solvent,
wherein the non-aqueous electrolytic solution contains a compound represented by the general formula (1) below in an amount of 0.01 to 4.5% by mass, based on the mass of the non-aqueous electrolytic solution, wherein, when the non-aqueous electrolytic solution contains propylene carbonate, the non-aqueous electrolytic solution contains ethylene carbonate and propylene carbonate, and satisfies at least one of the requirements that (A) the volume ratio of the ethylene carbonate and the propylene carbonate be 99:1 to 40:60, and that (B) the content of the propylene carbonate in the non-aqueous solvent be 10% by volume or less:

[Chemical formula 2]

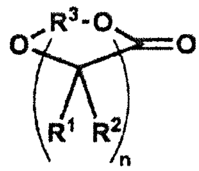

· · · (1)

wherein, in the general formula (1), n represents an integer of 1 to 4; each of $R^1$ and $R^2$ independently represents hydrogen, fluorine, or a hydrocarbon group having 2 carbon atoms or less and optionally being substituted wiht fluorine, wherein the total of the number of carbon atoms of $R^1$ and the number of carbon atoms of $R^2$ is 2 or less, wherein when n is 2 or more, a plurality of $R^1$'s are the same or different and a plurality of $R^2$'s are the same or different; and $R^3$ represents a carbonyl group, a sulfinyl group, a sulfonyl group, or a group represented by the following general formula (2):

[Chemical formula 3]

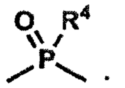

· · · (2)

wherein, in the general formula (2), $R^4$ represents fluorine or a hydrogen group having 1 to 10 carbon atoms and optionally being substituted with fluorine, wherein the non-aqueous electrolyte solution contains a hexafluorophosphate as the electrolyte.

[2] The non-aqueous electrolytic solution according to item [1] above, wherein the compound represented by the general formula (1) above is a compound represented by the following general formula (3):

[Chemical formula 4]

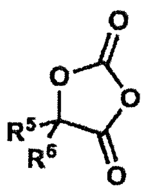

· · · (3)

wherein, in the formula (3), each of $R^5$ and $R^6$ independently represents hydrogen, fluorine, or a hydrocarbon group having 2 carbon atoms or less and optionally being substituted with fluorine, and wherein the total of the number of carbon atoms of $R^5$ and the number of carbon atoms of $R^6$ is 2 or less.

[3] The non-aqueous electrolytic solution according to item [1] or [2] above, wherein the negative electrode capable of having occluded therein and releasing metal ions comprises a carbonaceous material or a material containing silicon.

[4] The non-aqueous electrolytic solution according to item [2] or [3] above, wherein, in the general formula (3), $R^5$ is hydrogen, and $R^6$ is hydrogen or a methyl group.

[5] The non-aqueous electrolytic solution according to any one of items [1] to [4] above, which contains at least one cyclic carbonate and at least one linear carbonate as the non-aqueous solvent, wherein the volume ratio (volume or total volume of the cyclic carbonate or carbonates):(volume or total volume of the linear carbonate or carbonates) is 1.5:8.5 to 4:6.

[6] The non-aqueous electrolytic solution according to item [5] above, which contains at least ethylene carbonate as the cyclic carbonate in the non-aqueous solvent.

[7] The non-aqueous electrolytic solution according to any one of items [1] to [6] above, which further contains at least one compound selected from the group consisting of a cyclic carbonate having a fluorine atom, a cyclic carbonate having a carbon-carbon unsaturated bond, a difluorophosphate, a fluorosulfate, a compound having an isocyanate group, a compound having a cyano group, a cyclic sulfonic ester, and a dicarboxylic acid complex salt.

[8] A non-aqueous electrolyte secondary battery comprising a positive electrode capable of having occluded therein and releasing metal ions, a negative electrode capable of having occluded therein and releasing metal ions, and a non-aqueous electrolytic solution,
wherein the non-aqucous clcctrolytic solution is the non-aqueous electrolytic solution according to any one of items [1] to [7] above.
[9] The non-aqueous electrolyte secondary battery according to item [8] above, wherein the negative electrode comprises a carbonaceous material or a material containing silicon.
[10] The non-aqueous electrolyte secondary battery according to item [8] or [9] above, wherein an active material in the positive electrode contains a lithium-manganese composite oxide having a spinel structure.

Effects of the Invention

By using the non-aqueous electrolytic solution of the present invention, there can be provided a non-aqueous electrolyte secondary battery which exhibits small initial irreversible capacity and high initial efficiency as well as excellent high-temperature cycle characteristics without sacrificing the yield of the battery.

MODE FOR CARRYING OUT THE INVENTION

Hereinbelow, an embodiment of the present invention will be described in detail, but the description of the requirements shown below is an example (representative example) of the embodiment of the present invention, and the present invention is not restricted by the contents specifically shown and can be changed or modified within the scope of the present invention.

[1. Non-aqueous electrolytic solution]

The non-aqueous electrolytic solution of the present invention comprises a non-aqueous solvent and an electrolyte dissolved in the non-aqueous solvent, and further contains a compound represented by the general formula (1) above in a specific amount. Hereinbelow, explanation is made on the electrolyte, non-aqueous solvent, and compound represented by the general formula (1) in this order.

<1-1. Electrolyte>

With respect to the electrolyte used in the non-aqueous electrolytic solution of the present invention, there is no particular limitation, and an electrolyte can be arbitrarily employed according to the intended properties of the non-aqueous electrolyte secondary battery.
Specific examples of the electrolytes include inorganic lithium salts, such as $LiC1O_4$, $LiAsF_6$, $LiPF_6$, $LiBF_4$, and $LiAlF_4$; fluorine-containing organolithium salts, such as $LiCF_3SO_3$, $LiN(FSO_2)_2$, $LiN(CF_3SO_2)_2$, $LiN(C_2F_SSO_2)_2$, $LiN(CF_3SO_2)(C_2F_3SO_2)$, $LiN(CF_3SO_2)(C_3F_7SO_2)$, $LiN(CF_3SO_2)(FSO_2)$, lithium cyclic 1,2-ethanedisulfonyl imide, lithium cyclic 1,3-propanedisulfonyl imide, lithium cyclic 1,2-perfluoroethanedisulfonyl imide, lithium cyclic 1,3-perfluoropropanedisulfonyl imide, lithium cyclic 1,4-perfluorobutanedisulfonyl imide, $LiC(CF_3SO_2)_3$, $LiPF_4(CF_3)_2$, $LiPF_4(C_2F_5)_2$, $LiPF_4(CF_3SO_2)_2$, $LiPF_4(C_2F_3SO_2)_2$, $LiBF_3(CF_3)$, $LiBF_3(C_2F_5)$, $LiBF_2(CF_3)_2$, $LiBF_2(C_2F_3)_2$, $LiBF_2(CF_3SO_2)_2$, and $LiBF_2(C_2F_3SO_2)_2$; and sodium salts and potassium salts, such as $KPF_6$, $NaPF_6$, $NaBF_4$, and $CF_3SO_3Na$.
Among these, preferred are lithium salts, and, of these, preferred are $LiPF_6$, $LiBF_4$, $LiCF_3SO_3$, $LiN(FSO_2)_2$, $LiN(CF_3SO_2)_2$, $LiN(CF_3SO_2)(FSO_2)$, $LiN(C_2F_5SO)_2$, and lithium cyclic 1,2-perfluoroethanedisulfonyl imide, more preferred are $LiPF_6$, $LiBF_4$, $LiCF_3SO_3$, $LiN(FSO_2)_2$, $LiN(CF_3SO_2)_2$, and $LiN(CF_3SO_2)(FSO_2)$, and especially preferred is $LiPF_6$.
The non-aqueous electrolytic solution of the present invention contains a hexafluorophosphate as the electrolyte, because hexafluorophosphate anions are electrochemically stable, and the hexafluorophosphate can improve the charging/discharging efficiency of a non-aqueous electrolyte secondary battery (hereinafter, frequently referred to simply as "non-aqueous electrolyte secondary battery" or "secondary battery") obtained using the non-aqueous electrolytic solution of the present invention. Further, the hexafluorophosphate can remarkably increase the degree of dissociation of the salt, making it possible to increase the concentration of ions serving as a charge carrier in the electrolytic solution.
The above-described electrolytes may be used individually, or two or more types of the electrolytes may be used in an arbitrary combination and in an arbitrary ratio. Especially, it is preferred that two types of inorganic lithium salts or an inorganic lithium salt and a fluorine-containing organolithium salt are used in combination because gas generation during continuous charging of the secondary battery or deterioration after high-temperature storage is effectively suppressed.
Particularly, the use of $LiPF_6$ and $LiBF_4$ in combination, or the use of an inorganic lithium salt, such as $LiPF_6$

or $LiBF_4$, and a fluorine-containing organolithium salt, such as $LiCF_3SO_3$, $LiN(CF_3SO_2)_2$, or $LiN(C_2F_5SO_2)_2$, in combination is preferred.

When $LiPF_6$ and $LiBF_4$ are used in combination, the proportion of $LiBF_4$ to the whole electrolyte is preferably 0.001 to 20% by mass. When the proportion of $LiBF_4$ is in this range, the low degree of dissociation of $LiBF_4$ can suppress an increase of the resistance of the non-aqueous electrolytic solution.

On the other hand, when an inorganic lithium salt, such as $LiPF_6$ or $LiBF_4$, and a fluorine-containing organolithium salt, such as $LiCF_3SO_3$, $LiN(CF_3SO_2)_2$, or $LiN(C_2F_5SO_2)_2$, are used in combination, the proportion of the inorganic lithium salt to the whole electrolyte is preferably 70 to 99.9% by mass. When the proportion of the inorganic lithium salt is in this range, it is possible to prevent a problem in that the proportion of the fluorine-containing organolithium salt generally having a large molecular weight as compared to a hexafluorophosphate is too large so that the ratio of the non-aqueous solvent to the whole non-aqueous electrolytic solution is reduced to increase the resistance of the non-aqueous electrolytic solution.

In the composition of the non-aqueous electrolytic solution of the present invention in the ultimate secondary battery, the concentration of an electrolyte, such as a lithium salt, is arbitrary as long as the effects of the present invention are not markedly sacrificed, but is preferably 0.5 to 3 mol/L. When the electrolyte concentration is the lower limit or more, satisfactory ionic conductivity of the non-aqueous electrolytic solution is easily obtained, and, when the electrolyte concentration is the upper limit or less, too large an increase of the viscosity is prevented. Thus, excellent ionic conductivity and excellent performance of the secondary battery can be easily secured. The concentration of an electrolyte, such as a lithium salt, is more preferably 0.6 mol/L or more, further preferably 0.8 mol/L or more, and is more preferably 2 mol/L or less, further preferably 1.5 mol/L or less.

<1-2. Non-aqueous solvent>

With respect to the non-aqueous solvent that the non-aqueous electrolytic solution of the present invention contains, there is no particular limitation as long as it is a solvent which does not adversely affect the battery characteristics when the resultant non-aqueous electrolytic solution is used in a secondary battery, but preferred is at least one member of the non-aqueous solvents described below.

Examples of non-aqueous solvents include linear carbonates, cyclic carbonates, linear carboxylates, cyclic carboxylates, linear ethers, cyclic ethers, phosphorus-containing organic solvents, sulfur-containing organic solvents, and boron-containing organic solvents.

With respect to the type of the above-mentioned linear carbonate, there is no particular limitation, and examples of linear carbonates include dialkyl carbonates. Of these, preferred are dialkyl carbonates in which the individual alkyl groups constituting the dialkyl carbonate have 1 to 5 carbon atoms, more preferably 1 to 4 carbon atoms, especially preferably 1 to 3 carbon atoms. Specifically, preferred examples of dialkyl carbonates include dimethyl carbonate, ethylmethyl carbonate, diethyl carbonate, methyl-n-propyl carbonate, ethyl-n-propyl carbonate, and di-n-propyl carbonate.

Of these, more preferred are dimethyl carbonate, ethylmethyl carbonate, and diethyl carbonate from the viewpoint of the commercial availability and achieving various excellent characteristics of the non-aqueous electrolyte secondary battery.

Further, a linear carbonate having a fluorine atom (hereinafter, frequently referred to simply as "fluorinated linear carbonate") can be preferably used. With respect to the number of fluorine atom(s) that the fluorinated linear carbonate has, there is no particular limitation as long as the number is 1 or more, but the number is generally 6 or less, preferably 4 or less, more preferably 3 or less. When the fluorinated linear carbonate has a plurality of fluorine atoms, the fluorine atoms may be bonded to the same carbon or may be bonded to different carbons. Examples of fluorinated linear carbonates include fluorinated dimethyl carbonate, fluorinated ethylmethyl carbonate, and fluorinated diethyl carbonate.

Examples of the fluorinated dimethyl carbonates include fluoromethylmethyl carbonate, difluoromethylmethyl carbonate, trifluoromethylmethyl carbonate, bis(fluoromethyl) carbonate, bis(difluoro)methyl carbonate, and bis(trifluoromethyl) carbonate.

Examples of the fluorinated ethylmethyl carbonates include 2-fluoroethylmethyl carbonate, ethylfluoromethyl carbonate, 2,2-difluoroethylmethyl carbonate, 2-fluoroethylfluoromethyl carbonate, ethyldifluoromethyl carbonate, 2,2,2-trifluoroethylmethyl carbonate, 2,2-difluoroethylfluoromethyl carbonate, 2-fluoroethyldifluoromethyl carbonate, and ethyltrifluoromethyl carbonate.

Examples of the fluorinated diethyl carbonates include ethyl-(2-fluoroethyl) carbonate, ethyl-(2,2-difluoroethyl) carbonate, bis(2-fluoroethyl) carbonate, ethyl-(2,2,2-trifluoroethyl) carbonate, 2,2-difluoroethyl-2'-fluoroethyl carbonate, bis(2,2-difluoroethyl) carbonate, 2,2,2-trifluoroethyl-2'-fluoroethyl carbonate, 2,2,2-trifluoroethyl-2',2'-difluoroethyl carbonate, and bis(2,2,2-trifluoroethyl) carbonate.

The fluorinated linear carbonate effectively functions not only as a non-aqueous solvent but also as an additive

described in <1-4. Additive> below. There is no clear boundary in the amount of the incorporated fluorinated linear carbonate when used both as a solvent and as an additive, and, in the present specification, the amount described as the amount of the non-aqueous solvent incorporated and the amount described as the amount of the additive incorporated can be applied as such.

With respect to the type of the above-mentioned cyclic carbonate, there is no particular limitation, and examples of cyclic carbonates include alkylene carbonates, and, of these, preferred are those in which the alkylene group constituting the alkylene carbonate has 2 to 6 carbon atoms, especially preferably 2 to 4 carbon atoms. Specific examples of cyclic carbonates include ethylene carbonate, propylene carbonate, and butylene carbonate (2-ethylethylene carbonate, and cis- and trans-2,3-dimethylethylene carbonate).

Among these, as the cyclic carbonate, ethylene carbonate and propylene carbonate are preferred, and ethylene carbonate is especially preferred because the high permittivity of these carbonates can reduce the resistance of the non-aqueous electrolyte secondary battery. In the present invention, when propylene carbonate is used, the battery characteristics are likely to be adversely affected, and therefore, when propylene carbonate is used, it is essentially to use propylene carbonate and ethylene carbonate in combination, and further it is necessary to satisfy at least one of the requirements that (A) the volume ratio of the ethylene carbonate and the propylene carbonate (ethylene carbonate:propylene carbonate) be 99:1 to 40:60, and that (B) the content of the propylene carbonate in the non-aqueous solvent be 10% by volume or less.

Further, a cyclic carbonate having a fluorine atom (hereinafter, frequently referred to simply as "fluorinated cyclic carbonate") can also be preferably used.

Examples of fluorinated cyclic carbonates include cyclic carbonates having a fluorinated alkylene group having 2 to 6 carbon atoms, more specifically, for example, fluorinated ethylene carbonate and derivatives thereof. Examples of the fluorinated ethylene carbonate and derivatives thereof include fluorinated ethylene carbonate and fluorinated ethylene carbonate substituted with an alkyl group (for example, an alkyl group having 1 to 4 carbon atoms), and, of these, preferred is fluorinated ethylene carbonate having 1 to 8 fluorine atoms.

More specifically, examples of the fluorinated ethylene carbonate and derivatives thereof include monofluoroethylene carbonate, 4,4-difluoroethylene carbonate, 4,5-difluoroethylene carbonate, 4-fluoro-4-methylethylene carbonate, 4,5-difluoro-4-methylethylene carbonate, 4-fluoro-5-methylethylene carbonate, 4,4-difluoro-5-methylethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoroethylene carbonate, 4-(fluoromethyl)-5-fluoroethylene carbonate, 4-fluoro-4,5-dimethylethylene carbonate, 4,5-difluoro-4,5-dimethylethylene carbonate, and 4,4-difluoro-5,5-dimethylethylene carbonate.

Of these, more preferred is at least one member selected from the group consisting of monofluoroethylene carbonate, 4,4-difluoroethylene carbonate, 4,5-difluoroethylene carbonate, and 4,5-difluoro-4,5-dimethylethylene carbonate. The above-mentioned 4,5-difluoroethylene carbonate is preferably of a trans form rather than a cis form. The reason for this is that 4,5-difluoroethylene carbonate of a trans form gives high ionic conductivity to the non-aqueous electrolytic solution and further advantageously forms an interface protecting film on the electrode in the secondary battery.

The fluorinated cyclic carbonate effectively functions not only as a non-aqueous solvent but also as an additive described in <1-4. Additive> below. There is no clear boundary in the amount of the incorporated fluorinated cyclic carbonate when used both as a solvent and as an additive, and, in the present specification, the amount described as the amount of the non-aqueous solvent incorporated and the amount described as the amount of the additive incorporated can be applied as such.

With respect to the type of the above-mentioned linear carboxylate, there is no particular limitation, and examples of linear carboxylates include methyl acetate, ethyl acetate, n-propyl acetate, i-propyl acetate, n-butyl acetate, i-butyl acetate, t-butyl acetate, methyl propionate, ethyl propionate, n-propyl propionate, i-propyl propionate, n-butyl propionate, i-butyl propionate, t-butyl propionate, methyl butyrate, and ethyl butyrate.

Of these, preferred are methyl acetate, ethyl acetate, methyl propionate, ethyl propionate, methyl butyrate, and ethyl butyrate from the viewpoint of the commercial availability and achieving various excellent characteristics of the non-aqueous electrolyte secondary battery.

Further, with respect to the above-mentioned cyclic carboxylate, there is no particular limitation, and examples of cyclic carboxylates include γ-butyrolactone, γ-valerolactone, and δ-valerolactone.

Of these, preferred is γ-butyrolactone from the viewpoint of the commercial availability and achieving various excellent characteristics of the non-aqueous electrolyte secondary battery.

With respect to the type of the above-mentioned linear ether, there is no particular limitation, and examples of linear ethers include dimethoxymethane, dimethoxyethane, diethoxymethane, diethoxyethane, ethoxymethoxymethane, and ethoxymethoxyethane.

Of these, preferred are dimethoxyethane and diethoxyethane from the viewpoint of the commercial availability and achieving various excellent characteristics of the non-aqueous electrolyte secondary battery.

With respect to the above-mentioned cyclic ether, there is no particular limitation, and examples of cyclic ethers

include tetrahydrofuran, 2-methyltetrahydrofuran, and tetrahydropyran.

With respect to the above-mentioned phosphorus-containing organic solvent, there is no particular limitation, and examples of phosphorus-containing organic solvents include trimethyl phosphate, triethyl phosphate, triphenyl phosphate, tris(2,2,2-trifluoroethyl) phosphate, trimethyl phosphite, triethyl phosphite, triphenyl phosphite, trimethylphosphine oxide, triethylphosphine oxide, and triphenylphosphine oxide.

With respect to the type of the above-mentioned sulfur-containing organic solvent, there is no particular limitation, and examples of sulfur-containing organic solvents include ethylene sulfite, 1,3-propane sultone, 1,4-butane sultone, methyl methanesulfonate, ethyl methanesulfonate, busulfane, sulfolane, sulfolene, dimethyl sulfone, ethylmethyl sulfone, diphenyl sulfone, methylphenyl sulfone, dibutyl disulfide, dicyclohexyl disulfide, tetramethylthiuram monosulfide, N,N-dimethylmethanesulfonamide, and N,N-diethylmethanesulfonamide.

With respect to the above-mentioned boron-containing organic solvent, there is no particular limitation, and examples of boron-containing organic solvents include boroxines, such as 2,4,6-trimethylboroxine and 2,4,6-triethylboroxine.

Among the above-described non-aqueous solvents, preferred are a linear carbonate and a cyclic carbonate or a linear carboxylate and a cyclic carboxylate from the viewpoint of achieving various excellent characteristics of the non-aqueous electrolyte secondary battery. Of these, more preferred are ethylene carbonate, propylene carbonate, dimethyl carbonate, ethylmethyl carbonate, diethyl carbonate, 2,2,2-trifluoroethylmethyl carbonate, bis(2,2,2-trifluoroethyl) carbonate, methyl acetate, ethyl acetate, methyl propionate, ethyl propionate, methyl butyrate, ethyl butyrate, and $\gamma$-butyrolactone, and further more preferred are ethylene carbonate, propylene carbonate, dimethyl carbonate, ethylmethyl carbonate, diethyl carbonate, 2,2,2-trifluoroethylmethyl carbonate, methyl acetate, ethyl acetate, methyl propionate, ethyl propionate, and methyl butyrate.

These non-aqueous solvents may be used individually or in combination, but two or more of the non-aqueous solvents are preferably used in combination. For example, a high-permittivity solvent, such as a cyclic carbonate, and a low-viscosity solvent, such as a linear carbonate or a linear ester, are preferably used in combination.

A preferred combination of the non-aqueous solvents is a combination of mainly a cyclic carbonate and a linear carbonate. Especially, a combination is such that the proportion of the total of a cyclic carbonate and a linear carbonate to the whole non-aqueous solvent is preferably 80% by volume or more, more preferably 85% by volume or more, especially preferably 90% by volume or more, wherein the volume ratio of the cyclic carbonate and the linear carbonate (volume or total volume of the cyclic carbonate or carbonates): (volume or total volume of the linear carbonate or carbonates) is preferably 0.5:9.5 to 7:3, more preferably 1:9 to 5:5, further preferably 1.5:8.5 to 4:6, especially preferably 2:8 to 3.5:6.5. A secondary battery produced using the above combination of the non-aqueous solvents advantageously has excellent balance between the cycle characteristics and the high-temperature storage characteristics (particularly, residual capacity after high-temperature storage and high-load discharge capacity).

Examples of preferred combinations of a cyclic carbonate and a linear carbonate include combinations of ethylene carbonate and a linear carbonate, such as a combination of ethylene carbonate and dimethyl carbonate, a combination of ethylene carbonate and diethyl carbonate, a combination of ethylene carbonate and ethylmethyl carbonate, a combination of ethylene carbonate, dimethyl carbonate, and diethyl carbonate, a combination of ethylene carbonate, dimethyl carbonate, and ethylmethyl carbonate, a combination of ethylene carbonate, diethyl carbonate, and ethylmethyl carbonate, and a combination of ethylene carbonate, dimethyl carbonate, diethyl carbonate, and ethylmethyl carbonate.

A combination is also preferred such that propylene carbonate is further combined with the above-mentioned combination of ethylene carbonate and a linear carbonate. When propylene carbonate is contained, as mentioned above, it is necessary that the volume ratio of the ethylene carbonate and the propylene carbonate be 99:1 to 40:60 and/or the content of the propylene carbonate in the whole non-aqueous solvent be 10% by volume or less. The above-mentioned volume ratio is preferably 95:5 to 45:55, more preferably 85:15 to 50:50. Further, the content of the propylene carbonate in the whole non-aqueous solvent is preferably 0.1 to 10% by volume because excellent discharge load characteristics are further obtained while maintaining the properties obtained by the combination of ethylene carbonate and a linear carbonate. The content of the propylene carbonate in the whole non-aqueous solvent is more preferably 1% by volume or more, especially preferably 2% by volume or more, and is more preferably 8% by volume or less, especially preferably 5% by volume or less.

Of these, further preferred are those containing an asymmetric linear carbonate as a linear carbonate, especially preferred are those containing ethylene carbonate, dimethyl carbonate, and ethylmethyl carbonate, those containing ethylene carbonate, diethyl carbonate, and ethylmethyl carbonate, and those containing ethylene carbonate, dimethyl carbonate, diethyl carbonate, and ethylmethyl carbonate, and those further containing propylene carbonate in addition to the above carbonates are preferred because excellent balance between the cycle characteristics and the discharge load characteristics of the secondary battery can be achieved. Especially, preferred are ones in which the asymmetric linear carbonate is ethylmethyl carbonate, and ones in which the alkyl group constituting the dialkyl carbonate has 1 to 2 carbon atoms are preferred.

In the present invention, other preferred examples of non-aqueous solvents include solvents containing a linear carboxylate. Particularly, a mixed solvent of the above-mentioned cyclic carbonate and linear carbonate containing a linear carboxylate is preferred from the viewpoint of improving the discharge load characteristics of the secondary battery. In this case, as the linear carboxylate, methyl acetate, ethyl acetate, methyl propionate, ethyl propionate, methyl butyrate, and ethyl butyrate are especially preferred. The volume ratio of the linear carboxylate to the non-aqueous solvent is preferably 5% by volume or more, more preferably 8% by volume or more, especially preferably 10% by volume or more, and is preferably 50% by volume or less, more preferably 35% by volume or less, especially preferably 30% by volume or less, particularly preferably 25% by volume or less.

<1-3. Compound represented by the general formula (1)>

The non-aqueous electrolytic solution of the present invention contains a compound represented by the general formula (1) below (hereinafter, frequently referred to as "specific ester") as an essential component. In the non-aqueous electrolytic solution of the present invention, a single type of the specific ester may be individually used, or two or more types of the specific esters may be used in an arbitrary combination and in an arbitrary ratio.

[Chemical formula 5]

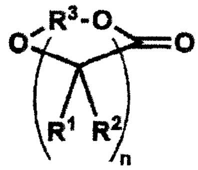

· · · (1)

In the general formula (1), n represents an integer of 1 to 4.

Each of $R^1$ and $R^2$ independently represents hydrogen, fluorine, or a hydrocarbon group having 2 carbon atoms or less and optionally being substituted with fluorine. The total of the number of carbon atoms of $R^1$ and the number of carbon atoms of $R^2$ is 2 or less. When n is 2 or more, a plurality of $R^1$'s may be the same or different and a plurality of $R^2$'s may be the same or different.

$R^3$ represents a carbonyl group, a sulfinyl group, a sulfonyl group, or a group represented by the following general formula (2).

[Chemical formula 6]

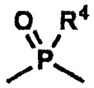

· · · (2)

In the general formula (2), $R^4$ represents fluorine or a hydrocarbon group having 1 to 10 carbon atoms and optionally being substituted with fluorine.

In the present invention, by using the non-aqueous electrolytic solution containing the specific ester in a predetermined amount, it is possible to improve the non-aqueous electrolyte secondary battery in the initial irreversible capacity, initial efficiency, and high-temperature cycle characteristics. Complete elucidation of the action and principle of the above effects has not been made, but the present inventors presume as follows. The action and principle in the present invention are not limited to the action and principle described below.

With respect to the specific ester in the present invention, it is presumed that the compound itself is reduced on the charged negative electrode and the resultant reduction product forms a film-form structure to protect the negative electrode. The film-form structure is an insulator which suppresses a side-reaction, i.e., decomposition of the electrolytic solution, and simultaneously, the film-form structure is an ionic conductive material for a metal, such as lithium, which does not inhibit an electrode reaction, and thus improves the charging/discharging efficiency of the non-aqueous electrolyte secondary battery.

From the viewpoint of improving the charging/discharging efficiency, the above-mentioned reduction product is preferably compact. In other words, the reduction product is preferably a compound which can be densely deposited. When the film-form structure is not dense, voids of the structure are disadvantageously impregnated with the electrolytic solution, so that the structure cannot exhibit its function.

In this connection, the specific ester used in the present invention has a feature that it has a relatively compact side chain in which $R^1$ and $R^2$ are hydrogen, flourine, or a hydrocarbon group having 2 carbon atoms or less and optionally

being substituted with fluorine, so that the compound suffers less steric hindrance as a whole, making it possible to cause the reduction product thereof to be densely deposited.

The above-mentioned hydrocarbon group has 2 carbon atoms or less. Especially, the total of the number of carbon atoms of $R^1$ and the number of carbon atoms of $R^2$ is 2 or less (for example, $R^1$ may be hydrogen and $R^2$ may be a methyl group). When the number of carbon atoms is in the above range, a compact reduction product can be formed, and further the non-aqueous electrolytic solution containing the specific ester is lowered in viscosity, and thus the production process for the non-aqueous electrolyte secondary battery requires only a short period of time.

It is preferred that $R^1$ and $R^2$ are not bonded together to form a ring. When $R^1$ and $R^2$ do not form a ring, the reduction product depositing to form a film-form structure is unlikely to be affected by steric hindrance.

When $R^1$ and $R^2$ are not bonded together to form a ring, specific examples of the hydrocarbon groups include an alkyl group, an alkenyl group, and an alkynyl group.

Specific examples of the alkyl groups include a methyl group, an ethyl group, a propyl group, a 1-methylethyl group, a butyl group, a 1-methylpropyl group, a 2-methylpropyl group, a 1,1-dimethylethyl group, a pentyl group, a 1-methylbutyl group, a 2-methylbutyl group, a 3-methylbutyl group, a 1-ethylpropyl group, a 1,1-dimethylpropyl group, a 1,2-dimethylpropyl group, and a 2,2-dimethylpropyl group, and these groups may have replaced by fluorine part of or all of hydrogens thereof.

Specific examples of the alkenyl groups include an ethenyl group, a propenyl group, a butenyl group, and a pentenyl group, and these groups may have replaced by fluorine part of or all of hydrogens thereof.

Specific examples of the alkynyl groups include an ethynyl group, a propynyl group, a butynyl group, and a pentynyl group, and these groups may have replaced by fluorine part of or all of hydrogens thereof.

Among the above hydrocarbons, preferred are alkyl groups, more preferred are a methyl group, an ethyl group, a propyl group, a butyl group, and a pentyl group, further preferred are a methyl group, an ethyl group, a propyl group, and a butyl group, still further preferred are a methyl group, an ethyl group, and a propyl group, and especially preferred are a methyl group and an ethyl group.

When $R^1$ and $R^2$ are bonded together to form a ring, examples of hydrocarbon groups that $R^1$ and $R^2$ together form include an ethylene group, a trimethylene group, a tetramethylene group, a pentamethylene group, an ethylidene group, a propylidene group, a butylidene group, a pentylidene group, a vinylidene group, an ethylidyne group, a propylidyne group, a butylidyne group, and a pentylidyne group, and preferred are an ethylene group, a trimethylene group, a tetramethylene group, and a pentamethylene group, more preferred are an ethylene group, a trimethylene group, and a tetramethylene group, further preferred are an ethylene group and a trimethylene group, and especially preferred is an ethylene group.

In the general formula (1) above, as mentioned above, n is an integer of 1 to 4, preferably 1 from the viewpoint of the structural stability of a ring {which is a ring formed from two O's, $R^3$, carbonyl carbon, and carbon to which $R^1$ and $R^2$ are bonded in the general formula (1)}.

In the specific ester represented by the general formula (1) above, $R^3$ represents a carbonyl group, a sulfinyl group, a sulfonyl group, or a group represented by the general formula (2) above, and, from the viewpoint of the easiness of production and the metal ionic conductivity of a film-form structure formed from the specific ester, preferred are a carbonyl group, a sulfinyl group, and a sulfonyl group, more preferred are a carbonyl group and a sulfonyl group, and most preferred is a carbonyl group.

Further, in the general formula (2) above, $R^4$ represents fluorine or a hydrocarbon group having 1 to 10 carbon atoms and optionally being substituted with fluorine, and, of these, fluorine is preferred from the viewpoint of the denseness of a film-form structure formed from the specific ester.

With respect to the molecular weight of the above-described specific ester in the present invention, there is no particular limitation, and the molecular weight of the specific ester is arbitrary as long as the effects of the present invention are not markedly sacrificed, but practically, the molecular weight is preferably 250 or less, more preferably 200 or less, further preferably 180 or less, especially preferably 150 or less, most preferably 120 or less. When the molecular weight is in the above range, the specific ester has high solubility in the non-aqueous solvent constituting the non-aqueous electrolytic solution so that the specific ester is likely to more effectively exhibit excellent effects.

As specific examples of the specific esters represented by the general formula (1), there can be mentioned the followings. Among the specific esters, the followings have excellent solubility in the non-aqueous electrolytic solution, making it easy to improve the productivity of the non-aqueous electrolytic solution.

[Chemical formula 7]

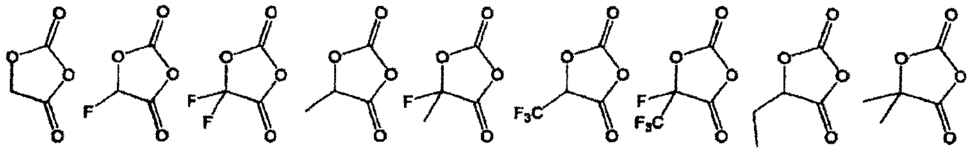

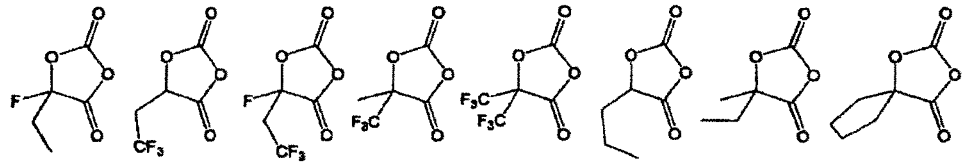

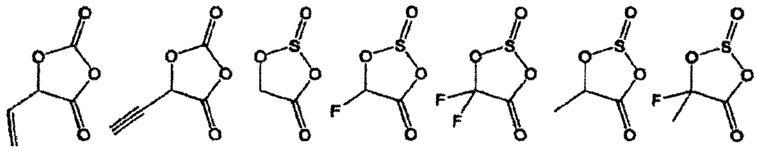

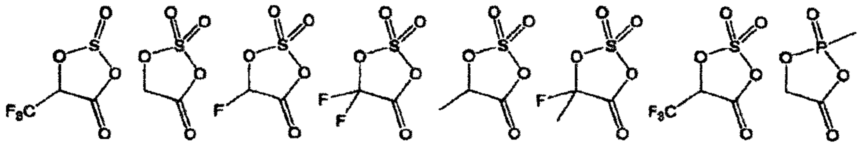

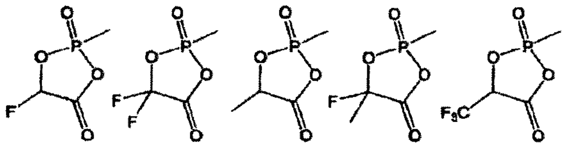

Further, from the viewpoint of the reactivity of the specific ester, the specific ester used in the present invention is preferably a compound represented by the following general formula (3).

[Chemical formula 8]

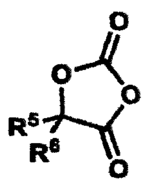

. . . (3)

In the formula (3), $R^5$ and $R^6$ are similar to those in the general formula (1). Specifically, each of $R^5$ and $R^6$ independently represents hydrogen, fluorine, or a hydrocarbon group having 2 carbon atoms or less and optionally being substituted with fluorine. From the viewpoint of preventing the reduction product forming the film-form structure from being affected by steric hindrance, it is preferred that $R^5$ and $R^6$ do not form a ring.

As more preferred examples of the specific esters, there can be mentioned the followings. They have only carbon, hydrogen, and oxygen as constituent elements and hence can suppress the influence on a human body and the environment.

[Chemical formula 9]

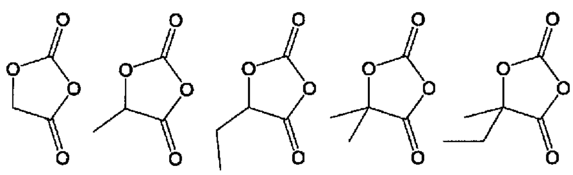

As further preferred examples of the specific esters, there can be mentioned the followings. As mentioned above, it is presumed that they can form a dense, film-form deposit structure from the reduction product.

[Chemical formula 10]

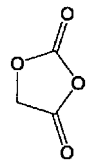 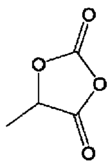 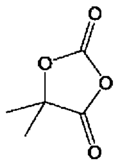

Of these, especially preferred are specific esters represented by the structural formulae (4) and (5) below (compounds of the general formula (3) wherein $R^5$ is hydrogen, and $R^6$ is hydrogen or a methyl group). Raw materials for producing these compounds are easily commercially available and can suppress the production cost for the non-aqueous electrolytic solution.

[Chemical formula 11]

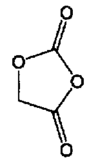
· · · (4)

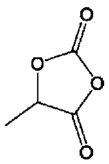
· · · (5)

Most preferred is a specific ester represented by the structural formula (5) above. A high-purity raw material for this specific ester is easily commercially available, and therefore the production process for the non-aqueous electrolytic solution can be simplified. The specific ester represented by formula (5) is optically active, and especially, is preferably of an S-form. The raw material for the specific ester of an S-form is inexpensive and easily available, and further purification is easy.

With respect to the method for producing the above-mentioned specific ester, there is no particular limitation, and the specific ester can be produced by a known method which is arbitrarily selected. For example, the specific ester represented by the structural formula (4) above or the specific ester represented by the structural formula (5) above can be synthesized according to Journal of the Chemical Society (1951), 1357.

It is necessary that the amount of the specific ester in total in the non-aqueous electrolytic solution of the present invention be 0.01 to 4.5% by mass, based on the mass of the non-aqueous electrolytic solution (100% by mass). When the concentration of the specific ester is excessive, a reduction product is formed in too large an amount in the secondary battery and hence excessively covers the surface of the negative electrode, inhibiting an electrode reaction. In addition, the cost for the non-aqueous electrolytic solution is increased. When the concentration of the specific ester is in the above range, desolvation of metal ions at the electrode interface more advantageously proceeds, making it possible to optimize the battery characteristics.

From a similar point of view, the amount of the specific ester is preferably 0.1% by mass or more, and is preferably 3.5% by mass or less, more preferably 3% by mass or less, further preferably 2% by mass or less, especially preferably 1.8% by mass or less, most preferably 1.6% by mass or less.

With respect to the non-aqueous electrolyte secondary battery which is actually produced using the non-aqueous electrolytic solution containing the specific ester, when the battery is dismounted and the non-aqueous electrolytic solution is withdrawn from the battery, the content of the specific ester in the withdrawn non-aqueous electrolytic solution is markedly reduced in many cases. Therefore, when the specific ester can be detected even in an extremely small amount from the non-aqueous electrolytic solution withdrawn from the battery, such a non-aqueous electrolytic solution is considered to be included in the present invention. Further, with respect to the non-aqueous electrolyte secondary battery which is actually produced using the non-aqueous electrolytic solution containing the specific ester, even when the battery is dismounted and the specific ester is contained only in an extremely small amount in the non-aqueous electrolytic solution withdrawn from the battery, in many cases, the specific ester is detected on the positive electrode, negative electrode, or separator which are other members constituting the non-aqueous electrolyte secondary battery. Therefore, when the specific ester is detected from the positive electrode, negative electrode, or separator and the total

content of them, which are assumed to be contained in the non-aqueous electrolytic solution, is 0.01 to 4.5% by mass, such a non-aqueous electrolytic solution is considered to be included in the present invention.

<1-4. Additive>

The non-aqueous electrolytic solution of the present invention may contain various additives in such an amount that the effects of the present invention are not markedly sacrificed. A conventionally known additive can be arbitrarily employed. The additives may be used individually, or two or more types of the additives may be used in an arbitrary combination and in an arbitrary ratio.

Examples of additives include an overcharge preventing agent and auxiliaries for improving the capacity maintaining properties of the secondary battery after high-temperature storage and the cycle characteristics. Of these, as an auxiliary for improving the capacity maintaining properties after high-temperature storage and suppressing an increase of the resistance, at least one compound selected from the group consisting of a cyclic carbonate having a fluorine atom, a cyclic carbonate having a carbon-carbon unsaturated bond, a difluorophosphate, a fluorosulfate, a compound having an isocyanate group, a compound having a cyano group, a cyclic sulfonic ester, and a dicarboxylic acid complex salt (hereinafter, frequently referred to simply as "specific additive") is preferably contained. Hereinbelow, a specific additive and other additives are separately described.

<1-4-1. Specific additive>

It is considered that any specific additive reacts with the specific ester which is reduced on the negative electrode to synchronously form a film-form structure advantageous to an electrode reaction. The action and principle of the above structure formation are not limited to the action and principle described below, but the present inventors presume as follows. With respect to (i) a cyclic carbonate having a fluorine atom, (ii) a cyclic carbonate having a carbon-carbon unsaturated bond, (iii) a difluorophosphate, (iv) a fluorosulfate, (v) a compound having an isocyanate group, (vi) a compound having a cyano group, (vii) a cyclic sulfonic ester, and (viii) a dicarboxylic acid complex salt, a presumed reaction mechanism of the additive with a nucleophilic species $Nu^-$ formed on the surface of the negative electrode due to reduction of the specific ester is shown in the following reaction formulae (1).

[Chemical formula 12]

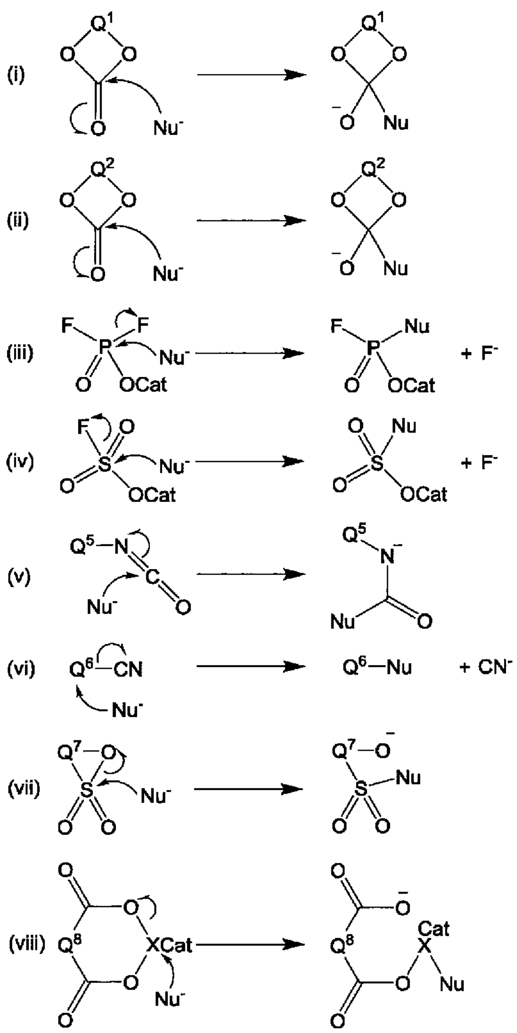

the reaction formulae (1)

In the reaction formulae above, Cat represents a cation constituting the salt. $Q^1$ represents a divalent organic group containing fluorine, $Q^2$ represents a divalent organic group containing a carbon-carbon unsaturated bond, $Q^5$ and $Q^6$ represent a monovalent organic group, $Q^7$ represents a divalent organic group, $Q^8$ represents a single bond or a divalent organic group, and X represents a divalent organic group containing a complex center element.

As shown in the reaction formulae (1) above, any specific additive contains a nucleophilic attack acceptor site, and it is presumed that each reaction shown above as an initiation reaction causes a film-form structure which advantageously assists an electrode reaction to be synchronously formed from the specific ester and specific additive as raw materials.

With respect to the molecular weight of the specific additive, there is no particular limitation, and the molecular weight is arbitrary as long as the effects of the present invention are not markedly sacrificed, but is preferably 50 to 250. When the molecular weight of the specific additive is in the above range, the specific additive has high solubility in the non-aqueous electrolytic solution such that the effect of the addition of the additive can be satisfactorily exhibited.

Further, with respect to the method for producing the specific additive, there is no particular limitation, and the specific additive can be produced by a known method which is arbitrarily selected. Alternative, those which are commercially available may be used.

In the non-aqueous electrolytic solution of the present invention, a single type of the specific additive may be individually contained, or two or more types of the specific additives may be contained in an arbitrary combination and in an arbitrary ratio.

<1-4-1-1. Cyclic carbonate having a fluorine atom>

Among the specific additives, with respect to the cyclic carbonate having a fluorine atom (hereinafter, frequently referred to simply as "F-having carbonate"), there is no particular limitation as long as it has a fluorine atom, and an

arbitrary F-having carbonate can be used.

With respect to the number of fluorine atom(s) that the F-having carbonate has, there is no particular limitation as long as the number is 1 or more, and the number is especially preferably 2 or less.

Examples of F-having carbonates include fluoroethylene carbonate and derivatives thereof.

Specific examples of the fluoroethylene carbonate and derivatives thereof include fluoroethylene carbonate, 4,4-difluoroethylene carbonate, 4,5-difluoroethylene carbonate, 4-fluoro-4-methylethylene carbonate, 4,5-difluoro-4-methylethylene carbonate, 4-fluoro-5-methylethylene carbonate, 4,4-difluoro-5-methylethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoroethylene carbonate, 4-(fluoromethyl)-5-fluoroethylene carbonate, 4-fluoro-4,5-dimethylethylene carbonate, 4,5-difluoro-4,5-dimethylethylene carbonate, and 4,4-difluoro-5,5-dimethylethylene carbonate.

Of these F-having carbonates, preferred are fluoroethylene carbonate, 4-(fluoromethyl)-ethylene carbonate, 4,4-difluoroethylene carbonate, and 4,5-difluoroethylene carbonate, and particularly, fluoroethylene carbonate can contribute to the formation of a stable film-form structure and is most preferably used.

The content of the F-having carbonate is not particularly limited, and is arbitrary as long as the effects of the present invention are not markedly sacrificed, but the content of the F-having carbonate in the non-aqueous electrolytic solution of the present invention (100% by mass) is preferably 0.001 to 10.0% by mass.

When the F-having carbonate content is the lower limit or more, a satisfactory cycle characteristics improvement effect can be exhibited for the non-aqueous electrolyte secondary battery. Further, when the F-having carbonate content is the upper limit or less, an increase of the production cost for the non-aqueous electrolyte secondary battery can be avoided. The F-having carbonate content is more preferably 0.01% by mass or more, further preferably 0.1% by mass or more, especially preferably 0.2% by mass or more, and is more preferably 8.0% by mass or less, especially preferably 6.0% by mass or less.

The F-having carbonate effectively functions not only as an additive but also as a non-aqueous solvent described in <1-2. Non-aqueous solvent> above. There is no clear boundary in the amount of the incorporated F-having carbonate when used both as a solvent and as an additive, and, in the present specification, the amount described as the amount of the non-aqueous solvent incorporated and the amount described as the amount of the additive incorporated can be applied as such.

### <1-4-1-2. Cyclic carbonate having a carbon-carbon unsaturated bond>

Among the specific additives, with respect to the cyclic carbonate having a carbon-carbon unsaturated bond (hereinafter, frequently referred to simply as "unsaturated carbonate"), there is no particular limitation as long as it is a carbonate having a carbon-carbon unsaturated bond, such as a carbon-carbon double bond or a carbon-carbon triple bond, and an arbitrary unsaturated carbonate can be used.

Examples of unsaturated carbonates include vinylene carbonates and ethylene carbonates substituted with a substituent having a carbon-carbon unsaturated bond.

Specific examples of vinylene carbonates include vinylene carbonate, methylvinylene carbonate, and 4,5-dimethylvinylene carbonate.

Specific examples of ethylene carbonates substituted with a substituent having a carbon-carbon unsaturated bond include vinylethylene carbonate, 4,5-divinylethylene carbonate, ethynylethylene carbonate, and propargylethylene carbonate.

Of these, preferred are vinylene carbonate, vinylethylene carbonate, and ethynylethylene carbonate, and particularly, vinylene carbonate can contribute to the formation of a stable film-form structure and is more preferably used.

The content of the unsaturated carbonate is not particularly limited, and is arbitrary as long as the effects of the present invention are not markedly sacrificed, but the content of the unsaturated carbonate in the non-aqueous electrolytic solution of the present invention (100% by mass) is preferably 0.001 to 5.0% by mass.

When the unsaturated carbonate content is the lower limit or more, a satisfactory cycle characteristics improvement effect can be exhibited for the non-aqueous electrolyte secondary battery. Further, when the unsaturated carbonate content is the upper limit or less, an increase of the initial resistance of the non-aqueous electrolyte secondary battery can be avoided. The unsaturated carbonate content is more preferably 0.01% by mass or more, further preferably 0.1% by mass or more, especially preferably 0.2% by mass or more, and is more preferably 4.0% by mass or less, further preferably 3.0% by mass or less, especially preferably 2.0% by mass or less.

### <1-4-1-3. Difluorophosphate>

Among the specific additives, with respect to the difluorophosphate, there is no particular limitation as long as it is a salt comprising a difluorophosphate anion as a constituent, and an arbitrary difluorophosphate can be used.

Examples of difluorophosphates include lithium difluorophosphate, sodium difluorophosphate, potassium difluorophosphate, and ammonium difluorophosphate.

Of these, lithium difluorophosphate can contribute to the formation of a stable film-form structure and is more preferably used.

The content of the difluorophosphate is not particularly limited, and is arbitrary as long as the effects of the present invention are not markedly sacrificed, but the content of the difluorophosphate in the non-aqueous electrolytic solution of the present invention (100% by mass) is preferably 0.001 to 2.0% by mass.

When the difluorophosphate content is the lower limit or more, a satisfactory cycle characteristics improvement effect can be exhibited for the non-aqueous electrolyte secondary battery. Further, when the difluorophosphate content is the upper limit or less, an increase of the production cost for the non-aqueous electrolyte secondary battery can be avoided. The difluorophosphate content is more preferably 0.01% by mass or more, further preferably 0.1% by mass or more, especially preferably 0.2% by mass or more, and is more preferably 1.5% by mass or less, further preferably 1.2% by mass or less, especially preferably 1.1% by mass or less.

<1-4-1-4. Fluorosulfate>

Among the specific additives, with respect to the fluorosulfate, there is no particular limitation as long as it is a salt comprising a fluorosulfate anion as a constituent, and an arbitrary fluorosulfate can be used.

Examples of fluorosulfates include lithium fluorosulfate, sodium fluorosulfate, potassium fluorosulfate, and ammonium fluorosulfate.

Of these, lithium fluorosulfate can contribute to the formation of a stable film-form structure and is more preferably used.

The content of the fluorosulfate is not particularly limited, and is arbitrary as long as the effects of the present invention are not markedly sacrificed, but the content of the fluorosulfate in the non-aqueous electrolytic solution of the present invention (100% by mass) is preferably 0.001 to 4.0% by mass.

When the fluorosulfate content is the lower limit or more, a satisfactory cycle characteristics improvement effect can be exhibited for the non-aqueous electrolyte secondary battery. Further, when the fluorosulfate content is the upper limit or less, an increase of the production cost for the non-aqueous electrolyte secondary battery can be avoided, and further deterioration of the performance due to corrosion of aluminum often used in the positive electrode current collector or a metal can often used in the outer casing can be avoided. The fluorosulfate content is more preferably 0.01% by mass or more, further preferably 0.1% by mass or more, especially preferably 0.2% by mass or more, and is more preferably 3.0% by mass or less, further preferably 2.5% by mass or less, especially preferably 2.0% by mass or less.

<1-4-1-5. Compound having an isocyanate group>

Among the specific additives, with respect to the compound having an isocyanate group (hereinafter, frequently referred to simply as "isocyanate"), there is no particular limitation, and an arbitrary isocyanate can be used.

Examples of isocyanates include monoisocyanates, diisocyanates, and triisocyanates.

Specific examples of the monoisocyanates include isocyanatomethane, isocyanatoethane, 1-isocyanatopropane, 1-isocyanatobutane, 1-isocyanatopentane, 1-isocyanatohexane, 1-isocyanatoheptane, 1-isocyanatooctane, 1-isocyanatononane, 1-isocyanatodecane, isocyanatocyclohexane, methoxycarbonyl isocyanate, ethoxycarbonyl isocyanate, propoxycarbonyl isocyanate, butoxycarbonyl isocyanate, methoxysulfonyl isocyanate, ethoxysulfonyl isocyanate, propoxysulfonyl isocyanate, butoxysulfonyl isocyanate, and fluorosulfonyl isocyanate.

Specific examples of the diisocyanates include 1,4-diisocyanatobutane, 1,5-diisocyanatopentane, 1,6-diisocyanatohexane, 1,7-diisocyanatoheptane, 1,8-diisocyanatooctane, 1,9-diisocyanatononane, 1,10-diisocyanatodecane, 1,3-diisocyanatopropene, 1,4-diisocyanato-2-butene, 1,4-diisocyanato-2-fluorobutane, 1,4-diisocyanato-2,3-difluorobutane, 1,5-diisocyanato-2-pentene, 1,5-diisocyanato-2-methylpentane, 1,6-diisocyanato-2-hexene, 1,6-diisocyanato-3-hexene, 1,6-diisocyanato-3-fluorohexane, 1,6-diisocyanato-3,4-difluorohexane, toluene diisocyanate, xylene diisocyanate, tolylene diisocyanate, 1,2-bis(isocyanatomethyl)cyclohexane, 1,3 -bis(isocyanatomethyl)cyclohexane, 1,4-bis(isocyanatomethyl)cyclohexane, 1,2-diisocyanatocyclohexane, 1,3-diisocyanatocyclohexane, 1,4-diisocyanatocyclohexane, dicyclohexylmethane-1,1' -diisocyanate, dicyclohexylmethane-2,2' -diisocyanate, dicyclohexylmethane-3,3' -diisocyanate, dicyclohexylmethane-4,4'-diisocyanate, isophorone diisocyanate, bicyclo[2.2.1]heptane-2,5-diyl bis(methyl=isocyanate), bicyclo[2.2.1]heptane-2,6-diyl bis(methyl=isocyanate), 2,4,4-trimethylhexamethylene diisocyanate, and 2,2,4-trimethylhexamethylene diisocyanate.

Specific examples of the triisocyanates include 1,6,11-triisocyanatoundecane, 4-isocyanatomethyl-1,8-octamethylene diisocyanate, 1,3,5-triisocyanatomethylbenzene, 1,3,5-tris(6-isocyanatohexa-1-yl)-1,3,5-triazine-2,4,6(1H,3H,5H)-trione, and 4-(isocyanatomethyl)octamethylene diisocyanate.

Among the above-mentioned isocyanates, preferred are 1,6-diisocyanatohexane, 1,3-bis(isocyanatomethyl)cyclohexane, 1,3,5-tris(6-isocyanatohexa-1-yl)-1,3,5-triazine-2,4,6(1H,3H,5H)-trione, 2,4,4-trimethylhexamethylene diisocyanate, and 2,2,4-trimethylhexamethylene diisocyanate because they are easily commercially available and the production cost for the non-aqueous electrolytic solution of the present invention can be suppressed. Further, from a technical point of view, these isocyanates are more preferably used because they can contribute to the formation of a stable film-form structure.

The content of the isocyanate is not particularly limited, and is arbitrary as long as the effects of the present invention are not markedly sacrificed, but the content of the isocyanate in the non-aqueous electrolytic solution of the present invention (100% by mass) is preferably 0.001 to 1.0% by mass.

When the isocyanate content is the lower limit or more, a satisfactory cycle characteristics improvement effect can be exhibited for the non-aqueous electrolyte secondary battery. Further, when the isocyanate content is the upper limit or less, an increase of the initial resistance of the non-aqueous electrolyte secondary battery can be avoided. The isocyanate content is more preferably 0.01% by mass or more, further preferably 0.1% by mass or more, especially preferably 0.2% by mass or more, and is more preferably 0.8% by mass or less, further preferably 0.7% by mass or less, especially preferably 0.6% by mass or less.

<1-4-1-6. Compound having a cyano group>

Among the specific additives, with respect to the compound having a cyano group (hereinafter, frequently referred to simply as "nitrile"), there is no particular limitation, and an arbitrary nitrile can be used.

Examples of nitriles include mononitriles and dinitriles.

Specific examples of the mononitriles include acetonitrile, propionitrile, butyronitrile, isobutyronitrile, valeronitrile, isovaleronitrile, lauronitrile, 2-methylbutyronitrile, trimethylacetonitrile, hexanenitrile, cyclopentanecarbonitrile, cyclohexanecarbonitrile, acrylonitrile, methacrylonitrile, crotononitrile, 3-methylcrotononitrile, 2-methyl-2-butenenitrile, 2-pentenenitrile, 2-methyl-2-pentenenitrile, 3-methyl-2-pentenenitrile, 2-hexenenitrile, fluoroacetonitrile, difluoroacetonitrile, trifluoroacetonitrile, 2-fluoropropionitrile, 3-fluoropropionitrile, 2,2-difluoropropionitrile, 2,3-difluoropropionitrile, 3,3-difluoropropionitrile, 2,2,3-trifluoropropionitrile, 3,3,3-trifluoropropionitrile, 3,3'-oxydipropionitrile, 3,3'-thiodipropionitrile, 1,2,3-propanetricarbonitrile, 1,3,5-pentanetricarbonitrile, and pentafluoropropionitrile.

Specific examples of the dinitriles include malononitrile, succinonitrile, glutaronitrile, adiponitrile, pimelonitrile, suberonitrile, azelanitrile, sebaconitrile, undecanedinitrile, dodecanedinitrile, methylmalononitrile, ethylmalononitrile, isopropylmalononitrile, tert-butylmalononitrile, methylsuccinonitrile, 2,2-dimethylsuccinonitrile, 2,3-dimethylsuccinonitrile, 2,3,3-trimethylsuccinonitrile, 2,2,3,3-tetramethylsuccinonitrile, 2,3-diethyl-2,3-dimethylsuccinonitrile, 2,2-diethyl-3,3 -dimethylsuccinonitrile, bicyclohexyl-1,1-dicarbonitrile, bicyclohexyl-2,2-dicarbonitrile, bicyclohexyl-3,3-dicarbonitrile, 2,5 -dimethyl-2,5-hexanedicarbonitrile, 2,3-diisobutyl-2,3 -dimethylsuccinonitrile, 2,2-diisobutyl-3,3-dimethylsuccinonitrile, 2-methylglutaronitrile, 2,3-dimethylglutaronitrile, 2,4-dimethylglutaronitrile, 2,2,3,3-tetramethylglutaronitrile, 2,2,4,4-tetramethylglutaronitrile, 2,2,3,4-tetramethylglutaronitrile, 2,3,3,4-tetramethylglutaronitrile, maleonitrile, fumaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, 3,3'-(ethylenedioxy)dipropionitrile, and 3,3'-(ethylenedithio)dipropionitrile.

Among the above-mentioned nitriles, dinitriles, such as malononitrile, succinonitrile, glutaronitrile, adiponitrile, pimelonitrile, suberonitrile, azelanitrile, sebaconitrile, undecanedinitrile, and dodecanedinitrile, can contribute to the formation of a stable film-form structure and are more preferably used.

The content of the nitrile is not particularly limited, and is arbitrary as long as the effects of the present invention are not markedly sacrificed, but the content of the nitrile in the non-aqueous electrolytic solution of the present invention (100% by mass) is preferably 0.001 to 5.0% by mass.

When the nitrile content is the lower limit or more, a satisfactory cycle characteristics improvement effect can be exhibited for the non-aqueous electrolyte secondary battery. Further, when the nitrile content is the upper limit or less, an increase of the initial resistance of the non-aqueous electrolyte secondary battery is avoided, making it possible to suppress deterioration of the rate characteristics. The nitrile content is more preferably 0.01% by mass or more, further preferably 0.1% by mass or more, especially preferably 0.2% by mass or more, and is more preferably 4.0% by mass or less, further preferably 3.0% by mass or less, especially preferably 2.5% by mass or less.

<1-4-1-7. Cyclic sulfonic ester>

Among the specific additives, with respect to the cyclic sulfonic ester, there is no particular limitation, and an arbitrary cyclic sulfonic ester can be used.

Examples of cyclic sulfonic esters include saturated cyclic sulfonic esters and unsaturated cyclic sulfonic esters.

Specific examples of the saturated cyclic sulfonic esters include 1,3-propane sultone, 1-fluoro-1,3-propane sultone, 2-fluoro-1,3-propane sultone, 3-fluoro-1,3-propane sultone, 1-methyl-1,3-propane sultone, 2-methyl-1,3-propane sultone, 3-methyl-1,3-propane sultone, 1,4-butane sultone, 1-fluoro-1,4-butane sultone, 2-fluoro-1,4-butane sultone, 3-fluoro-1,4-butane sultone, 4-fluoro-1,4-butane sultone, 1-methyl-1,4-butane sultone, 2-methyl-1,4-butane sultone, 3-methyl-1,4-butane sultone, and 4-methyl-1,4-butane sultone.

Specific examples of the unsaturated cyclic sulfonic esters include 1-propene-1,3-sultone, 2-propene-1,3-sultone, 1-fluoro-1-propene-1,3-sultone, 2-fluoro-1-propene-1,3 -sultone, 3-fluoro-1-propene-1,3-sultone, 1-fluoro-2-propene-1,3-sultone, 2-fluoro-2-propene-1,3-sultone, 3-fluoro-2-propene-1,3-sultone, 1-methyl-1-propene-1,3-sultone, 2-methyl-1-propene-1,3-sultone, 3-methyl-1-propene-1,3-sultone, 1-methyl-2-propene-1,3-sultone, 2-methyl-2-propene-1,3-sultone, 3-methyl-2-propene-1,3-sultone, 1-butene-1,4-sultone, 2-butene-1,4-sultone, 3-butene-1,4-sultone, 1-fluoro-1-butene-1,4-sultone, 2-fluoro-1-butene-1,4-sultone, 3-fluoro-1-butene-1,4-sultone, 4-fluoro-1-butene-1,4-sultone, 1-fluoro-2-butene-1,4-sultone, 2-fluoro-2-butene-1,4-sultone, 3-fluoro-2-butene-1,4-sultone, 4-fluoro-2-butene-1,4-sultone, 1-fluoro-3-butene-1,4-sultone, 2-fluoro-3-butene-1,4-sultone, 3-fluoro-3-butene-1,4-sultone, 4-fluoro-3-butene-1,4-sultone, 1-methyl-1-butene-1,4-sultone, 2-methyl-1-butene-1,4-sultone, 3-methyl-1-butene-1,4-sultone, 4-methyl-1-butene-1,4-sultone, 1-methyl-2-butene-1,4-sultone, 2-methyl-2-butene-1,4-sultone, 3-methyl-2-butene-1,4-sultone, 4-methyl-2-butene-1,4-sultone, 1-methyl-3-butene-1,4-sultone, 2-methyl-3-butene-1,4-sultone, 3-methyl-3-butene-1,4-sultone, and 4-methyl-3-butene-1,4-sultone.

Of the above-mentioned cyclic sulfonic esters, 1,3-propane sultone, 1-fluoro-1,3-propane sultone, 2-fluoro-1,3-propane sultone, 3-fluoro-1,3-propane sultone, and 1-propene-1,3-sultone are more preferably used because they are easily available and can contribute to the formation of a stable film-form structure.

The content of the cyclic sulfonic ester is not particularly limited, and is arbitrary as long as the effects of the present invention are not markedly sacrificed, but the content of the cyclic sulfonic ester in the non-aqueous electrolytic solution of the present invention (100% by mass) is preferably 0.001 to 3.0% by mass.

When the cyclic sulfonic ester content is the lower limit or more, a satisfactory cycle characteristics improvement effect can be exhibited for the non-aqueous electrolyte secondary battery. Further, when the cyclic sulfonic ester content is the upper limit or less, an increase of the production cost for the non-aqueous electrolyte secondary battery can be avoided. The cyclic sulfonic ester content is more preferably 0.01% by mass or more, further preferably 0.1% by mass or more, especially preferably 0.2% by mass or more, and is more preferably 2.5% by mass or less, further preferably 2.0% by mass or less, especially preferably 1.8% by mass or less.

<1-4-1-8. Dicarboxylic acid complex salt>

Among the specific additives, with respect to the dicarboxylic acid complex salt, there is no particular limitation, and an arbitrary dicarboxylic acid complex salt can be used.

Examples of dicarboxylic acid complex salts include dicarboxylic acid complex salts having boron as a complex center element and dicarboxylic acid complex salts having phosphorus as a complex center element.

Specific examples of the dicarboxylic acid complex salts having boron as a complex center element include lithium bis(oxalato)borate, lithium difluoro(oxalato)borate, lithium bis(malonato)borate, lithium difluoro(malonato)borate, lithium bis(methylmalonato)borate, lithium difluoro(methylmalonato)borate, lithium bis(dimethylmalonato)borate, and lithium difluoro(dimethylmalonato)borate.

Specific examples of dicarboxylic acid complex salts having phosphorus as a complex center element include lithium tris(oxalato)phosphate, lithium difluorobis(oxalato)phosphate, lithium tetrafluoro(oxalato)phosphate, lithium tris(malonato)phosphate, lithium difluorobis(malonato)phosphate, lithium tetrafluoro(malonato)phosphate, lithium tris(methylmalonato)phosphate, lithium difluorobis(methylmalonato)phosphate, lithium tetrafluoro(methylmalonato)phosphate, lithium tris(dimethylmalonato)phosphate, lithium difluorobis(dimethylmalonato)phosphate, and lithium tetrafluoro(dimethylmalonato)phosphate.

Of the above-mentioned dicarboxylic acid complex salts, lithium bis(oxalato)borate, lithium difluoro(oxalato)borate, lithium tris(oxalato)phosphate, lithium difluorobis(oxalato)phosphate, and lithium tetrafluoro(oxalato)phosphate are more preferably used because they are easily available and can contribute to the formation of a stable film-form structure.

The content of the dicarboxylic acid complex salt is not particularly limited, and is arbitrary as long as the effects of the present invention are not markedly sacrificed, but the content of the dicarboxylic acid complex salt in the non-aqueous electrolytic solution of the present invention (100% by mass) is preferably 0.001 to 2.5% by mass.

When the dicarboxylic acid complex salt content is the lower limit or more, a satisfactory cycle characteristics improvement effect can be exhibited for the non-aqueous electrolyte secondary battery. Further, when the dicarboxylic acid complex salt content is the upper limit or less, an increase of the production cost for the non-aqueous electrolyte secondary battery can be avoided, and further volume expansion of the non-aqueous electrolyte secondary battery due to gas generation can be avoided. The dicarboxylic acid complex salt content is more preferably 0.01% by mass or more, further preferably 0.1% by mass or more, especially preferably 0.2% by mass or more, and is more preferably 2.0% by mass or less, further preferably 1.5% by mass or less, especially preferably 1.2% by mass or less.

<1-4-2. Other additives>

Examples of additives other than the specific additives include an overcharge preventing agent and auxiliaries for improving the capacity maintaining properties after high-temperature storage or the cycle characteristics.

<1-4-2-1. Overcharge preventing agent>

Specific examples of overcharge preventing agents include aromatic compounds, for example:

toluene derivatives, such as toluene and xylene;
biphenyl derivatives which are unsubstituted or substituted with an alkyl group, such as biphenyl, 2-methylbiphenyl, 3-methylbiphenyl, and 4-methylbiphenyl;
terphenyl derivatives which are unsubstituted or substituted with an alkyl group, such as o-terphenyl, m-terphenyl, and p-terphenyl;
partial hydrogenation products of a terphenyl derivative which is unsubstituted or substituted with an alkyl group;
cycloalkylbenzene derivatives, such as cyclopentylbenzene and cyclohexylbenzene;
alkylbenzene derivatives having a tertiary carbon directly bonded to the benzene ring, such as cumene, 1,3-diisopropylbenzene, and 1,4-diisopropylbenzene;
alkylbenzene derivatives having a quaternary carbon directly bonded to the benzene ring, such as t-butylbenzene, t-amylbenzene, and t-hexylbenzene; and
aromatic compounds having an oxygen atom, such as diphenyl ether and dibenzofuran.

Further, other specific examples of overcharge preventing agents include partial fluorination products of the above aromatic compound, such as fluorobenzene, fluorotoluene, benzotrifluoride, 2-fluorobiphenyl, o-cyclohexylfluorobenzene, and p-cyclohexylfluorobenzene; and fluorine-containing anisole compounds, such as 2,4-difluoroanisole, 2,5-difluoroanisole, and 1,6-difluoroanisole.

These overcharge preventing agents may be used individually, or two or more types of the overcharge preventing agents may be used in an arbitrary combination and in an arbitrary ratio. When two or more types of the overcharge preventing agents are used in an arbitrary combination, the above-mentioned compounds of the same classification may be used in combination, or the above-mentioned compounds of different classifications may be used in combination.

When an overcharge preventing agent is incorporated, the amount of the overcharge preventing agent incorporated is arbitrary as long as the effects of the present invention are not markedly sacrificed, but the content of the overcharge preventing agent in the non-aqueous electrolytic solution (100% by mass) is preferably in the range of from 0.001 to 10% by mass.

When the non-aqueous electrolytic solution of the present invention contains an overcharge preventing agent in such an amount that the effects of the present invention are not markedly sacrificed, the non-aqueous electrolyte secondary battery can be advantageously improved in safety so that a problem is avoided even if an overcharge protecting circuit does not normally operate due to a wrong use method or a failure of a charging apparatus to cause the battery to be overcharged.

<1-4-2-2. Auxiliary>

Meanwhile, as specific examples of auxiliaries for improving the capacity maintaining properties after high-temperature storage or the cycle characteristics, there can be mentioned the followings.

Anhydrides of a dicarboxylic acid, such as succinic acid, maleic acid, or phthalic acid;
carbonate compounds other than those corresponding to the carbonates having an unsaturated bond, such as erythritan carbonate and spiro-bis-dimethylene carbonate;
cyclic sulfites, such as ethylene sulfite;
linear sulfonic esters, such as methyl methanesulfonate and busulfane;
cyclic sulfones, such as sulfolane and sulfolene;
linear sulfones, such as dimethyl sulfone, diphenyl sulfone, and methylphenyl sulfone;
sulfides, such as dibutyl disulfide, dicyclohexyl disulfide, and tetramethylthiuram monosulfide;
sulfur-containing compounds, e.g., sulfonamides, such as N,N-dimethylmethanesulfonamide and N,N-diethylmethanesulfonamide;
nitrogen-containing compounds, such as 1-methyl-2-pyrrolidinone, 1-methyl-2-piperidone, 3-methyl-2-oxazolidinone, and 1,3-dimethyl-2-imidazolidinone;
hydrocarbon compounds, such as heptane, octane, and cycloheptane; and
fluorine-containing aromatic compounds, such as fluorobenzene, difluorobenzene, and benzotrifluoride.

These auxiliaries may be used individually, or two or more types of the auxiliaries may be used in an arbitrary combination and in an arbitrary ratio.

When the non-aqueous electrolytic solution of the present invention contains an auxiliary, the content of the auxiliary is arbitrary as long as the effects of the present invention are not markedly sacrificed, but the content of the auxiliary in the non-aqueous electrolytic solution (100% by mass) is preferably in the range of from 0.001 to 10% by mass.

<1-5. Method for producing the non-aqueous electrolytic solution>

The non-aqueous electrolytic solution of the present invention can be prepared by dissolving, in the above-mentioned non-aqueous solvent, the electrolyte and specific ester and, if necessary, for example, the above-mentioned "specific additive" or "other additive".

In the preparation of the non-aqueous electrolytic solution, raw materials for the non-aqueous electrolytic solution, that is, an electrolyte, such as a lithium salt, a specific ester, a non-aqueous solvent, a specific additive, and other additives are preferably dehydrated in advance. With respect to the degree of dehydration, it is desired that dehydration is conducted until the moisture content generally becomes 50 ppm or less, preferably 30 ppm or less.

By removing moisture in the non-aqueous electrolytic solution, for example, electrolysis of water, a reaction of water with lithium metal, and hydrolysis of a lithium salt are unlikely to be caused. With respect to the method for dehydration, there is no particular limitation, but, for example, when the object to be dehydrated is a liquid, such as a non-aqueous solvent, a drying agent, such as a molecular sieve, may be used. When the object to be dehydrated is a solid, such as an electrolyte, the solid may be dried by heating to a temperature lower than the temperature at which decomposition occurs.

[2. Non-aqueous electrolyte secondary battery]

The non-aqueous electrolyte secondary battery of the present invention comprises a negative electrode and a positive electrode each being capable of having occluded therein and releasing metal ions, and the above-described non-aqueous electrolytic solution of the present invention. Hereinbelow, the secondary battery will be described.

<2-1. Construction of a battery>

The construction of the non-aqueous electrolyte secondary battery of the present invention is substantially the same as that of a conventionally known non-aqueous electrolyte secondary battery except the non-aqueous electrolytic solution, and generally has a form in which a positive electrode and a negative electrode are stacked through a porous membrane (separator) impregnated with the non-aqueous electrolytic solution of the present invention and these are contained in a casing (outer casing). Therefore, with respect to the shape of the non-aqueous electrolyte secondary battery of the present invention, there is no particular limitation, and any of a cylinder shape, a rectangle shape, a laminate type, a coin shape, and a large-size type may be used.

<2-2. Non-aqueous electrolytic solution>

As a non-aqueous electrolytic solution, the above-described non-aqueous electrolytic solution of the present invention is used. In the non-aqueous electrolytic solution of the present invention, another non-aqueous electrolytic solution can be used and mixed in such an amount that the non-aqueous electrolyte secondary battery of the present invention can be obtained.

<2-3. Negative electrode>

With respect to the negative electrode active material used in the negative electrode, there is no particular limitation as long as it is capable of electrochemically having occluded therein and releasing metal ions. Specific examples of the negative electrode active materials include carbonaceous materials, metal compound materials, and lithium-containing metal composite oxide materials. These materials may be used individually, or two or more types of the materials may be used in an arbitrary combination.

Of these, carbonaceous materials and metal compound material are preferred. Among the metal compound materials, materials containing silicon are preferred, and therefore, as the negative electrode active material, carbonaceous materials and materials containing silicon are especially preferred.

<2-3-1. Carbonaceous material>

With respect to the carbonaceous material used as a negative electrode active material, there is no particular limitation, but preferred is one selected from items (i) to (iv) below because a secondary battery having excellent balance between the initial irreversible capacity and the high current-density charge-discharge characteristics is obtained.

(i) Natural graphite;
(ii) an artificial carbonaceous material, and a carbonaceous material obtained by subjecting an artificial graphite material to heat treatment in the range of from 400 to 3,200°C once or more times;
(iii) a carbonaceous material such that the negative electrode active material layer comprises at least two types of carbonaceous substances having different crystalline properties, and/or has an interface at which the carbonaceous substances having different crystalline properties are in contact with each other; and
(iv) a carbonaceous material such that the negative electrode active material layer comprises at least two types of carbonaceous substances having different orientation properties, and/or has an interface at which the carbonaceous substances having different orientation properties are in contact with each other.

The carbonaceous materials of items (i) to (iv) above may be used individually, or two or more types of the carbonaceous materials may be used in an arbitrary combination and in an arbitrary ratio.
Specific examples of artificial carbonaceous materials or artificial graphite materials of item (ii) above include:

natural graphite, coal coke, petroleum coke, coal pitch, petroleum pitch, and materials obtained by subjecting these pitches to oxidation treatment;
needle coke, pitch coke, and carbon materials obtained by partially graphitizing the coke;
thermal decomposition products of an organic material, such as furnace black, acetylene black, or pitch carbon fiber;
organic materials capable of being carbonized and carbides thereof; and
carbides in the form of a solution obtained by dissolving an organic material capable of being carbonized in a low-molecular organic solvent, such as benzene, toluene, xylene, quinoline, or n-hexane.

In addition, any of the carbonaceous materials of items (i) to (iv) above are conventionally known, and methods for producing them are well known by a person skilled in the art, and those which are commercially available can also be purchased. In addition to the properties described above in detail, the carbonaceous material used as a negative electrode active material desirably satisfies any one of or simultaneously satisfies two or more of the following items (1) to (8).

(1) X-Ray parameters

With respect to the carbonaceous material, the d value (distance between layers) on the lattice plane (002 plane) as determined by X-ray diffraction in accordance with a Gakushin method is preferably 0.335 nm or more, and is generally 0.360 nm or less, preferably 0.350 nm or less, more preferably 0.345 nm or less. Further, the crystallite size (Lc) of the carbonaceous material as determined by X-ray diffraction in accordance with a Gakushin method is preferably 1.0 nm or more, more preferably 1.5 nm or more, further preferably 2 nm or more.

(2) Volume-based average particle diameter

The volume-based average particle diameter of the carbonaceous material is a volume-based average particle diameter (median diameter) as determined by a laser diffraction/scattering method, and is generally 1 μm or more, more preferably 3 μm or more, further preferably 5 μm or more, especially preferably 7 μm or more, and is preferably 100 μm or less, more preferably 50 μm or less, further preferably 40 μm or less, especially preferably 30 μm or less, particularly preferably 25 μm or less. When the volume-based average particle diameter is in the above range, the irreversible capacity of the secondary battery is unlikely to be markedly increased, so that it is easy to avoid a loss of the initial battery capacity. Further, a uniform coating surface is easily obtained in the preparation of a negative electrode by application as described below, and this is desirable in view of the battery production process.
The measurement of a volume-based average particle diameter is conducted using a laser diffraction/scattering-type particle size distribution meter (LA-700, manufactured by HORIBA, Ltd.) with respect to a carbonaceous material powder dispersed in a 0.2% by mass aqueous solution (about 10 mL) of polyoxyethylene (20) sorbitan monolaurate which is a surfactant. The median diameter determined by the above measurement is defined as a volume-based average particle diameter of the carbonaceous material.

(3) Raman R value, Raman half band width

The Raman R value of the carbonaceous material is a value measured using an argon-ion laser Raman spectrum method, and is preferably 0.01 or more, more preferably 0.03 or more, further preferably 0.1 or more, and is preferably 1.5 or less, more preferably 1.2 or less, further preferably 1 or less, especially preferably 0.5 or less.

When the Raman R value of the carbonaceous material is in the above range, the crystalline properties of the surface of particles fall in an appropriate range such that a reduction of sites between the layers which Li goes into due to charging and discharging can be suppressed, so that the discharge acceptance properties are unlikely to deteriorate. Further, when the negative electrode is increased in density by applying the below-mentioned negative electrode forming material (slurry) onto a current collector and then pressing it, the load characteristics of the secondary battery are unlikely to become poor. Further, a lowering of the efficiency and an increase of the gas generation are unlikely to occur.

Further, with respect to the Raman half band width at around 1,580 $cm^{-1}$ of the carbonaceous material, there is no particular limitation, but the Raman half band width is 10 $cm^{-1}$ or more, preferably 15 $cm^{-1}$ or more, and is generally 100 $cm^{-1}$ or less, preferably 80 $cm^{-1}$ or less, more preferably 60 $cm^{-1}$ or less, especially preferably 40 $cm^{-1}$ or less.

When the Raman half band width is in the above range, the crystalline properties of the surface of particles fall in an appropriate range such that a reduction of sites between the layers which Li goes into due to charging and discharging can be suppressed, so that the discharge acceptance properties are unlikely to deteriorate. Further, when the negative electrode is increased in density by applying a negative electrode forming material onto a current collector and then pressing it, the load characteristics of the secondary battery are unlikely to become poor. Further, a lowering of the efficiency and an increase of the gas generation are unlikely to occur.

The measurement of a Raman spectrum is conducted using a Raman spectrometer (Raman Spectrometer, manufactured by JASCO Corporation) by allowing a sample to freely fall in a measurement cell so as to fill the cell with the sample and, while irradiating the surface of the sample in the cell with an argon-ion laser, rotating the cell within the plane perpendicular to the laser. With respect to the obtained Raman spectrum, intensity IA of peak PA appearing at around 1,580 $cm^{-1}$ and intensity IB of peak PB appearing at around 1,360 $cm^{-1}$ are measured, and intensity ratio R (R = IB/IA) is determined by calculation. The Raman R value determined by the above measurement is defined as a Raman R value of the carbonaceous material in the present invention. Further, a half band width of peak PA appearing at around 1,580 $cm^{-1}$ in the obtained Raman spectrum is measured, and this is defined as a Raman half band width of the carbonaceous material in the present invention.

Conditions for the above Raman measurement are as follows.

| | |
|---|---|
| • Wavelength of argon ion laser: | 514.5 nm |
| • Laser power on a sample: | 15 to 25 mW |
| • Resolution: | 10 to 20 $cm^{-1}$ |
| • Measuring range: | 1,100 to 1,730 $cm^{-1}$ |
| • Analysis for Raman R value and Raman half band width: | Background processing |
| • Smoothing processing: | Simple average, convolution 5 points |

(4) BET Specific surface area

The BET specific surface area of the carbonaceous material is a value of a specific surface area measured using a BET method, and is preferably 0.1 $m^2•g^{-1}$ or more, more preferably 0.7 $m^2•g^{-1}$ or more, further preferably 1.0 $m^2•g^{-1}$ or more, especially preferably 1.5 $m^2•g^{-1}$or more, and is preferably 100 $m^2•g^{-1}$ or less, more preferably 25 $m^2•g^{-1}$ or less, further preferably 15 $m^2•g^{-1}$ or less, especially preferably 10 $m^2•g^{-1}$ or less.

When the BET specific surface area of the carbonaceous material is in the above range, cations, such as lithium, are more likely to be accepted during charging in the case of using the carbonaceous material as a negative electrode active material, so that lithium or the like is unlikely to be deposited on the surface of the electrode, making it easy to prevent the stability of the secondary battery from becoming poor. Further, the reactivity with the non-aqueous electrolytic solution can be suppressed, and thus a preferred secondary battery which suffers less gas generation is easily obtained.

The measurement of a specific surface area by a BET method is conducted using a surface area meter (Fully-automatic surface area measurement apparatus, manufactured by Ohkura Riken Inc.) by subjecting a sample to predrying under a nitrogen gas flow at 350°C for 15 minutes, and then making a measurement in accordance with a nitrogen adsorption BET single-point method by a gas flow method using a nitrogen-helium mixed gas accurately prepared so that the nitrogen pressure relative to atmospheric pressure becomes 0.3. The specific surface area determined by the above measurement is defined as a BET specific surface area of the carbonaceous material in the present invention.

(5) Roundness

When a roundness is measured as the degree of sphere of the carbonaceous material, the roundness preferably falls within the range shown below. The roundness is defined by "Roundness = (Length of the circumference of the particle equivalent circle having the same area as that of the projected particle shape)/(Length of the actual circumference of the projected particle shape)", and, when the material has a roundness of 1, it is theoretically a true sphere. The roundness of the particles of the carbonaceous material having a particle diameter in the range of from 3 to 40 μm is desirably close to 1, and is preferably 0.1 or more, more preferably 0.5 or more, further preferably 0.8 or more, especially preferably 0.85 or more, particularly preferably 0.9 or more.

Generally, the larger the roundness, the more the high current-density charge-discharge characteristics of a secondary battery are improved. Therefore, when the roundness of the carbonaceous material is smaller than the above range, the filling properties of the negative electrode active material are likely to become poor to increase the resistance between the particles, so that the short-time, high current-density charge-discharge characteristics of the secondary battery become poor.

The measurement of a roundness of the carbonaceous material is conducted using a flow-type particle image analyzer (FPIA, manufactured by Sysmex Corporation). Specifically, about 0.2 g of a sample is dispersed in a 0.2% by mass aqueous solution (about 50 mL) of polyoxyethylene (20) sorbitan monolaurate which is a surfactant, and irradiated with ultrasonic waves with 28 kHz at a power of 60 W for one minute and then, a detection range of from 0.6 to 400 μm is designated, and a roundness is measured with respect to the particles having a particle diameter in the range from 3 to 40 μm. The roundness determined by the above measurement is defined as a roundness of the carbonaceous material in the present invention.

With respect to the method for improving the roundness, there is no particular limitation. However, preferred are the particles which have been subjected to sphere forming treatment so as to be spherical because an electrode formed from such particles is advantageous in that the shapes of voids between the particles are uniform. As examples of the sphere forming treatments, there can be mentioned a method in which a shearing force or a compressive force is applied to particles to mechanically force them to be close to a sphere, and a mechanical or physical treatment method in which a plurality of microparticles are subjected to granulation using a binder or an adhesive force of the particles themselves.

(6) Tap density

The tap density of the carbonaceous material is preferably 0.1 $g•cm^{-3}$ or more, more preferably 0.5 $g•cm^{-3}$ or more, further preferably 0.7 $g•cm^{-3}$ or more, especially preferably 1 $g•cm^{-3}$ or more, and is preferably 2 $g•cm^{-3}$ or less, more preferably 1.8 $g•cm^{-3}$ or less, especially preferably 1.6 $g•cm^{-3}$ or less.

When the tap density of the carbonaceous material is in the above range, the filling density can be satisfactorily secured in the case of using the carbonaceous material as a negative electrode, making it possible to obtain a secondary battery having high capacity. Further, the voids between the particles in the electrode are not markedly reduced in size, and the conductivity between the particles is secured, so that preferred battery characteristics are easily obtained.

The measurement of a tap density is conducted as follows. A sample is passed through a sieve having a sieve opening of 300 μm, and allowed to fall in a 20 $cm^3$ tapping cell to fill the cell with the sample so that the sample reaches the upper end surface of the cell, and then, using a powder density measurement apparatus (for example, Tap Denser, manufactured by Seishin Enterprise Co., Ltd.), the resultant sample is subjected to 1,000-time tapping with a stroke length of 10 mm, and a tap density is determined by making a calculation from a volume measured at that time and the mass of the sample. The tap density determined by the above measurement is defined as a tap density of the carbonaceous material in the present invention.

(7) Orientation ratio

The orientation ratio of the carbonaceous material is preferably 0.005 or more, more preferably 0.01 or more, further preferably 0.015 or more, and is preferably 0.67 or less. When the orientation ratio of the carbonaceous material is smaller than the above range, the high-density charge-discharge characteristics of the secondary battery may become poor. The above-mentioned upper limit of the range is the theoretical upper limit of the orientation ratio of the carbonaceous material.

An orientation ratio of the carbonaceous material is measured by X-ray diffraction with respect to a sample which has been subjected to press molding. Specifically, a molding machine having a diameter of 17 mm is filled with 0.47 g of a sample, and the sample is compressed at 58.8 $MN•m^{-2}$ , and the resultant molded material is set using clay so as to be on the same plane as the plane of a sample holder for measurement, and subjected to X-ray diffraction measurement. From the obtained peak intensities of the (110) diffraction and (004) diffraction of the carbonaceous

material, a ratio represented by (110) diffraction peak intensity/(004) diffraction peak intensity is determined by calculation. The orientation ratio determined by the above measurement is defined as an orientation ratio of the carbonaceous material in the present invention.

Conditions for the X-ray diffraction measurement are as follows. "2θ" indicates an angle of diffraction.

- Target: Cu (Kα-line) graphite monochromator
- Slit:
  Divergence slit = 0.5°
  Receiving slit = 0.15 mm
  Scatter slit = 0.5°
- Measuring range and step angle/measuring time:
  (110) plane: $75° \leq 2\theta \leq 80°$ 1°/60 seconds
  (004) plane: $52° \leq 2\theta \leq 57°$ 1°/60 seconds

(8) Aspect ratio (powder)

The aspect ratio of the carbonaceous material is generally 1 or more, and is generally 10 or less, preferably 8 or less, more preferably 5 or less. When the aspect ratio of the carbonaceous material is outside of the above range, it is likely that a streak line occurs in the negative electrode forming material upon forming an electrode plate or a uniform coating surface is not obtained, so that the high current-density charge-discharge characteristics of the secondary battery become poor. The above-mentioned lower limit of the range is the theoretical lower limit of the aspect ratio of the carbonaceous material.

The aspect ratio of the carbonaceous material is measured by observing the particles of carbonaceous material magnified by means of a scanning electron microscope. Specifically, 50 arbitrary carbonaceous material particles fixed to the edge face of a metal having a thickness of 50 microns or less are selected, and individually three-dimensionally observed while rotating and slanting the stage having the sample fixed thereto, and diameter A, which is the largest diameter of the carbonaceous material particle, and diameter B, which is the shortest diameter perpendicular to diameter A, are measured and an average of the A/B values is determined. The aspect ratio (A/B) determined by the above measurement is defined as an aspect ratio of the carbonaceous material in the present invention.

<2-3-2. Metal compound material>

With respect to the metal compound material used as a negative electrode active material, there is no particular limitation as long as it is capable of having occluded therein and releasing lithium ions, and a metal simple substance or alloy forming an alloy together with lithium, or a compound thereof, such as an oxide, a carbide, a nitride, a silicide, a sulfide, or a phosphide, can be used. Examples of such metal compounds include compounds containing a metal, such as Ag, Al, Ba, Bi, Cu, Ga, Ge, In, Ni, P, Pb, Sb, Si, Sn, Sr, or Zn. Of these, preferred are metal simple substances or alloys forming an alloy together with lithium, more preferred are materials containing a metal or semi-metal element belonging to Group 13 or 14 of the Periodic Table (namely, excluding carbon; hereinafter, a metal and a semi-metal are collectively referred to as "metal"), and further preferred are metal simple substances of silicon (Si), tin (Sn), and lead (Pb) (hereinafter, these three elements are frequently referred to as "SSP metal elements"), alloys containing these elements, and compounds of these metals (SSP metal elements). Silicon is most preferred. These metal compound materials may be used individually, or two or more types of the metal compound materials may be used in an arbitrary combination and in an arbitrary ratio.

Examples of negative electrode active materials having at least one atom selected from SSP metal elements include respective metal simple substances of the SSP metal elements, alloys comprising two or more SSP metal elements, alloys comprising one or two or more SSP metal elements and one or two or more the other metal elements, compounds containing one or two or more SSP metal elements, and composite compounds, such as an oxide, carbide, nitride, silicide, sulfide, or phosphide, of the above compound. By using the above metal simple substance, alloy, or metal compound as a negative electrode active material, it is possible to increase the secondary battery in capacity.

Further, as examples of negative electrode active materials having at least one atom selected from the above-mentioned SSP metal elements, there can be mentioned compounds formed from the above composite compound complicatedly bonded to several elements, such as a metal simple substance, an alloy, or a nonmetallic element. More specifically, for example, with respect to silicon or tin, an alloy of the element and a metal which does not act as a negative electrode can be used. For example, in the case of tin, there can be used a complicated compound comprising a combination of tin, a metal other than silicon, which acts as a negative electrode, a metal which does not act as a

negative electrode, and a nonmetallic element so as to contain 5 to 6 elements.

Among these negative electrode active materials, preferred are respective metal simple substances of the SSP metal elements, alloys of two or more SSP metal elements, and oxides, carbides, nitrides and the like of the SSP metal elements because the resultant secondary battery has a large capacity per unit mass, especially preferred are a metal simple substance, an alloy, an oxide, a carbide, and a nitride of silicon and/or tin, and most preferred are a metal simple substance, an alloy, an oxide, and a carbide of silicon.

Further, the below-mentioned compounds containing silicon and/or tin are preferred because the resultant secondary battery has a low capacity per unit mass but has excellent cycle characteristics, as compared to the battery using a metal simple substance or an alloy.

- "Oxide of silicon and/or tin" having an element ratio of silicon and/or tin and oxygen of generally 0.5 or more, preferably 0.7 or more, further preferably 0.9 or more, and of generally 1.5 or less, preferably 1.3 or less, further preferably 1.1 or less.
- "Nitride of silicon and/or tin" having an element ratio of silicon and/or tin and nitrogen of generally 0.5 or more, preferably 0.7 or more, further preferably 0.9 or more, and of generally 1.5 or less, preferably 1.3 or less, further preferably 1.1 or less.
- "Carbide of silicon and/or tin" having an element ratio of silicon and/or tin and carbon of generally 0.5 or more, preferably 0.7 or more, further preferably 0.9 or more, and of generally 1.5 or less, preferably 1.3 or less, further preferably 1.1 or less.

The above-described metal compound materials may be used individually, or two or more types of the metal compound materials may be used in an arbitrary combination and in an arbitrary ratio.

<2-3-3. Lithium-containing metal composite oxide material>

With respect to the lithium-containing metal composite oxide material used as a negative electrode active material, there is no particular limitation as long as it is capable of having occluded therein and releasing lithium ions, but a lithium-containing composite metal oxide material containing titanium is preferred, and a composite oxide of lithium and titanium (hereinafter, frequently referred to simply as "lithium-titanium composite oxide") is especially preferred. That is, a negative electrode active material for a non-aqueous electrolyte lithium-ion secondary battery, which contains a lithium-titanium composite oxide having a spinel structure, is especially preferably used because the output resistance of the secondary battery is markedly reduced.

Further, preferred are lithium-titanium composite oxides having lithium or titanium replaced by another metal element, for example, at least one element selected from the group consisting of Na, K, Co, Al, Fe, Ti, Mg, Cr, Ga, Cu, Zn, and Nb.

As a preferred example of the lithium-titanium composite oxide as a negative electrode active material, there can be mentioned a lithium-titanium composite oxide represented by the following general formula (5).

$$Li_xTi_yM_zO_4 \qquad (5)$$

In the general formula (5), M represents at least one element selected from the group consisting of Na, K, Co, Al, Fe, Ti, Mg, Cr, Ga, Cu, Zn, and Nb. The lithium-titanium composite oxide is preferably one represented by the general formula (5) wherein the relationships: $0.7 \leq x \leq 1.5$, $1.5 \leq y \leq 2.3$, and $0 \leq z \leq 1.6$ are satisfied, because the structure is stable upon doping or dedoping for lithium ions.

Among the compositions represented by the general formula (5) above, especially preferred are structures which respectively satisfy the following relationships:

(a) $1.2 \leq x \leq 1.4$, $1.5 \leq y \leq 1.7$, $z = 0$
(b) $0.9 \leq x \leq 1.1$, $1.9 \leq y \leq 2.1$, $z = 0$
(c) $0.7 \leq x \leq 0.9$, $2.1 \leq y \leq 2.3$, $z = 0$

because the balance of battery performance is excellent.

Especially preferred representative compositions of the above compound are $Li_{4/3}Ti_{5/3}O_4$ for structure (a), $Li_1Ti_2O_4$ for structure (b), and $Li_{4/5}Ti_{11/5}O_4$ for structure (c). Further, with respect to the structure in which $Z \neq 0$, as a preferred example, there can be mentioned $Li_{4/3}Ti_{4/3}Al_{1/3}O_4$.

In addition to the above-mentioned requirements, the lithium-titanium composite oxide as the negative electrode active material in the present invention preferably satisfies at least one of items [1] to [7] shown below for characteristic features including physical properties and forms, and especially preferably simultaneously satisfies two or more of the

items.

[1] BET Specific surface area

The BET specific surface area of the lithium-titanium composite oxide used as a negative electrode active material is a value of a specific surface area measured using a BET method, and is preferably 0.5 $m^2 \cdot g^{-1}$ or more, more preferably 0.7 $m^2 \cdot g^{-1}$ or more, further preferably 1.0 $m^2 \cdot g^{-1}$ or more, especially preferably 1.5 $m^2 \cdot g^{-1}$ or more, and is preferably 200 $m^2 \cdot g^{-1}$ or less, more preferably 100 $m^2 \cdot g^{-1}$ or less, further preferably 50 $m^2 \cdot g^{-1}$ or less, especially preferably 25 $m^2 \cdot g^{-1}$ or less.
When the BET specific surface area of the lithium-titanium composite oxide is in the above range, the reaction area of the negative electrode active material in contact with the non-aqueous electrolytic solution is unlikely to be reduced, so that an increase of the secondary battery in output resistance can be prevented. Further, an increase of the portions of surfaces and edge faces of crystals of the metal oxide containing titanium is suppressed, and strain of the crystals due to such an increase is unlikely to be caused, so that a preferred secondary battery is easily obtained.
The measurement of a specific surface area of the lithium-titanium composite oxide by a BET method is conducted using a surface area meter (Fully-automatic surface area measurement apparatus, manufactured by Ohkura Riken Inc.) by subjecting a sample to predrying under a nitrogen gas flow at 350°C for 15 minutes, and then making a measurement in accordance with a nitrogen adsorption BET single-point method by a gas flow method using a nitrogen-helium mixed gas accurately prepared so that the nitrogen pressure relative to atmospheric pressure becomes 0.3. The specific surface area determined by the above measurement is defined as a BET specific surface area of the lithium-titanium composite oxide in the present invention.

[2] Volume-based average particle diameter

The volume-based average particle diameter of the lithium-titanium composite oxide (secondary particle diameter when the primary particles of the lithium-titanium composite oxide undergo aggregation to form secondary particles) is defined as a volume-based average particle diameter (median diameter) determined by a laser diffraction/scattering method.
The volume-based average particle diameter of the lithium-titanium composite oxide is preferably 0.1 μm or more, more preferably 0.5 μm or more, further preferably 0.7 μm or more, and is preferably 50 μm or less, more preferably 40 μm or less, further preferably 30 μm or less, especially preferably 25 μm or less.
The measurement of a volume-based average particle diameter of the lithium-titanium composite oxide is conducted, specifically, using a laser diffraction/scattering-type particle size distribution meter (LA-700, manufactured by HORIBA, Ltd.) with respect to a lithium-titanium composite oxide powder dispersed in a 0.2% by mass aqueous solution (10 mL) of polyoxyethylene (20) sorbitan monolaurate which is a surfactant. The median diameter determined by the above measurement is defined as a volume-based average particle diameter of the lithium-titanium composite oxide.
When the volume average particle diameter of the lithium-titanium composite oxide is in the above range, the amount of the binder used when preparing a negative electrode can be suppressed, so that it is easy to prevent a lowering of the battery capacity. Further, a uniform coating surface is easily obtained in the preparation of a negative electrode plate, and this is desirable in view of the battery production process.

[3] Average primary particle diameter

When the primary particles of the lithium-titanium composite oxide undergo aggregation to form secondary particles, the average primary particle diameter of the lithium-titanium composite oxide is preferably 0.01 μm or more, more preferably 0.05 μm or more, further preferably 0.1 μm or more, especially preferably 0.2 μm or more, and is preferably 2 μm or less, more preferably 1.6 μm or less, further preferably 1.3 μm or less, especially preferably 1 μm or less. When the average primary particle diameter of the lithium-titanium composite oxide is in the above range, spherical secondary particles can be easily formed, so that the specific surface area can be easily secured, making it easy to prevent deterioration of battery performance, such as output characteristics.
The average primary particle diameter of the lithium-titanium composite oxide is measured by observation using a scanning electron microscope (SEM). Specifically, in a photomicrograph taken at a magnification such that the particles can be confirmed, for example, at a magnification of 10,000 to 100,000 times, with respect to 50 arbitrary primary particles, a value of the longest section of a horizontal line defined by the boundaries of the primary particle on the both sides is determined, and an average of the obtained values is determined as an average primary particle diameter.

[4] Shape

The shape of the particles of the lithium-titanium composite oxide may be, for example, a bulk shape, a polyhedral shape, a spherical shape, an ellipsoidal shape, a plate shape, a needle-like shape, or a cylindrical shape, which are conventionally used, but, of these, preferred are the particles of which primary particles undergo aggregation to form secondary particles wherein the shape of the formed secondary particles is a spherical shape or an ellipsoidal shape.

Generally, in an electrochemical element, the active material in the electrode suffers expansion or shrinkage during the charging and discharging, and therefore the resultant stress is likely to cause deterioration, such as a breakage of the active material or cutting of the conductive path. Therefore, rather than the active material in the form of individual particles of primary particles, the active material in a form such that primary particles of the active material undergo aggregation to form secondary particles can relax a stress due to the expansion or shrinkage to prevent deterioration.

Further, rather than the active material in the form of particles which undergo orientation along the axis, for example, which are of a plate shape, the active material in the form of particles of a spherical shape or an ellipsoidal shape is preferred because orientation of the particles is unlikely to occur upon forming the electrode, and hence the electrode is unlikely to suffer expansion or shrinkage during the charging and discharging, and further, when preparing the electrode, the particles and a conductor can be easily uniformly mixed with each other.

[5] Tap density

The tap density of the lithium-titanium composite oxide is preferably 0.05 g•cm$^{-3}$ or more, more preferably 0.1 g•cm$^{-3}$ or more, further preferably 0.2 g•cm$^{-3}$ or more, especially preferably 0.4 g•cm$^{-3}$ or more, and is preferably 2.8 g•cm$^{-3}$ or less, further preferably 2.4 g•cm$^{-3}$ or less, especially preferably 2 g•cm$^{-3}$ or less. When the tap density of the lithium-titanium composite oxide is in the above range, a satisfactory filling density can be secured in the case of using the lithium-titanium composite oxide as a negative electrode, and further the contact area between the particles can be secured, so that the resistance between the particles is unlikely to be increased, making it easy to prevent an increase of the output resistance of the secondary battery. Further, appropriate voids between the particles in the electrode are formed, and hence a flow path for the non-aqueous electrolytic solution can be secured, making it easy to prevent an increase of the output resistance.

The measurement of a tap density of the lithium-titanium composite oxide is conducted as follows. A sample is passed through a sieve having a sieve opening of 300 μm, and allowed to fall in a 20 cm$^3$ tapping cell to fill the cell with the sample so that the sample reaches the upper end surface of the cell, and then, using a powder density measurement apparatus (for example, Tap Denser, manufactured by Seishin Enterprise Co., Ltd.), the resultant sample is subjected to 1,000-time tapping with a stroke length of 10 mm, and a density is determined by making a calculation from a volume measured at that time and the mass of the sample. The tap density determined by the above measurement is defined as a tap density of the lithium-titanium composite oxide in the present invention.

[6] Roundness

When a roundness is measured as the degree of sphere of the lithium-titanium composite oxide, the roundness preferably falls within the range shown below. The roundness is defined by "Roundness = (Length of the circumference of the particle equivalent circle having the same area as that of the projected particle shape)/(Length of the actual circumference of the projected particle shape)", and, when the composite oxide has a roundness of 1, it is theoretically a true sphere.

The roundness of the lithium-titanium composite oxide is desirably close to 1, and is preferably 0.10 or more, more preferably 0.80 or more, further preferably 0.85 or more, especially preferably 0.90 or more. Generally, the larger the roundness, the more the high current-density charge-discharge characteristics of a secondary battery are improved. Therefore, when the roundness of the lithium-titanium composite oxide is in the above range, the filling properties of the negative electrode active material are unlikely to become poor, so that an increase of the resistance between the particles can be prevented, making it possible to prevent deterioration of the short-time, high current-density charge-discharge characteristics.

The measurement of a roundness of the lithium-titanium composite oxide is conducted using a flow-type particle image analyzer (FPIA, manufactured by Sysmex Corporation). Specifically, about 0.2 g of a sample is dispersed in a 0.2% by mass aqueous solution (about 50 mL) of polyoxyethylene (20) sorbitan monolaurate which is a surfactant, and irradiated with ultrasonic waves with 28 kHz at a power of 60 W for one minute and then, a detection range of from 0.6 to 400 μm is designated, and a roundness is measured with respect to the particles having a particle diameter in the range from 3 to 40 μm. The roundness determined by the above measurement is defined as a roundness of the lithium-titanium composite oxide in the present invention.

[7] Aspect ratio

The aspect ratio of the lithium-titanium composite oxide is preferably 1 or more, and is preferably 5 or less, more preferably 4 or less, further preferably 3 or less, especially preferably 2 or less. When the aspect ratio of the lithium-titanium composite oxide is in the above range, a streak line is unlikely to occur upon forming an electrode plate, and a uniform coating surface is easily obtained, making it possible to prevent deterioration of the short-time, high current-density charge-discharge characteristics of the secondary battery. The above-mentioned lower limit of the range is the theoretical lower limit of the aspect ratio of the lithium-titanium composite oxide.

The aspect ratio of the lithium-titanium composite oxide is measured by observing the particles of lithium-titanium composite oxide magnified by means of a scanning electron microscope. 50 Arbitrary lithium-titanium composite oxide particles fixed to the edge face of a metal having a thickness of 50 $\mu$m or less are selected, and individually three-dimensionally observed while rotating and slanting the stage having the sample fixed thereto, and diameter A, which is the largest diameter of the particle, and diameter B, which is the shortest diameter perpendicular to diameter A, are measured and an average of the A/B values is determined. The aspect ratio (A/B) determined by the above measurement is defined as an aspect ratio of the lithium-titanium composite oxide in the present invention.

(Method for producing the lithium-titanium composite oxide)

With respect to the method for producing the lithium-titanium composite oxide, there is no particular limitation as long as the non-aqueous electrolyte secondary battery of the present invention can be obtained, but several methods can be mentioned, and a general method for producing an inorganic compound is used.

For example, there can be mentioned a method in which a titanium raw material, such as titanium oxide, and, if necessary, other element raw materials, and a Li source, such as LiOH, $Li_2CO_3$, or $LiNO_3$, are uniformly mixed with one another, followed by calcination at a high temperature, to obtain an active material.

Particularly, as a method for producing an active material of a spherical shape or an ellipsoidal shape, various methods can be considered. As an example, there can be mentioned a method in which a titanium raw material, such as titanium oxide, and, if necessary, other element raw materials are dissolved in or pulverized and dispersed in a solvent, such as water, and the pH of the resultant solution or dispersion is controlled while stirring to form a spherical precursor, and the formed spherical precursor is recovered, and dried if necessary, and then a Li source, such as LiOH, $Li_2CO_3$, or $LiNO_3$, is added to the precursor, followed by calcination at a high temperature, to obtain an active material.

As an alternative method, there can be mentioned a method in which a titanium raw material, such as titanium oxide, and, if necessary, other element raw materials are dissolved in or pulverized and dispersed in a solvent, such as water, and the resultant solution or dispersion is shaped by drying using, e.g., a spray dryer to form a precursor of a spherical shape or an ellipsoidal shape, and a Li source, such as LiOH, $Li_2CO_3$, or $LiNO_3$, is added to the precursor, followed by calcination at a high temperature, to obtain an active material.

As a further alternative method, there can be mentioned a method in which a titanium raw material, such as titanium oxide, a Li source, such as LiOH, $Li_2CO_3$, or $LiNO_3$, and, if necessary, other element raw materials are dissolved in or pulverized and dispersed in a solvent, such as water, and the resultant solution or dispersion is shaped by drying using, e.g., a spray dryer to form a precursor of a spherical shape or an ellipsoidal shape, and the precursor is subjected to calcination at a high temperature to obtain an active material.

In the step in the above-described various methods, an element other than Ti, for example, Al, Mn, Ti, V, Cr, Mn, Fe, Co, Li, Ni, Cu, Zn, Mg, Ga, Zr, C, Si, Sn, or Ag can be present in the form of being in a metal oxide structure containing titanium and/or being in contact with an oxide containing titanium. When these elements are present in the above-mentioned form and contained in the negative electrode active material, it becomes possible to control the operating voltage and capacity of the secondary battery.

<2-3-4. Construction, physical properties, and preparation method of a negative electrode>

With respect to a negative electrode containing the above-mentioned active material, a method for forming an electrode, and a current collector, known technical constructions can be employed, but they desirably satisfy any one of or simultaneously satisfy two or more of the following items (i) to (vi).

(i) Preparation of a negative electrode

In the preparation of a negative electrode, any known method can be used as long as the effects of the present invention are not markedly sacrificed. For example, to the negative electrode active material are added a binder, a solvent, and, if necessary, a thickening agent, a conductor, and a filler to obtain a negative electrode forming material in a slurry form, and the resultant slurry is applied to a current collector and dried, followed by pressing, to form a negative

electrode active material layer.

(ii) Current collector

As a current collector having held thereon the negative electrode active material, a known current collector can be arbitrarily used. Examples of current collectors for the negative electrode include metal materials, such as aluminum, copper, nickel, stainless steel, and nickel-plated steel. From the viewpoint of the easy processing and the cost, copper is especially preferred.

With respect to the form of the current collector, when the current collector is a metal material, examples of forms include a metal foil, a metal cylinder, a metal coil, a metal plate, a metal thin film, an expanded metal, a punching metal, and a foamed metal. Of these, preferred is a metal thin film, more preferred is a copper foil, and further preferred are a rolled copper foil formed by a rolling method, and an electrolytic copper foil formed by an electrolytic method.

(iii) Thickness ratio of the current collector and the negative electrode active material layer

With respect to the thickness ratio of the current collector and the negative electrode active material layer, there is no particular limitation. However, a value of "(the thickness of the negative electrode active material layer on one side immediately before the step for injecting the non-aqueous electrolytic solution)/(the thickness of the current collector)" is preferably 150 or less, more preferably 20 or less, especially preferably 10 or less, and is preferably 0.1 or more, more preferably 0.4 or more, especially preferably 1 or more.

When the thickness ratio of the current collector and the negative electrode active material layer is larger than the above range, the current collector is likely to cause heat generation due to Joulean heat during the high current-density charging and discharging of the secondary battery. On the other hand, when the thickness ratio is smaller than the above range, the volume ratio of the current collector to the negative electrode active material is increased, so that the secondary battery is likely to be reduced in capacity.

(iv) Electrode density

With respect to the electrode structure obtained after forming the electrode from the negative electrode active material, there is no particular limitation, and the density of the negative electrode active material present on the current collector is preferably 1 $g \cdot cm^{-3}$ or more, more preferably 1.2 $g \cdot cm^{-3}$ or more, further preferably 1.3 $g \cdot cm^{-3}$ or more, and is preferably 4 $g \cdot cm^{-3}$ or less, more preferably 3 $g \cdot cm^{-3}$ or less, further preferably 2.5 $g \cdot cm^{-3}$ or less, especially preferably 1.7 $g \cdot cm^{-3}$ or less. When the density of the negative electrode active material present on the current collector is in the above range, the negative electrode active material particles are unlikely to suffer a breakage, so that an increase of the initial irreversible capacity of the secondary battery, or deterioration of the high current-density charge-discharge characteristics due to poor penetration of the non-aqueous electrolytic solution to around the current collector/negative electrode active material interface can be easily prevented. Further, the conductivity between the negative electrode active materials can be secured, and thus the capacity per unit volume can be secured without increasing the battery resistance.

(v) Binder, solvent and others

A slurry for forming the negative electrode active material layer is prepared by generally adding, to the negative electrode active material, a mixture of, for example, a solvent, a binder, and a thickening agent.

With respect to the binder for binding the negative electrode active material, there is no particular limitation as long as it is a material stable to the solvent used for producing the non-aqueous electrolytic solution or electrode.

Specific examples of the binders include resin polymers, such as polyethylene, polypropylene, polyethylene terephthalate, polymethyl methacrylate, aromatic polyamide, cellulose, and nitrocellulose; rubbery polymers, such as an SBR (styrene-butadiene rubber), an isoprene rubber, a butadiene rubber, a fluororubber, an NBR (acrylonitrile-butadiene rubber), and an ethylene-propylene rubber; a styrene-butadiene-styrene block copolymer and hydrogenation products thereof; thermoplastic elastomer polymers, such as an EPDM (ethylene-propylene-diene terpolymer), a styrene-ethylene-butadiene-styrene copolymer, a styrene-isoprene-styrene block copolymer, and hydrogenation products thereof; soft resin polymers, such as syndiotactic 1,2-polybutadiene, polyvinyl acetate, an ethylene-vinyl acetate copolymer, and a propylene-$\alpha$-olefin copolymer; fluoropolymers, such as polyvinylidene fluoride, polytetrafluoroethylene, fluorinated polyvinylidene fluoride, and a polytetrafluoroethylene-ethylene copolymer; and polymer compositions having ionic conductivity for alkali metal ions (particularly for lithium ions). These binders may be used individually, or two or more types of the binders may be used in an arbitrary combination and in an arbitrary ratio.

With respect to the type of the solvent used for forming a slurry, there is no particular limitation as long as it is

a solvent capable of having dissolved or dispersed therein a negative electrode active material, a binder, and a thickening agent and a conductor used if necessary, and either an aqueous solvent or an organic solvent may be used.

Examples of the aqueous solvents include water and alcohols, and examples of the organic solvents include N-methylpyrrolidone (NMP), dimethylformamide, dimethylacetamide, methyl ethyl ketone, cyclohexanone, methyl acetate, methyl acrylate, diethyltriamine, N,N-dimethylaminopropylamine, tetrahydrofuran (THF), toluene, acetone, diethyl ether, dimethylacetamide, hexamethylphosphoramide, dimethyl sulfoxide, benzene, xylene, quinoline, pyridine, methylnaphthalene, and hexane.

Especially when an aqueous solvent is used, it is preferred that, for example, a dispersant is contained in combination with a thickening agent and a slurry is formed using a latex of, e.g., an SBR.

These solvents may be used individually, or two or more types of the solvents may be used in an arbitrary combination and in an arbitrary ratio.

The proportion of the binder to 100 parts by mass of the negative electrode active material is preferably 0.1 part by mass or more, more preferably 0.5 part by mass or more, further preferably 0.6 part by mass or more, and is preferably 20 parts by mass or less, more preferably 15 parts by mass or less, further preferably 10 parts by mass or less, especially preferably 8 parts by mass or less. When the proportion of the binder to the negative electrode active material is in the above range, the proportion of the binder which does not contribute to the battery capacity is not increased, so that a lowering of the battery capacity is unlikely to occur. Further, a lowering of the strength of the negative electrode is unlikely to occur.

Especially when the slurry which is a negative electrode forming material contains a rubbery polymer, such as an SBR, as a main component, the proportion of the binder to 100 parts by mass of the negative electrode active material is preferably 0.1 part by mass or more, more preferably 0.5 part by mass or more, further preferably 0.6 part by mass or more, and is preferably 5 parts by mass or less, more preferably 3 parts by mass or less, further preferably 2 parts by mass or less.

When the slurry contains a fluoropolymer, such as polyvinylidene fluoride, as a main component, the proportion of the binder to 100 parts by mass of the negative electrode active material is preferably 1 part by mass or more, more preferably 2 parts by mass or more, further preferably 3 parts by mass or more, and is preferably 15 parts by mass or less, more preferably 10 parts by mass or less, further preferably 8 parts by mass or less.

The thickening agent is generally used for adjusting the viscosity of a slurry. With respect to the thickening agent, there is no particular limitation, but, specifically, there can be mentioned carboxymethyl cellulose, methyl cellulose, hydroxymethyl cellulose, ethyl cellulose, polyvinyl alcohol, oxidized starch, starch phosphate, casein, and salts thereof. These thickening agents may be used individually, or two or more types of the thickening agents may be used in an arbitrary combination and in an arbitrary ratio.

When a thickening agent is used, the proportion of the thickening agent to 100 parts by mass of the negative electrode active material is generally 0.1 part by mass or more, preferably 0.5 part by mass or more, more preferably 0.6 part by mass or more. Further, the proportion of the thickening agent is generally 5 parts by mass or less, preferably 3 parts by mass or less, more preferably 2 parts by mass or less. When the proportion of the thickening agent to the negative electrode active material is in the above range, the application properties of the slurry are excellent. Further, the proportion of the negative electrode active material to the negative electrode active material layer is appropriate, so that a problem of a reduction of the battery capacity or an increase of the resistance between the negative electrode active materials is unlikely to occur.

(vi) Area of the negative electrode plate

With respect to the area of the negative electrode plate, there is no particular limitation, but the negative electrode plate is preferably designed so that the negative electrode plate is slightly larger than the positive electrode plate facing the negative electrode plate and the edges of the positive electrode plate do not stick from the edges of the negative electrode plate. Further, from the viewpoint of suppressing the deterioration of cycle life caused when repeating charging and discharging of the secondary battery and the deterioration due to high-temperature storage, it is preferred that the area of the negative electrode plate is as close to the area of the positive electrode as possible because the proportion of the electrode which more uniformly and effectively acts is increased to improve the properties of the battery. Particularly, when the secondary battery is used at a large current, a design of the area of the negative electrode plate is important.

<2-4. Positive electrode>

Hereinbelow, the positive electrode used in the non-aqueous electrolyte secondary battery of the present invention will be described.

<2-4-1. Positive electrode active material>

The positive electrode active material used in the positive electrode is described below.

(1) Composition

With respect to the positive electrode active material, there is no particular limitation as long as it is capable of electrochemically having occluded therein and releasing metal ions, and, for example, one which is capable of electrochemically having occluded therein and releasing lithium ions is preferred, and a material containing lithium and at least one transition metal is preferred. Specific examples of the positive electrode active materials include a lithium-transition metal composite oxide, a lithium-containing transition metal phosphate compound, a lithium-containing transition metal silicate compound, and a lithium-containing transition metal borate compound.

With respect to the transition metal for the lithium-transition metal composite oxide, for example, preferred are V, Ti, Cr, Mn, Fe, Co, Ni, and Cu, and specific examples of the composite oxides include lithium-cobalt composite oxides, such as $LiCoO_2$, lithium-nickel composite oxides, such as $LiNiO_2$, lithium-manganese composite oxides, such as $LiMnO_2$, $LiMn_2O_4$ and $Li_2MnO_4$, and these lithium-transition metal composite oxides having part of the transition metal atoms as a main constituent replaced by another metal, such as Al, Ti, V, Cr, Mn, Fe, Co, Li, Ni, Cu, Zn, Mg, Ga, Zr, Si, Nb, Mo, Sn, or W.

Specific examples of the lithium-transition metal composite oxides having part of the transition metal atoms replaced by another metal include $LiNi_{0.5}Mn_{0.5}O_2$, $LiNi_{0.85}Co_{0.10}Al_{0.05}O_2$, $LiNi_{0.33}Co_{0.33}Mn_{0.33}O_2$, $LiMn_2O_4$, $LiMn_{1.8}Al_{0.2}O_4$, $Li_{1.1}Mn_{1.9}Al_{0.1}O_4$, and $LiMn_{1.5}Ni_{0.5}O_4$.

Of these, more preferred are composite oxides containing lithium and manganese. Cobalt and nickel are metals which are small in their resource amounts and which are expensive. In a large-size battery required to have a high capacity, such as a battery for use in an automobile, the active material is used in a large amount, and hence cobalt and nickel are not preferred in view of the cost. Therefore, manganese which is a more inexpensive transition metal is desirably used as a main component. Specifically, among the above specific examples, as more preferred specific examples, there can be mentioned $LiNi_{0.5}Mn_{0.5}O_2$, $LiNi_{0.33}Co_{0.33}Mn_{0.33}O_2$, $LiMn_2O_4$, $LiMn_{1.8}Al_{0.2}O_4$, $Li_{1.1}Mn_{1.9}Al_{0.1}O_4$, and $LiMn_{1.5}Ni_{0.5}O_4$.

Further, in view of the stability of the compound and the cost of obtaining the compound due to easiness of production, lithium-manganese composite oxides having a spinel structure are especially preferred. Specifically, among the above specific examples, as especially preferred specific examples, there can be mentioned $LiMn_2O_4$, $LiMn_{1.8}Al_{0.2}O_4$, $Li_{1.1}Mn_{1.9}Al_{0.1}O_4$, and $LiMn_{1.5}Ni_{0.5}O_4$.

With respect to the transition metal for the lithium-containing transition metal phosphate compound, for example, preferred are V, Ti, Cr, Mn, Fe, Co, Ni, and Cu, and specific examples of the phosphate compounds include iron phosphates, such as $LiFePO_4$, $Li_3Fe_2(PO_4)_3$, and $LiFeP_2O_7$, cobalt phosphates, such as $LiCoPO_4$, manganese phosphates, such as $LiMnPO_4$, and these lithium-containing transition metal phosphate compounds having part of the transition metal atoms as a main constituent replaced by another metal, such as Al, Ti, V, Cr, Mn, Fe, Co, Li, Ni, Cu, Zn, Mg, Ga, Zr, Si, Nb, Mo, Sn, or W.

With respect to the transition metal for the lithium-containing transition metal silicate compound, for example, preferred are V, Ti, Cr, Mn, Fe, Co, Ni, and Cu, and specific examples of the silicate compounds include iron silicates, such as $Li_2FeSiO_4$, cobalt silicates, such as $Li_2CoSiO_4$, and these lithium-containing transition metal silicate compounds having part of the transition metal atoms as a main constituent replaced by another metal, such as Al, Ti, V, Cr, Mn, Fe, Co, Li, Ni, Cu, Zn, Mg, Ga, Zr, Si, Nb, Mo, Sn, or W.

With respect to the transition metal for the lithium-containing transition metal borate compound, for example, preferred are V, Ti, Cr, Mn, Fe, Co, Ni, and Cu, and specific examples of the borate compounds include iron borates, such as $LiFeBO_3$, cobalt borates, such as $LiCoBO_3$, and these lithium-containing transition metal borate compounds having part of the transition metal atoms as a main constituent replaced by another metal, such as Al, Ti, V, Cr, Mn, Fe, Co, Li, Ni, Cu, Zn, Mg, Ga, Zr, Si, Nb, Mo, Sn, or W.

(2) Surface coating

The above-mentioned positive electrode active material having deposited on the surface thereof a substance (hereinafter, frequently referred to as "surface deposition substance") having a composition different from that of the substance constituting the positive electrode active material as a main component can be used as the positive electrode active material in the present invention. Examples of the surface deposition substances include oxides, such as aluminum oxide, silicon oxide, titanium oxide, zirconium oxide, magnesium oxide, calcium oxide, boron oxide, antimony oxide, and bismuth oxide; sulfates, such as lithium sulfate, sodium sulfate, potassium sulfate, magnesium sulfate, calcium sulfate, and aluminum sulfate; carbonates, such as lithium carbonate, calcium carbonate, and magnesium carbonate; and carbon.

The surface deposition substance can be deposited on the surface of the positive electrode active material by, for example, a method in which a surface deposition substance is dissolved or suspended in a solvent and the positive electrode active material is impregnated with the resultant solution or suspension, followed by drying, a method in which a surface deposition substance precursor is dissolved or suspended in a solvent and the positive electrode active material is impregnated with the resultant solution or suspension, followed by a reaction caused by, e.g., heating, or a method in which a surface deposition substance is added to a positive electrode active material precursor whereupon the resultant mixture is calcined. When carbon is deposited, a method can be used in which a carbonaceous material, for example, in the form of activated carbon is mechanically deposited later.

With respect to the mass of the surface deposition substance deposited on the surface of the positive electrode active material, the amount of the surface deposition substance relative to the total mass of the positive electrode active material and the surface deposition substance is preferably 0.1 ppm or more, more preferably 1 ppm or more, further preferably 10 ppm or more, and is preferably 20% or less, more preferably 10% or less, further preferably 5% or less.

The surface deposition substance can prevent the non-aqueous electrolytic solution from suffering an oxidation reaction on the surface of the positive electrode active material, improving the battery life. When the amount of the substance deposited is in the above range, the above effect can be satisfactorily exhibited, so that an increase of the resistance of the secondary battery is prevented without inhibiting lithium ions from going into or out of the active material.

(3) Shape

As examples of shapes of the particles of positive electrode active material, there can be employed a bulk shape, a polyhedral shape, a spherical shape, an ellipsoidal shape, a plate shape, a needle-like shape, and a cylindrical shape, which are conventionally used. The positive electrode active material may be particles of which primary particles undergo aggregation to form secondary particles, wherein the shape of the formed secondary particles is a spherical shape or an ellipsoidal shape.

(4) Tap density

The tap density of the positive electrode active material is preferably 0.5 g•cm$^{-3}$ or more, more preferably 1.0 g•cm$^{-3}$ or more, further preferably 1.5 g•cm$^{-3}$ or more, and is preferably 4.0 g•cm$^{-3}$ or less, more preferably 3.7 g•cm$^{-3}$ or less.

By using the positive electrode active material powder having a high tap density, a positive electrode active material layer having a high density can be formed. When the tap density of the positive electrode active material is in the above range, the amount of the dispersing medium required for forming the positive electrode active material layer is appropriate, so that the amounts of the conductor and binder are appropriate. Therefore, the filling ratio of the positive electrode active material to the positive electrode active material layer is not restricted, and an influence on the battery capacity is small.

The measurement of a tap density of the positive electrode active material is conducted as follows. A sample is passed through a sieve having a sieve opening of 300 μm, and allowed to fall in a 20 cm$^3$ tapping cell to fill the cell capacity with the sample, and then, using a powder density measurement apparatus (for example, Tap Denser, manufactured by Seishin Enterprise Co., Ltd.), the resultant sample is subjected to 1,000-time tapping with a stroke length of 10 mm, and a density is determined by making a calculation from a volume measured at that time and the mass of the sample. The tap density determined by the above measurement is defined as a tap density of the positive electrode active material in the present invention.

(5) Median diameter d50

The median diameter d50 of the positive electrode active material particles (secondary particle diameter when the primary particles of the positive electrode active material undergo aggregation to form secondary particles) can be measured using a laser diffraction/scattering-type particle size distribution measurement apparatus.

The median diameter d50 of the positive electrode active material particles is preferably 0.1 μm or more, more preferably 0.5 μm or more, further preferably 1 μm or more, especially preferably 3 μm or more, and is preferably 30 μm or less, more preferably 20 μm or less, further preferably 16 μm or less, especially preferably 15 μm or less. When the median diameter d50 of the positive electrode active material particles is in the above range, a positive electrode having a high bulk density is easily obtained, and further diffusion of lithium in the particles requires no prolonged period of time, so that the battery characteristics are unlikely to become poor. Further, when preparing a positive electrode for secondary battery, that is, when forming a slurry of the active material, conductor, binder and others in a solvent and applying the slurry to form a thin film, for example, a streak line is unlikely to be caused.

When two types or more of the positive electrode active materials having different median diameters d50 are

mixed in an arbitrary ratio, the filling properties upon preparing a positive electrode can be further improved.

The median diameter d50 of the positive electrode active material is measured using a particle size distribution meter (for example, LA-920, manufactured by HORIBA, Ltd.) and using a 0.1% by mass aqueous solution of sodium hexametaphosphate as a dispersing medium after the dispersion of the positive electrode active material is subjected to ultrasonic dispersion for 5 minutes and the refractive index for measurement is set at 1.24.

(6) Average primary particle diameter

When the primary particles of the positive electrode active material undergo aggregation to form secondary particles, the average primary particle diameter of the positive electrode active material is preferably 0.01 μm or more, more preferably 0.05 μm or more, further preferably 0.08 μm or more, especially preferably 0.1 μm or more, and is preferably 3 μm or less, more preferably 2 μm or less, further preferably 1 μm or less, especially preferably 0.6 μm or less. When the average primary particle diameter of the positive electrode active material is in the above range, spherical secondary particles are easily formed, and appropriate powder filling properties can be obtained, so that the specific surface area can be satisfactorily secured, making it possible to suppress deterioration of battery performance, such as output characteristics.

The average primary particle diameter of the positive electrode active material is measured by observation using a scanning electron microscope (SEM). Specifically, in a photomicrograph taken at a magnification of 10,000 times, with respect to 50 arbitrary primary particles, a value of the longest section of a horizontal line defined by the boundaries of the primary particle on the both sides is determined, and an average of the obtained values is determined as an average primary particle diameter.

(7) BET Specific surface area

The BET specific surface area of the positive electrode active material is a value of a specific surface area measured using a BET method, and is preferably 0.2 $m^2 \cdot g^{-1}$ or more, more preferably 0.3 $m^2 \cdot g^{-1}$ or more, further preferably 0.4 $m^2 \cdot g^{-1}$ or more, and is preferably 4.0 $m^2 \cdot g^{-1}$ or less, more preferably 2.5 $m^2 \cdot g^{-1}$ or less, further preferably 1.5 $m^2 \cdot g^{-1}$ or less. When the BET specific surface area value of the positive electrode active material is in the above range, deterioration of the battery performance can be prevented. Further, a satisfactory tap density can be secured, and the application properties upon forming the positive electrode active material layer are excellent.

A BET specific surface area of the positive electrode active material is measured using a surface area meter (for example, Fully-automatic surface area measurement apparatus, manufactured by Ohkura Riken Inc.). Specifically, a specific surface area is measured by subjecting a sample to predrying under a nitrogen gas flow at 150°C for 30 minutes, and then making a measurement in accordance with a nitrogen adsorption BET single-point method by a gas flow method using a nitrogen-helium mixed gas accurately prepared so that the nitrogen pressure relative to atmospheric pressure becomes 0.3. The specific surface area determined by the above measurement is defined as a BET specific surface area of the positive electrode active material in the present invention.

(8) Method for producing the positive electrode active material

With respect to the method for producing the positive electrode active material, there is no particular limitation as long as the non-aqueous electrolyte secondary battery of the present invention can be obtained, but several methods can be mentioned, and a general method for producing an inorganic compound is used.

Particularly, as a method for producing an active material of a spherical shape or an ellipsoidal shape, various methods can be considered. As an example, there can be mentioned a method in which a transition metal raw material, such as a transition metal nitrate or sulfate, and, if necessary, other element raw materials are dissolved in or pulverized and dispersed in a solvent, such as water, and the pH of the resultant solution or dispersion is controlled while stirring to form a spherical precursor, and the formed spherical precursor is recovered, and dried if necessary, and then a Li source, such as LiOH, $Li_2CO_3$, or $LiNO_3$, is added to the precursor, followed by calcination at a high temperature, to obtain an active material.

As an alternative method, there can be mentioned a method in which a transition metal raw material, such as a transition metal nitrate, sulfate, hydroxide, or oxide, and, if necessary, other element raw materials are dissolved in or pulverized and dispersed in a solvent, such as water, and the resultant solution or dispersion is shaped by drying using, e.g., a spray dryer to form a precursor of a spherical shape or an ellipsoidal shape, and a Li source, such as LiOH, $Li_2CO_3$, or $LiNO_3$, is added to the precursor, followed by calcination at a high temperature, to obtain an active material.

As a further alternative method, there can be mentioned a method in which a transition metal raw material, such as a transition metal nitrate, sulfate, hydroxide, or oxide, a Li source, such as LiOH, $Li_2CO_3$, or $LiNO_3$, and, if necessary, other element raw materials are dissolved in or pulverized and dispersed in a solvent, such as water, and

the resultant solution or dispersion is shaped by drying using, e.g., a spray dryer to form a precursor of a spherical shape or an ellipsoidal shape, and the precursor is subjected to calcination at a high temperature to obtain an active material.

<2-4-2. Structure of a positive electrode and method for preparing the positive electrode>

Hereinbelow, the construction of the positive electrode used in the present invention and a method for preparing the positive electrode are described.

(Method for preparing a positive electrode)

A positive electrode can be prepared by forming a positive electrode active material layer containing positive electrode active material particles and a binder on a current collector. Production of the positive electrode using a positive electrode active material can be performed by any known method. For example, the positive electrode can be obtained by mixing together a positive electrode active material and a binder, and, if necessary, for example, a conductor and a thickening agent by a dry process and forming the resultant mixture into a sheet form, and bonding the sheet onto a current collector for positive electrode by pressing, or by dissolving or dispersing the above materials in a liquid medium to form a slurry, and applying the slurry to a current collector for positive electrode, and drying the applied slurry to form a positive electrode active material layer on a current collector.

The content of the positive electrode active material in the positive electrode active material layer is preferably 60% by mass or more, more preferably 70% by mass or more, further preferably 80% by mass or more, and is preferably 99.9% by mass or less, more preferably 99% by mass or less. When the content of the positive electrode active material is in the above range, the electric capacity can be satisfactorily secured. Further, the strength of the positive electrode is satisfactory. In the present invention, a single type of the positive electrode active material powder may be individually used, or two or more types of the positive electrode active material powders having different compositions or different powder physical properties may be used in an arbitrary combination and in an arbitrary ratio. When two or more types of the active materials are used in combination, it is preferred to use the above-mentioned composite oxide containing lithium and manganese as a component of the powder. As mentioned above, cobalt and nickel are metals which are small in their resource amounts and which are expensive. In a large-size battery required to have a high capacity, such as a battery for use in an automobile, the active material is used in a large amount, and hence cobalt and nickel are not preferred in view of the cost. Therefore, manganese which is a more inexpensive transition metal is desirably used as a main component.

(Conductor)

As the conductor, a known conductor can be arbitrarily used. Specific examples of conductors include metal materials, such as copper and nickel; graphite, such as natural graphite and artificial graphite; carbon black, such as acetylene black; and carbonaceous materials, e.g., amorphous carbon, such as needle coke. These conductors may be used individually, or two or more types of the conductors may be used in an arbitrary combination and in an arbitrary ratio.

The content of the conductor in the positive electrode active material layer is preferably 0.01% by mass or more, more preferably 0.1% by mass or more, further preferably 1% by mass or more, and is preferably 50% by mass or less, more preferably 30% by mass or less, further preferably 15% by mass or less. When the content of the conductor is in the above range, conductivity can be satisfactorily secured. Further, a lowering of the battery capacity can be easily prevented.

(Binder)

With respect to the binder used for producing the positive electrode active material layer, there is no particular limitation as long as it is a material stable to the solvent used for producing the non-aqueous electrolytic solution or electrode.

When the positive electrode is produced by an application method, with respect to the binder, there is no particular limitation as long as it is a material capable of being dissolved or dispersed in the liquid medium used for producing the electrode, but specific examples of the binders include resin polymers, such as polyethylene, polypropylene, polyethylene terephthalate, polymethyl methacrylate, an aromatic polyamide, cellulose, and nitrocellulose; rubbery polymers, such as an SBR (styrene-butadiene rubber), an NBR (acrylonitrile-butadiene rubber), a fluororubber, an isoprene rubber, a butadiene rubber, and an ethylene-propylene rubber; thermoplastic elastomer polymers, such as a styrene-butadiene-styrene block copolymer and hydrogenation products thereof, an EPDM (ethylene-propylene-diene terpolymer), a styrene-ethylene-butadiene-ethylene copolymer, and a styrene-isoprene-styrene block copolymer and hydrogenation products thereof; soft resin polymers, such as syndiotactic 1,2-polybutadiene, polyvinyl acetate, an ethylene-vinyl acetate copolymer, and a propylene-$\alpha$-olefin copolymer; fluoropolymers, such as polyvinylidene fluoride (PVdF), polytetrafluoroethylene, fluorinated polyvinylidene fluoride, and a polytetrafluoroethylene-ethylene copolymer; and polymer compositions having ionic conductivity for alkali metal ions (particularly for lithium ions). These materials may be used individually, or two or more types of the materials may be used in an arbitrary combination and in an arbitrary ratio.

The content of the binder in the positive electrode active material layer is preferably 0.1% by mass or more, more preferably 1% by mass or more, further preferably 3% by mass or more, and is preferably 80% by mass or less, more preferably 60% by mass or less, further preferably 40% by mass or less, especially preferably 10% by mass or less. When the content of the binder is in the above range, the positive electrode active material can be satisfactorily held, so that the mechanical strength of the positive electrode can be secured, achieving excellent battery performance, such as cycle characteristics. Further, a lowering of the battery capacity or conductivity can be avoided.

(Liquid medium)

With respect to the type of the liquid medium used for preparing a slurry for forming the positive electrode active material layer, there is no particular limitation as long as it is a solvent capable of having dissolved or dispersed therein a positive electrode active material, a conductor, a binder, and a thickening agent used if necessary, and either an aqueous solvent or an organic solvent may be used.

Examples of the aqueous media include water, and mixed media of water and an alcohol. Examples of the organic media include aliphatic hydrocarbons, such as hexane; aromatic hydrocarbons, such as benzene, toluene, xylene, and methylnaphthalene; heterocyclic compounds, such as quinoline and pyridine; ketones, such as acetone, methyl ethyl ketone, and cyclohexanone; esters, such as methyl acetate and methyl acrylate; amines, such as diethylenetriamine and N,N-dimethylaminopropylamine; ethers, such as diethyl ether and tetrahydrofuran (THF); amides, such as N-methylpyrrolidone (NMP), dimethylformamide, and dimethylacetamide; and aprotic polar solvents, such as hexamethylphosphoramide and dimethyl sulfoxide. These liquid media may be used individually, or two or more types of the liquid media may be used in an arbitrary combination and in an arbitrary ratio.

(Thickening agent)

When an aqueous medium is used as a liquid medium for forming a slurry, it is preferred that a slurry is formed using a thickening agent and a latex of, e.g., a styrene-butadiene rubber (SBR). The thickening agent is generally used for adjusting the viscosity of a slurry.

With respect to the thickening agent, there is no particular limitation as long as the effects of the present invention are not markedly sacrificed, but, specifically, there can be mentioned carboxymethyl cellulose, methyl cellulose, hydroxymethyl cellulose, ethyl cellulose, polyvinyl alcohol, oxidized starch, starch phosphate, casein, and salts thereof. These thickening agents may be used individually, or two or more types of the thickening agents may be used in an arbitrary combination and in an arbitrary ratio.

When a thickening agent is used, the proportion of the thickening agent to the total mass of the positive electrode active material and the thickening agent is preferably 0.1% by mass or more, more preferably 0.5% by mass or more, further preferably 0.6% by mass or more, and is preferably 5% by mass or less, more preferably 3% by mass or less, further preferably 2% by mass or less. When the proportion of the thickening agent is in the above range, the application properties of the slurry are excellent, and further the proportion of the active material to the positive electrode active material layer is satisfactory, so that a problem of a reduction of the capacity of the secondary battery or an increase of the resistance between the positive electrode active materials can be easily avoided.

(Pressing and increasing the density)

For increasing the filling density of the positive electrode active material, the positive electrode active material layer obtained by applying the slurry onto a current collector and drying the slurry is preferably pressed and increased in density by means of, for example, a handpress or a roller press. The density of the positive electrode active material layer is preferably 1 $g \cdot cm^{-3}$ or more, further preferably 1.5 $g \cdot cm^{-3}$ or more, especially preferably 2 $g \cdot cm^{-3}$ or more, and is preferably 4 $g \cdot cm^{-3}$ or less, further preferably 3.5 $g \cdot cm^{-3}$ or less, especially preferably 3 $g \cdot cm^{-3}$ or less.

When the density of the positive electrode active material layer is in the above range, penetration of the non-aqueous electrolytic solution to around the current collector/active material interface does not become poor, and particularly, the charge-discharge characteristics of the secondary battery at a high current density become excellent. Further, it is unlikely that the conductivity between the active materials is lowered, so that an increase of the battery resistance is unlikely to occur.

(Current collector)

With respect to the material for the positive electrode current collector, there is no particular limitation, and a known material can be arbitrarily used. Specific examples of materials include metal materials, such as aluminum, stainless steel, nickel plating, titanium, and tantalum; and carbonaceous materials, such as carbon cloth and carbon paper. Of these, preferred are metal materials, and aluminum is especially preferred.

With respect to the form of the current collector, in the case of a metal material, examples of forms include a metal foil, a metal cylinder, a metal coil, a metal plate, a metal thin film, an expanded metal, a punching metal, and a foamed metal, and, in the case of a carbonaceous material, examples of forms include a carbon plate, a carbon thin film, and a carbon cylinder. Of these, a metal thin film is preferred. The thin film may be appropriately formed into a mesh form.

The thickness of the current collector is arbitrary, but is preferably 1 μm or more, more preferably 3 μm or more, further preferably 5 μm or more, and is preferably 1 mm or less, more preferably 100 μm or less, further preferably 50 μm or less. When the thickness of the current collector is in the above range, strength needed for the current collector can be satisfactorily secured. Further, the handling properties are also excellent.

With respect to the thickness ratio of the current collector and the positive electrode active material layer, there is no particular limitation. However, a value of "(the thickness of the active material layer on one side immediately before injecting the non-aqueous electrolytic solution)/(the thickness of the current collector)" is preferably 150 or less, more preferably 20 or less, especially preferably 10 or less, and is preferably 0.1 or more, more preferably 0.4 or more, especially preferably 1 or more.

When the thickness ratio of the current collector and the positive electrode active material layer is in the above range, the current collector is unlikely to cause heat generation due to Joulean heat during the high current-density charging and discharging of the secondary battery. Further, it is unlikely that the volume ratio of the current collector to the positive electrode active material is increased, so that a lowering of the battery capacity can be prevented.

(Electrode area)

From the viewpoint of improving the stability at high output and at high temperatures, it is preferred that the area of the positive electrode active material layer is large, relative to the outer surface area of a battery outer casing. Specifically, the total electrode area of the positive electrode is preferably 20 times or more, more preferably 40 times or more, in terms of an area ratio, the outer surface area of the non-aqueous electrolyte secondary battery. The outer surface area of the outer casing in the case of a closed-end rectangular shape means the total area determined by calculation from the sizes of the vertical and horizontal thicknesses of the casing portion filled with electricity generating elements, excluding the protruding portion of the terminal. The outer surface area of the outer casing in the case of a closed-end cylindrical shape means a geometric surface area of a cylinder determined when the casing portion filled with electricity generating elements, excluding the protruding portion of the terminal, is presumed to approximate to the cylinder. The total electrode area of the positive electrode means a geometric surface area of the positive electrode active material layer opposite to the active material layer containing the negative electrode active material, and, in the structure having on both sides the positive electrode active material layers through a current collector foil, the total electrode area of the positive electrode means the total of areas individually calculated for the respective sides.

(Discharge capacity)

When the non-aqueous electrolytic solution of the present invention is used, it is preferred that the electric capacity of the battery element contained in one battery casing for the non-aqueous electrolyte secondary battery (electric capacity measured when the battery in a fully charged state is discharged until the battery becomes in a discharged state) is 1 ampere hour (Ah) or more because the effect of improving the low-temperature discharge characteristics is improved. Therefore, the positive electrode plate is designed so that the discharge capacity in a fully charged state preferably becomes 3 Ah (ampere hour), more preferably 4 Ah or more, and preferably becomes 20 Ah or less, more preferably 10 Ah or less.

When the discharge capacity is in the above range, too large a voltage reduction due to an electrode reaction resistance upon taking out a large current is avoided, making it possible to prevent deterioration of the electric power efficiency. Further, the temperature distribution in the battery is not markedly broadened due to heat generation in the battery during the pulse charging/discharging, so that it is possible to avoid a phenomenon such that the durability upon repeating charging and discharging deteriorates and the heat release efficiency for vigorous heat generation caused due to the occurrence of an accident, such as overcharge or internal short-circuiting, becomes poor.

(Thickness of the positive electrode plate)

With respect to the thickness of the positive electrode plate, there is no particular limitation. However, from the viewpoint of the high capacity and high output as well as high rate characteristics, the thickness of the positive electrode active material layer, excluding the thickness of the current collector, per one side of the current collector, is preferably 10 μm or more, more preferably 20 μm or more, and is preferably 200 μm or less, more preferably 100 μm or less.

<2-5. Separator>

In the non-aqueous electrolyte secondary battery of the present invention, for preventing the occurrence of short-circuiting, generally, a separator is disposed between the positive electrode and the negative electrode. In this case, the separator is generally impregnated with the non-aqueous electrolytic solution of the present invention.

With respect to the material for and the form of the separator, there is no particular limitation, and a separator of a known material or form can be arbitrarily employed as long as the effects of the present invention are not markedly sacrificed. Especially, a separator formed from a material stable to the non-aqueous electrolytic solution of the present invention, such as a resin, a glass fiber, or an inorganic material, is used, and a separator in the form of a porous sheet or nonwoven fabric having excellent liquid retaining property is preferably used.

As a material for the resin or glass fiber separator, for example, a polyolefin, such as polyethylene or polypropylene, an aramid resin, polytetrafluoroethylene, polyether sulfone, or a glass filter can be used. Of these, preferred are a glass filter and polyolefin, and further preferred is polyolefin. These materials may be used individually, or two or more types of the materials may be used in an arbitrary combination and in an arbitrary ratio.

The thickness of the separator is arbitrary, but is preferably 1 μm or more, more preferably 5 μm or more, further preferably 10 μm or more, and is preferably 50 μm or less, more preferably 40 μm or less, further preferably 30 μm or less. When the thickness of the separator is in the above range, excellent insulation properties and excellent mechanical strength can be achieved. Further, a lowering of battery performance, such as rate characteristics, can be prevented, so that a lowering of the energy density of the whole of non-aqueous electrolyte secondary battery can be prevented.

Further, when a porous material, such as a porous sheet or nonwoven fabric, is used as a separator, the porosity of the separator is arbitrary, but is preferably 20% or more, more preferably 35% or more, further preferably 45% or more, and is preferably 90% or less, more preferably 85% or less, further preferably 75% or less. When the porosity of the separator is in the above range, the film resistance is not too large, making it possible to suppress deterioration of the rate characteristics of the secondary battery. Further, the mechanical strength of the separator is appropriate, and a lowering of the insulation can be suppressed.

Further, the average pore diameter of the separator is arbitrary, but is preferably 0.5 μm or less, more preferably 0.2 μm or less, and is preferably 0.05 μm or more. When the average pore diameter of the separator is in the above range, short-circuiting is unlikely to occur. Further, the film resistance is not too large, making it possible to prevent a lowering of the rate characteristics of the secondary battery.

On the other hand, as an inorganic material, for example, an oxide, such as alumina or silicon dioxide, a nitride, such as aluminum nitride or silicon nitride, or a sulfate, such as barium sulfate or calcium sulfate, is used, and an inorganic material in a particle form or in a fiber form is used.

With respect to the form of the separator, a separator in the form of a thin film, such as nonwoven fabric, woven fabric, or a microporous film, is used. In the separator in the form of a thin film, one having a pore diameter of 0.01 to 1 μm and a thickness of 5 to 50 μm is preferably used. As a separator other than the separator in the form of the above-mentioned independent thin film, there can be used a separator having a composite porous layer containing particles of the above-mentioned inorganic material formed on the surface layer of the positive electrode and/or negative electrode using a binder made of a resin. For example, there can be mentioned a separator having on both sides of the positive electrode porous layers formed from alumina particles having a 90% particle diameter of less than 1 μm using a fluororesin as a binder.

<2-6. Design of the battery>

(Electrode group)

The electrode group may have any of a stacked structure in which the above-mentioned positive electrode plate and negative electrode plate are stacked through the above-mentioned separator, and a structure in which the above positive electrode plate and negative electrode plate have the above separator disposed therebetween and are spirally wound. The proportion of the volume of the electrode group to the internal volume of the battery (hereinafter, referred to as "electrode group occupancy") is preferably 40% or more, more preferably 50% or more, and is preferably

95% or less, more preferably 90% or less. When the electrode group occupancy is in the above range, the battery capacity is unlikely to be reduced. Further, an appropriate void space can be secured, and therefore a problem can be prevented in that the battery is exposed to a high temperature so that the members in the battery expand or the vapor pressure of the liquid component of the non-aqueous electrolytic solution becomes higher to increase the internal pressure, causing
deterioration of various characteristics of the secondary battery, such as charging/discharging repeating performance or high-temperature storage characteristics, and further a case in which a gas release valve operates to lower the internal pressure can be avoided.

(Current collector structure)

With respect to the current collector structure, there is no particular limitation. However, for more effectively achieving the improvement of the discharge characteristics by the non-aqueous electrolytic solution of the present invention, it is preferred to employ a structure such that the resistance of a wiring portion or joint portion is reduced. When the internal resistance is reduced as mentioned above, the effects obtained using the non-aqueous electrolytic solution of the present invention are especially advantageously exhibited.

In the electrode group of the above-mentioned stacked structure, a structure formed by binding together metal core portions of the individual electrode layers and welding the bound core portions to the terminal is advantageously used. When the area of a single electrode is increased, the internal resistance is increased, and therefore a method of forming a plurality of terminals in the electrode to reduce the resistance is also advantageously used. In the electrode group of the above-mentioned spirally wound structure, the internal resistance can be reduced by forming a plurality of lead structures in each of the positive electrode and the negative electrode and binding them together with the terminal.

(Protective device)

As a protective device, there can be mentioned, for example, a PTC (positive temperature coefficient) which is increased in the resistance when abnormal heat generation occurs or too large a current flows, a thermistor, a temperature fuse, and a valve which cuts out the current flowing the circuit due to a rapid increase of the pressure or temperature in the battery upon abnormal heat generation (current cut-out valve). With respect to the above-mentioned protective device, one having conditions in which the device does not operate in the general use at a high current is preferably selected, and a battery design is more preferably employed such that abnormal heat generation or heat runaway is not caused without a protective device.

(Outer casing)

The non-aqueous electrolyte secondary battery of the present invention generally comprises the above-mentioned non-aqueous electrolytic solution, negative electrode, positive electrode, separator and others which are contained in an outer casing. With respect to the outer casing, there is no particular limitation, and a known outer casing can be arbitrarily employed as long as the effects of the present invention are not markedly sacrificed.

With respect to the material for the outer casing, there is no particular limitation as long as it is a material stable to the non-aqueous electrolytic solution used. Specifically, a metal, such as a nickel-plated steel plate, stainless steel, aluminum, an aluminum alloy, a magnesium alloy, nickel, or titanium, or a stacked film of a resin and an aluminum foil (laminate film) is used. From the viewpoint of the weight reduction, a metal, such as aluminum or an aluminum alloy, or a laminate film is preferably used.

Examples of the outer casings using the above metal include those having a sealed structure obtained by welding the metals together by laser welding, resistance welding, or ultrasonic welding, and those having a calked structure obtained by caulking the above metals through a gasket made of a resin. Examples of the outer casings using the above-mentioned laminate film include those having a sealed structure obtained by heat-fusing the resin layers together. For improving the sealing properties, a resin different from the resin used in the laminate film may be disposed between the above resin layers. Particularly, when the resin layers are heat-fused through a current collector terminal to form a closed structure, bonding of a metal and a resin is made, and therefore, as a resin present between the metals, a resin having a polar group or a modified resin having introduced a polar group is preferably used.

Further, the shape of the outer casing is arbitrary and, for example, any of a cylinder shape, a rectangle shape, a laminate type, a coin shape, and a large-size type may be used.

EXAMPLES

Hereinbelow, the present invention will be described in more detail with reference to the following Examples

and Comparative Examples, which should not be construed as limiting the scope of the present invention.

In the following Examples and Comparative Examples, the compounds used as a constituent of the non-aqueous electrolytic solution are compounds shown below, and are, hereinafter, referred to as "compound (a)", "compound (b)", "compound (c)", "compound (d)", and "compound (e)".

[Chemical formula 13]

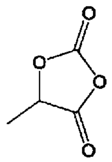

・・・Compound (a)

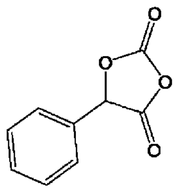

・・・Compound (b)

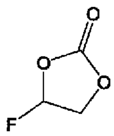

・・・Compound (c)

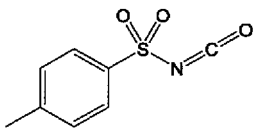

・・・Compound (d)

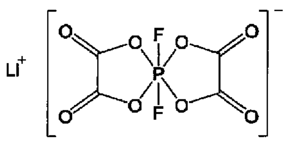

・・・Compound (e)

«Examples 1-1 to 1-4 and Comparative Examples 1-1 to 1-6»

[Production of a non-aqueous electrolyte secondary battery]

<Preparation of a non-aqueous electrolytic solution>

[Example 1-1]

In a dry argon atmosphere, satisfactorily dried $LiPF_6$ was dissolved in a mixture of ethylene carbonate and diethyl carbonate (volume ratio: 3:7) in a concentration of 1 mol/L (in terms of a concentration in the non-aqueous electrolytic solution), and further satisfactorily dried compound (a) was dissolved in the resultant solution in an amount of 1.0% by mass (in terms of a concentration in the non-aqueous electrolytic solution) to prepare a non-aqueous electrolytic solution. Using the prepared non-aqueous electrolytic solution, a non-aqueous electrolyte secondary battery was produced by the method described below, and the below-mentioned evaluation of the battery was conducted.

[Example 1-2]

A non-aqueous electrolyte secondary battery was produced in substantially the same manner as in Example 1-1 except that the concentration of compound (a) was changed to 2.0% by mass, and the below-mentioned evaluation of the battery was conducted.

[Example 1-3]

A non-aqueous electrolyte secondary battery was produced in substantially the same manner as in Example 1-1 except that the concentration of compound (a) was changed to 3.0% by mass, and the below-mentioned evaluation of the battery was conducted.

[Example 1-4]

A non-aqueous electrolyte secondary battery was produced in substantially the same manner as in Example 1-1 except that the concentration of compound (a) was changed to 4.0% by mass, and the below-mentioned evaluation of the battery was conducted.

[Comparative Example 1-1]

A non-aqueous electrolyte secondary battery was produced in substantially the same manner as in Example 1-1 except that compound (a) was not dissolved in the non-aqueous electrolytic solution, and the below-mentioned evaluation of the battery was conducted.

[Comparative Example 1-2]

A non-aqueous electrolyte secondary battery was produced in substantially the same manner as in Example 1-1 except that the concentration of compound (a) was changed to 5.0% by mass, and the below-mentioned evaluation of the battery was conducted.

[Comparative Example 1-3]

A non-aqueous electrolyte secondary battery was produced in substantially the same manner as in Example 1-1 except that the concentration of compound (a) was changed to 7.0% by mass, and the below-mentioned evaluation of the battery was conducted.

[Comparative Example 1-4]

A non-aqueous electrolyte secondary battery was produced in substantially the same manner as in Example 1-1 except that compound (a) was not dissolved in the non-aqueous electrolytic solution, and that compound (b) was dissolved in an amount of 1.0% by mass, and the below-mentioned evaluation of the battery was conducted.

[Comparative Example 1-5]

A non-aqueous electrolyte secondary battery was produced in substantially the same manner as in Example 1-1 except that compound (a) was not dissolved in the non-aqueous electrolytic solution, and that compound (b) was dissolved in an amount of 4.0% by mass, and the below-mentioned evaluation of the battery was conducted.

[Comparative Example 1-6]

A non-aqueous electrolyte secondary battery was produced in substantially the same manner as in Example 1-1 except that compound (a) was not dissolved in the non-aqueous electrolytic solution, and that compound (b) was dissolved in an amount of 5.0% by mass, and the below-mentioned evaluation of the battery was conducted.

<Preparation of a positive electrode>

67.5 Parts by mass of aluminum-substituted lithium manganate ($Li_{1.1}Mn_{1.9}Al_{0.1}O_4$) as a first positive electrode active material, 22.5 parts by mass of a lithium-nickel-manganese-cobalt composite oxide ($Li_{1.05}Ni_{0.33}Mn_{0.33}Co_{0.33}O_2$) as a second positive electrode active material, 5 parts by mass of carbon black as a conductor, and 5 parts by mass of polyvinylidene fluoride (PVdF) as a binder were mixed into N-methyl-2-pyrrolidone to obtain a slurry, and the obtained slurry was uniformly applied to an aluminum foil having a thickness of 15 μm and dried, and then roll-pressed to prepare a positive electrode.

<Preparation of a negative electrode>

To 97.5 parts by mass of a graphite powder were added 150 parts by mass of an aqueous dispersion of sodium carboxymethyl cellulose (sodium carboxymethyl cellulose concentration: 1% by mass) as a thickening agent and 2 parts by mass of an aqueous dispersion of a styrene-butadiene rubber (styrene-butadiene rubber concentration: 50% by mass) as a binder, and the resultant was mixed using a disperser to obtain a slurry. The obtained slurry was uniformly applied to a copper foil having a thickness of 10 μm and dried, and roll-pressed to prepare a negative electrode.

<Production of a non-aqueous electrolyte secondary battery>

The above-prepared positive electrode and negative electrode and a separator made of polyolefin were stacked in the order of the negative electrode, separator, and positive electrode. The thus obtained battery element was wrapped in an aluminum laminate film, and the above-mentioned non-aqueous electrolytic solution in each of the Examples and Comparative Examples was injected into the wrapped element, followed by vacuum sealing, to produce a non-aqueous electrolyte secondary battery in a sheet form.

[Evaluation of the non-aqueous electrolyte secondary battery]

• Initial charging/discharging

In a thermostatic chamber at 25°C, the sheet-form non-aqueous electrolyte secondary battery was subjected to constant-current constant-voltage charging at 0.1C (a current value at which the rated capacity in terms of a discharge capacity for one hour rate is discharged in 1 hour is defined as 1C; this applies to the followings) until the voltage became 4.2 V, and then discharged at 0.1C until the voltage became 2.7 V. Using the 1st charge capacity and 1st discharge capacity obtained at that time, a 1st irreversible capacity represented by the following formula:

$$\text{(1st Irreversible capacity)} \\ = \text{(1st Charge capacity)} - \text{(1st Discharge capacity)}$$

was determined by making a calculation.

Subsequently, constant-current constant-voltage charging at 0.3C was performed until the voltage became 4.2 V, and then discharging at 0.3C was performed until the voltage became 2.7 V. Two cycles of a series of the operations were performed, and thus the two cycles of the operations as well as the one cycle for determining a 1st irreversible capacity, that is, three cycles in total of the charging-discharging operations were performed, so that the non-aqueous electrolyte secondary battery was stabilized.

Relative values of the 1st irreversible capacity (average of the 1st irreversible capacity values of the cells that had been able to achieve the above-mentioned initial charging/discharging) determined when the value obtained in Comparative Example 1-1 is taken as 100.0% are shown in Table 1 below, and a ratio of the number of the cells which could not measure a 1st discharge capacity in the above-mentioned initial charging/discharging relative to the number of the tested batteries is shown in Table 1. That is, the smaller the value of 1st irreversible capacity shown in Table 1, the smaller the initial irreversible capacity, or the more advantageous the battery is.

[Table 1]

| No. | Compound (a) content of non-aqueous electrolytic solution (% by mass) | Compound (b) content of non-aqueous electrolytic solution (% by mass) | 1st Irreversible capacity (value relative to Comparative Example 1-1) | Capacity unmeasurable cell ratio |
|---|---|---|---|---|
| Example 1-1 | 1.0 | 0.0 | 95.9% | 0% |
| Example 1-2 | 2.0 | 0.0 | 98.8% | 0% |
| Example 1-3 | 3.0 | 0.0 | 94.9% | 0% |
| Example 1-4 | 4.0 | 0.0 | 99.4% | 0% |
| Comparative Example 1-1 | 0.0 | 0.0 | 100.0% | 0% |

(continued)

| No. | Compound (a) content of non-aqueous electrolytic solution (% by mass) | Compound (b) content of non-aqueous electrolytic solution (% by mass) | 1st Irreversible capacity (value relative to Comparative Example 1-1) | Capacity unmeasurable cell ratio |
|---|---|---|---|---|
| Comparative Example 1-2 | 5.0 | 0.0 | 104.2% | 17% |
| Comparative Example 1-3 | 7.0 | 0.0 | 102.9% | 50% |
| Comparative Example 1-4 | 0.0 | 1.0 | 113.8% | 0% |
| Comparative Example 1-5 | 0.0 | 4.0 | 156.1% | 0% |
| Comparative Example 1-6 | 0.0 | 5.0 | 167.4% | 0% |

As apparent from Table 1, when the non-aqueous electrolytic solution contains the specific ester in an amount of 5.0% by mass or more, the occurrence of defective cells which have a 1st irreversible capacity markedly increased or which cannot satisfactorily perform the initial charging/discharging is markedly increased. Complete elucidation of the occurrence has not been made, but, in the cell in which the specific ester is contained in an amount of 5.0% by mass or more, the tested battery is abnormally expanded, and, from this, it is presumed that the generated gas retains between the positive and negative electrodes to inhibit charging or discharging. Among the batteries, there was a battery which was expanded to such a large extent that the measurement of 1st irreversible capacity was impossible. When there is a cell such that the measurement of capacity is impossible, a non-aqueous electrolyte secondary battery using the non-aqueous electrolytic solution used in such a cell is believed to have a poor production yield.

Further, as can be seen from Table 1, when a compound which is not the specific ester is contained in the non-aqueous electrolytic solution, the 1st irreversible capacity is markedly increased. As apparent from the above, by using the non-aqueous electrolytic solution using the specific ester and containing the specific ester in an amount of 4.5% by mass or less as defined in the present invention, a non-aqueous electrolyte secondary battery having a small 1st irreversible capacity and having excellent yield can be produced.

<<Examples 2-1 to 2-6 and Comparative Example 2-1>>

[Production of a non-aqueous electrolyte secondary battery]

<Preparation of a non-aqueous electrolytic solution>

[Example 2-1]

In a dry argon atmosphere, satisfactorily dried $LiPF_6$ was dissolved in a mixture of ethylene carbonate and diethyl carbonate (volume ratio: 3:7) in a concentration of 1 mol/L (in terms of a concentration in the non-aqueous electrolytic solution), and further satisfactorily dried compound (a) was dissolved in the resultant solution in an amount of 0.35% by mass (in terms of a concentration in the non-aqueous electrolytic solution) to prepare a non-aqueous electrolytic solution. Using the prepared non-aqueous electrolytic solution, a non-aqueous electrolyte secondary battery was produced by the method described below, and the below-mentioned evaluation of the battery was conducted.

[Example 2-2]

A non-aqueous electrolyte secondary battery was produced in substantially the same manner as in Example 2-1 except that the concentration of compound (a) was changed to 0.7% by mass, and the below-mentioned evaluation of the battery was conducted.

[Example 2-3]

A non-aqueous electrolyte secondary battery was produced in substantially the same manner as in Example 2-1 except that the concentration of compound (a) was changed to 1.0% by mass, and the below-mentioned evaluation of the battery was conducted.

[Example 2-4]

A non-aqueous electrolyte secondary battery was produced in substantially the same manner as in Example 2-1 except that the concentration of compound (a) was changed to 2.0% by mass, and the below-mentioned evaluation of the battery was conducted.

[Example 2-5]

A non-aqueous electrolyte secondary battery was produced in substantially the same manner as in Example 2-1 except that the concentration of compound (a) was changed to 3.0% by mass, and the below-mentioned evaluation of the battery was conducted.

[Example 2-6]

A non-aqueous electrolyte secondary battery was produced in substantially the same manner as in Example 2-1 except that the concentration of compound (a) was changed to 4.0% by mass, and the below-mentioned evaluation of the battery was conducted.

[Comparative Example 2-1]

A non-aqueous electrolyte secondary battery was produced in substantially the same manner as in Example 2-1 except that compound (a) was not dissolved in the non-aqueous electrolytic solution, and the below-mentioned evaluation of the battery was conducted.

<Preparation of a positive electrode>

67.5 Parts by mass of aluminum-substituted lithium manganate ($Li_{1.1}Mn_{1.9}Al_{0.1}O_4$) as a first positive electrode active material, 22.5 parts by mass of a lithium-nickel-manganese-cobalt composite oxide ($Li_{1.05}Ni_{0.33}Mn_{0.33}Co_{0.33}O_2$) as a second positive electrode active material, 5 parts by mass of carbon black as a conductor, and 5 parts by mass of polyvinylidene fluoride (PVdF) as a binder were mixed into N-methyl-2-pyrrolidone to obtain a slurry, and the obtained slurry was uniformly applied to an aluminum foil having a thickness of 15 μm and dried, and then roll-pressed to prepare a positive electrode.

<Preparation of a negative electrode>

To 97.5 parts by mass of a graphite powder were added 150 parts by mass of an aqueous dispersion of sodium carboxymethyl cellulose (sodium carboxymethyl cellulose concentration: 1% by mass) as a thickening agent and 2 parts by mass of an aqueous dispersion of a styrene-butadiene rubber (styrene-butadiene rubber concentration: 50% by mass) as a binder, and the resultant was mixed using a disperser to obtain a slurry. The obtained slurry was uniformly applied to a copper foil having a thickness of 10 μm and dried, and roll-pressed to prepare a negative electrode.

<Production of a non-aqueous electrolyte secondary battery>

The above-prepared positive electrode and negative electrode and a separator made of polyolefin were stacked in the order of the negative electrode, separator, and positive electrode. The thus obtained battery element was wrapped in an aluminum laminate film, and the above-mentioned non-aqueous electrolytic solution in each of the Examples and Comparative Examples was injected into the wrapped element, followed by vacuum sealing, to produce a non-aqueous electrolyte secondary battery in a sheet form.

[Evaluation of the non-aqueous electrolyte secondary battery]

• Initial charging/discharging

In a thermostatic chamber at 25°C, the sheet-form non-aqueous electrolyte secondary battery was subjected to constant-current constant-voltage charging at 0.1C until the voltage became 4.2 V, and then discharged at 0.1C until the voltage became 2.7 V. Subsequently, constant-current constant-voltage charging at 0.3C was performed until the voltage became 4.2 V, and then discharging at 0.3C was performed until the voltage became 2.7 V. Two cycles of a series of the operations were performed, and thus the two cycles of the operations as well as the one cycle of the above-mentioned charging-discharging operation at 0.1C, that is, three cycles in total of the charging-discharging operations were performed, so that the non-aqueous electrolyte secondary battery was stabilized. Then, the resultant secondary battery was subjected to aging by maintaining it at 60°C for 24 hours.

• High-temperature cycle test

A high-temperature cycle test was conducted in a high-temperature environment at 55°C which is considered as the highest temperature at which the non-aqueous electrolyte secondary battery can be actually used. In a thermostatic chamber at 55°, constant-current constant-voltage charging at 1C was performed until the voltage became 4.2 V, and then discharging at a constant current at 1C was performed until the voltage became 2.7 V, and a series of the charging and discharging operations was taken as one cycle, and 199 cycles were performed. A ratio of the capacity obtained at the 199th cycle to the capacity obtained at the first cycle was determined as a "high-temperature cycle capacity maintaining ratio".

Relative values of the high-temperature cycle capacity maintaining ratio determined when the value obtained in Comparative Example 2-1 is taken as 100.0% are shown in Table 2 below.

[Table 2]

| No. | Compound (a) content of non-aqueous electrolytic solution (% by mass) | High-temperature cycle capacity maintaining ratio (value relative to Comparative Example 2-1) |
|---|---|---|
| Example 2-1 | 0.35 | 105.2% |
| Example 2-2 | 0.7 | 107.3% |
| Example 2-3 | 1.0 | 110.0% |
| Example 2-4 | 2.0 | 107.8% |
| Example 2-5 | 3.0 | 105.3% |
| Example 2-6 | 4.0 | 102.6% |
| Comparative Example 2-1 | 0.0 | 100.0% |

As apparent from Table 2, by using the non-aqueous electrolytic solution of the present invention containing the specific ester in the non-aqueous electrolytic solution, differing from the case using a non-aqueous electrolytic solution which does not contain the specific ester, there can be provided a non-aqueous electrolyte secondary battery which is unlikely to be reduced in the capacity even when being repeatedly charged and discharged at high temperatures. That is, a very excellent durability improvement effect of the specific ester has been shown.

<<Examples 3-1 to 3-5 and Comparative Examples 3-1 and 3-2>>

[Production of a non-aqueous electrolyte secondary battery]

<Preparation of a non-aqueous electrolytic solution>

[Example 3-1]

In a dry argon atmosphere, satisfactorily dried $LiPF_6$ was dissolved in a mixture of ethylene carbonate and diethyl carbonate (volume ratio: 30:70) in a concentration of 1 mol/L (in terms of a concentration in the non-aqueous

electrolytic solution), and further satisfactorily dried compound (a) was dissolved in the resultant solution in an amount of 0.1% by mass (in terms of a concentration in the non-aqueous electrolytic solution) to prepare a non-aqueous electrolytic solution. Using the prepared non-aqueous electrolytic solution, a non-aqueous electrolyte secondary battery was produced by the method described below, and the below-mentioned evaluation of the battery was conducted.

[Example 3-2]

A non-aqueous electrolyte secondary battery was produced in substantially the same manner as in Example 3-1 except that, as a solvent for the non-aqueous electrolytic solution, instead of the mixture of ethylene carbonate and diethyl carbonate (volume ratio: 30:70), a mixture of ethylene carbonate, propylene carbonate, and diethyl carbonate (volume ratio: 25:5:70) was used, and the below-mentioned evaluation of the battery was conducted.

[Example 3-3]

A non-aqueous electrolyte secondary battery was produced in substantially the same manner as in Example 3-1 except that, as a solvent for the non-aqueous electrolytic solution, instead of the mixture of ethylene carbonate and diethyl carbonate (volume ratio: 30:70), a mixture of ethylene carbonate, propylene carbonate, and diethyl carbonate (volume ratio: 18:12:70) was used, and the below-mentioned evaluation of the battery was conducted.

[Example 3-4]

A non-aqueous electrolyte secondary battery was produced in substantially the same manner as in Example 3-1 except that, as a solvent for the non-aqueous electrolytic solution, instead of the mixture of ethylene carbonate and diethyl carbonate (volume ratio: 30:70), a mixture of ethylene carbonate, propylene carbonate, and diethyl carbonate (volume ratio: 29.8:0.2:70) was used, and the below-mentioned evaluation of the battery was conducted.

[Comparative Example 3-1]

A non-aqueous electrolyte secondary battery was produced in substantially the same manner as in Example 3-1 except that, as a solvent for the non-aqueous electrolytic solution, instead of the mixture of ethylene carbonate and diethyl carbonate (volume ratio: 3:7), a mixture of propylene carbonate and diethyl carbonate (volume ratio: 3:7) was used, and the below-mentioned evaluation of the battery was conducted.

[Reference Example 3-5]

A non-aqueous electrolyte secondary battery was produced in substantially the same manner as in Example 3-1 except that, as an electrolyte for the non-aqueous electrolytic solution, instead of $LiPF_6$, $LiClO_4$ was used, and the below-mentioned evaluation of the battery was conducted.

[Comparative Example 3-2]

A non-aqueous electrolyte secondary battery was produced in substantially the same manner as in Example 3-1 except that, as a solvent for the non-aqueous electrolytic solution, instead of the mixture of ethylene carbonate and diethyl carbonate (volume ratio: 3:7), a mixture of propylene carbonate and diethyl carbonate (volume ratio: 3:7) was used, and that, as an electrolyte for the non-aqueous electrolytic solution, instead of $LiPF_6$, $LiClO_4$ was used, and the below-mentioned evaluation of the battery was conducted.

<Preparation of a positive electrode>

67.5 Parts by mass of aluminum-substituted lithium manganate ($Li_{1.1}Mn_{1.9}Al_{0.1}O_4$) as a first positive electrode active material, 22.5 parts by mass of a lithium-nickel-manganese-cobalt composite oxide ($Li_{1.05}Ni_{0.33}Mn_{0.33}Co_{0.33}O_2$) as a second positive electrode active material, 5 parts by mass of carbon black as a conductor, and 5 parts by mass of polyvinylidene fluoride (PVdF) as a binder were mixed into N-methyl-2-pyrrolidone to obtain a slurry, and the obtained slurry was uniformly applied to an aluminum foil having a thickness of 15 $\mu$m and dried, and then roll-pressed to prepare a positive electrode.

<Preparation of a negative electrode>

To 97.5 parts by mass of a graphite powder were added 150 parts by mass of an aqueous dispersion of sodium carboxymethyl cellulose (sodium carboxymethyl cellulose concentration: 1% by mass) as a thickening agent and 2 parts by mass of an aqueous dispersion of a styrene-butadiene rubber (styrene-butadiene rubber concentration: 50% by mass) as a binder, and the resultant was mixed using a disperser to obtain a slurry. The obtained slurry was uniformly applied to a copper foil having a thickness of 10 μm and dried, and roll-pressed to prepare a negative electrode.

<Production of a non-aqueous electrolyte secondary battery>

The above-prepared positive electrode and negative electrode and a separator made of polyolefin were stacked in the order of the negative electrode, separator, and positive electrode. The thus obtained battery element was wrapped in an aluminum laminate film, and the above-mentioned non-aqueous electrolytic solution in each of the Examples and Comparative Examples was injected into the wrapped element, followed by vacuum sealing, to produce a non-aqueous electrolyte secondary battery in a sheet form.

[Evaluation of the non-aqueous electrolyte secondary battery]

• Initial charging/discharging

In a thermostatic chamber at 25°C, the sheet-form non-aqueous electrolyte secondary battery was subjected to constant-current constant-voltage charging at 0.1C until the voltage became 4.2 V, and then discharged at 0.1C until the voltage became 2.7 V. Using the 1st charge capacity and 1st discharge capacity obtained at that time, a 1st charging/discharging efficiency represented by the following formula:

$$\text{(1st Charging/discharging efficiency)} = \text{(1st Discharge capacity)/(1st Charge capacity)}$$

was determined by making a calculation. Relative values of the 1st charging/discharging efficiency determined when the value obtained in Example 3-5 is taken as 100.0% are shown in Table 3 below.

[Table 3]

| No. | Cyclic carbonate for solvent | Electrolyte | 1st Charging/discharging efficiency (value relative to Example 3-5) |
|---|---|---|---|
| Example 3-1 | EC Alone | $LiPF_6$ | 101.3% |
| Example 3-2 | EC:PC(25:5) | $LiPF_6$ | 99.9% |
| Example 3-3 | EC:PC(18:12) | $LiPF_6$ | 100.1% |
| Example 3-4 | EC:PC(29.8:0.2) | $LiPF_6$ | 99.8% |
| Comparative Example 3-1 Ref. Example 3-5 | PC Alone | $LiPF_6$ | 0.0% |
| | EC Alone | $LiClO_4$ | 100.0% |
| Comparative Example 3-2 | PC Alone | $LiClO_4$ | 0.0% |
| * In the Table, ethylene carbonate and propylene carbonate are abbreviated to EC and PC, respectively. | | | |

As apparent from Table 3, by using the non-aqueous electrolytic solution of the present invention containing both an electrolyte, such as $LiPF_6$ or $LiClO_4$, and the specific ester in the non-aqueous electrolytic solution, a non-aqueous electrolyte battery having excellent 1st charging/discharging efficiency can be obtained. Further, it has been shown that when propylene carbonate is contained in the non-aqueous solvent, it is necessary that ethylene carbonate be contained in a predetermined amount.

«Examples 4-1 to 4-3 and Comparative Examples 4-1 to 4-4»

[Production of a non-aqueous electrolyte secondary battery]

<Preparation of a non-aqueous electrolytic solution>

[Example 4-1]

In a dry argon atmosphere, satisfactorily dried $LiPF_6$ was dissolved in a mixture of ethylene carbonate and diethyl carbonate (volume ratio: 3:7) in a concentration of 1 mol/L (in terms of a concentration in the non-aqueous electrolytic solution), and further satisfactorily dried compound (a) in an amount of 0.2% by mass and satisfactorily dried compound (c) in an amount of 1.0% by mass (each in terms of a concentration in the non-aqueous electrolytic solution) were dissolved in the resultant solution to prepare a non-aqueous electrolytic solution. Using the prepared non-aqueous electrolytic solution, a non-aqueous electrolyte secondary battery was produced by the method described below, and the below-mentioned evaluation of the battery was conducted.

[Example 4-2]

A non-aqueous electrolyte secondary battery was produced in substantially the same manner as in Example 4-1 except that the concentration of compound (a) was changed to 0.5% by mass, that compound (c) was not dissolved in the non-aqueous electrolytic solution, and that compound (d) was dissolved in an amount of 0.7% by mass, and the below-mentioned evaluation of the battery was conducted.

[Example 4-3]

A non-aqueous electrolyte secondary battery was produced in substantially the same manner as in Example 4-1 except that compound (c) was not dissolved in the non-aqueous electrolytic solution, and that compound (e) was dissolved in an amount of 1.0% by mass, and the below-mentioned evaluation of the battery was conducted.

[Comparative Example 4-1]

A non-aqueous electrolyte secondary battery was produced in substantially the same manner as in Example 4-1 except that compound (a) and compound (c) were not dissolved in the non-aqueous electrolytic solution, and the below-mentioned evaluation of the battery was conducted.

[Comparative Example 4-2]

A non-aqueous electrolyte secondary battery was produced in substantially the same manner as in Example 4-1 except that compound (a) was not dissolved in the non-aqueous electrolytic solution, and the below-mentioned evaluation of the battery was conducted.

[Comparative Example 4-3]

A non-aqueous electrolyte secondary battery was produced in substantially the same manner as in Example 4-2 except that compound (a) was not dissolved in the non-aqueous electrolytic solution, and the below-mentioned evaluation of the battery was conducted.

[Comparative Example 4-4]

A non-aqueous electrolyte secondary battery was produced in substantially the same manner as in Example 4-3 except that compound (a) was not dissolved in the non-aqueous electrolytic solution, and the below-mentioned evaluation of the battery was conducted.

<Preparation of a positive electrode>

67.5 Parts by mass of aluminum-substituted lithium manganate ($Li_{1.1}Mn_{1.9}Al_{0.1}O_4$) as a first positive electrode active material, 22.5 parts by mass of a lithium-nickel-manganese-cobalt composite oxide ($Li_{1.05}Ni_{0.33}Mn_{0.33}Co_{0.33}O_2$) as a second positive electrode active material, 5 parts by mass of carbon black as a conductor, and 5 parts by mass of

polyvinylidene fluoride (PVdF) as a binder were mixed into N-methyl-2-pyrrolidone to obtain a slurry, and the obtained slurry was uniformly applied to an aluminum foil having a thickness of 15 μm and dried, and then roll-pressed to prepare a positive electrode.

<Preparation of a negative electrode>

To 97.5 parts by mass of a graphite powder were added 150 parts by mass of an aqueous dispersion of sodium carboxymethyl cellulose (sodium carboxymethyl cellulose concentration: 1% by mass) as a thickening agent and 2 parts by mass of an aqueous dispersion of a styrene-butadiene rubber (styrene-butadiene rubber concentration: 50% by mass) as a binder, and the resultant was mixed using a disperser to obtain a slurry. The obtained slurry was uniformly applied to a copper foil having a thickness of 10 μm and dried, and roll-pressed to prepare a negative electrode.

<Production of a non-aqueous electrolyte secondary battery>

The above-prepared positive electrode and negative electrode and a separator made of polyolefin were stacked in the order of the negative electrode, separator, and positive electrode. The thus obtained battery element was wrapped in an aluminum laminate film, and the above-mentioned non-aqueous electrolytic solution in each of the Examples and Comparative Examples was injected into the wrapped element, followed by vacuum sealing, to produce a non-aqueous electrolyte secondary battery in a sheet form.

[Evaluation of the non-aqueous electrolyte secondary battery]

• Initial charging/discharging

In a thermostatic chamber at 25°C, the sheet-form non-aqueous electrolyte secondary battery was subjected to constant-current constant-voltage charging at 0.1C until the voltage became 4.2 V, and then discharged at 0.1C until the voltage became 2.7 V. Subsequently, constant-current constant-voltage charging at 0.3C was performed until the voltage became 4.2 V, and then discharging at 0.3C was performed until the voltage became 2.7 V. Two cycles of a series of the operations were performed, and thus the two cycles of the operations as well as the one cycle of the above-mentioned charging-discharging operation at 0.1C, that is, three cycles in total of the charging-discharging operations were performed, so that the non-aqueous electrolyte secondary battery was stabilized. Then, the resultant secondary battery was subjected to aging by maintaining it at 60°C for 24 hours.

• After-high-temperature cycle rapid discharge test

A high-temperature cycle was conducted in a high-temperature environment at 55°C which is considered as the highest temperature at which the non-aqueous electrolyte secondary battery can be actually used. In a thermostatic chamber at 55°C, constant-current constant-voltage charging at 1C was performed until the voltage became 4.2 V, and then discharging at a constant current at 1C was performed until the voltage became 2.7 V, and a series of the charging and discharging operations was taken as one cycle, and 99 cycles were performed. Then, constant-current constant-voltage charging at 0.33C was performed until the voltage became 4.2 V, and then discharging at a constant current at 0.33C was performed until the voltage became 2.7 V.

After the above-mentioned high-temperature cycle was conducted, in a thermostatic chamber at 25°C, the battery was subjected to constant-current constant-voltage charging at 0.3C until the voltage became 4.2 V, and the resultant battery was discharged at a constant current value corresponding to 5C until the voltage became 2.7 V, and a discharge capacity at that time was measured and determined as an "after-high-temperature cycle rapid capacity".

Relative values of the "after-high-temperature cycle rapid capacity" determined when the value obtained in Comparative Example 4-1 is taken as 100.0% are shown in Table 4 below.

[Table 4]

| No. | Compound content of non-aqueous electrolytic solution (% by mass) | | | | After- high-temperature cycle rapid capacity (value relative to Comparative Example 4-1) |
|---|---|---|---|---|---|
| | Compound (a) | Compound (c) | Compound (d) | Compound (e) | |
| Example 4-1 | 0.2 | 1.0 | 0.0 | 0.0 | 107.4% |
| Example 4-2 | 0.5 | 0.0 | 0.7 | 0.0 | 104.7% |

(continued)

| No. | Compound content of non-aqueous electrolytic solution (% by mass) | | | | After- high-temperature cycle rapid capacity (value relative to Comparative Example 4-1) |
|---|---|---|---|---|---|
| | Compound (a) | Compound (c) | Compound (d) | Compound (e) | |
| Example 4-3 | 0.2 | 0.0 | 0.0 | 1.0 | 118.7% |
| Comparative Example 4-1 | 0.0 | 0.0 | 0.0 | 0.0 | 100.0% |
| Comparative Example 4-2 | 0.0 | 1.0 | 0.0 | 0.0 | 105.0% |
| Comparative Example 4-3 | 0.0 | 0.0 | 0.7 | 0.0 | 103.9% |
| Comparative Example 4-4 | 0.0 | 0.0 | 0.0 | 1.0 | 114.8% |

As apparent from Table 4, by using the non-aqueous electrolytic solution of the present invention containing both the specific ester and specific additive in the non-aqueous electrolytic solution, differing from the case using a non-aqueous electrolytic solution containing only the specific additive, there can be provided a non-aqueous electrolyte secondary battery which exhibits a large rapid capacity even when being repeatedly charged and discharged at high temperatures (comparison of Example 4-1 with Comparative Example 4-2, comparison of Example 4-2 with Comparative Example 4-3, and comparison of Example 4-3 with Comparative Example 4-4).

INDUSTRIAL APPLICABILITY

By using the non-aqueous electrolytic solution of the present invention, there can be provided a battery which exhibits a small 1st irreversible capacity (initial irreversible capacity) without sacrificing the yield upon producing the battery, and which is unlikely to be reduced in the capacity even when being repeatedly charged and discharged at high temperatures. Therefore, the electrolytic solution can be advantageously used in various fields for electronic devices and others in which a non-aqueous electrolyte secondary battery is used. Further, the electrolytic solution can also be advantageously used in electrolytic capacitors, such as a lithium-ion capacitor, using a non-aqueous electrolytic solution.

With respect to the application of the non-aqueous electrolytic solution and non-aqueous electrolyte secondary battery of the present invention, there is no particular limitation, and they can be used in known various applications. Specific examples of applications include a laptop personal computer, an electronic book player, a cell phone, a portable facsimile, a portable copying machine, a portable printer, a portable audio player, a small-size video camera, a liquid crystal television set, a hand-held cleaner, a transceiver, an electronic organizer, a calculator, a memory card, a portable tape recorder, a radio receiver, a backup power source, an automobile, a bike, a bicycle fitted with a motor, a bicycle, a lighting fixture, a toy, a video game machine, a clock, an electric tool, a stroboscope, a camera, and a lithium-ion capacitor.

## Claims

**1.** A non-aqueous electrolytic solution for use in a non-aqueous electrolyte secondary battery which comprises a positive electrode capable of having occluded therein and releasing metal ions, a negative electrode capable of having occluded therein and releasing metal ions, and a non-aqueous electrolytic solution comprising a non-aqueous solvent and an electrolyte dissolved in the non-aqueous solvent,
the non-aqueous electrolytic solution containing a compound represented by the general formula (1) below in an amount of 0.01 to 4.5% by mass, based on the mass of the non-aqueous electrolytic solution, wherein, when the non-aqueous electrolytic solution contains propylene carbonate, the non-aqueous electrolytic solution contains ethylene carbonate and propylene carbonate, and satisfies at least one of the requirements that (A) the volume ratio of the ethylene carbonate and the propylene carbonate be 99:1 to 40:60, and that (B) the content of the propylene carbonate in the non-aqueous solvent be 10% by volume or less:

[Chemical formula 1]

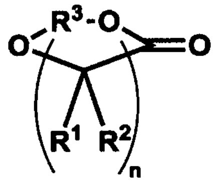 . . . (1)

wherein, in the general formula (1), n represents an integer of 1 to 4; each of $R^1$ and $R^2$ independently represents hydrogen, fluorine, or a hydrocarbon group having 2 carbon atoms or less and optionally being substituted with fluorine, wherein the total of the number of carbon atoms of $R^1$ and the number of carbon atoms of $R^2$ is 2 or less, wherein when n is 2 or more, a plurality $R^1$'s are the same or different and a plurality of $R^2$'s are the same or different; and $R^3$ represents a carbonyl group, a sulfinyl group, a sulfonyl group, or a group represented by the following general formula (2):

[Chemical formula 2]

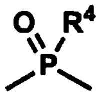 . . . (2)

wherein, in the general formula (2), $R^4$ represents fluorine or a hydrocarbon group having 1 to 10 carbon atoms and optionally being substituted with fluorine, wherein the non-aqueous electrolytic solution contains a hexafluorophosphate as the electrolyte.

2. The non-aqueous electrolytic solution according to claim 1, wherein the compound represented by the general formula (1) above is a compound represented by the following general formula (3):

[Chemical formula 3]

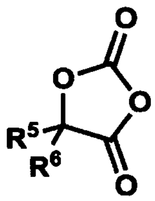 . . . (3)

wherein, in the formula (3), each of $R^5$ and $R^6$ independently represents hydrogen, fluorine, or a hydrocarbon group having 2 carbon atoms or less and optionally being substituted with fluorine, and wherein the total of the number of carbon atoms of $R^5$ and the number of carbon atoms of $R^6$ is 2 or less.

3. The non-aqueous electrolytic solution according to claim 1 or 2, wherein the negative electrode capable of having occluded therein and releasing metal ions comprises a carbonaceous material or a material containing silicon.

4. The non-aqueous electrolytic solution according to claim 2 or 3, wherein, in the general formula (3), $R^5$ is hydrogen, and $R^6$ is hydrogen or a methyl group.

5. The non-aqueous electrolytic solution according to any one of claims 1 to 4, which contains at least one cyclic carbonate and at least one linear carbonate as the non-aqueous solvent, wherein the volume ratio (volume or total volume of the cyclic carbonate or carbonates):(volume or total volume of the linear carbonate or carbonates) is 1.5:8.5 to 4:6.

6. The non-aqueous electrolytic solution according to claim 5, which contains at least ethylene carbonate as the cyclic carbonate in the non-aqueous solvent.

7. The non-aqueous electrolytic solution according to any one of claims 1 to 6, which further contains at least one compound selected from the group consisting of a cyclic carbonate having a fluorine atom, a cyclic carbonate having a carbon-carbon unsaturated bond, a difluorophosphate, a fluorosulfate, a compound having an isocyanate group, a compound having a cyano group, a cyclic sulfonic ester, and a dicarboxylic acid complex salt.

8. A non-aqueous electrolyte secondary battery comprising a positive electrode capable of having occluded therein and releasing metal ions, a negative electrode capable of having occluded therein and releasing metal ions, and a non-aqueous electrolytic solution, wherein the non-aqueous electrolytic solution is the non-aqueous electrolytic solution according to any one of claims 1 to 7.

9. The non-aqueous electrolyte secondary battery according to claim 8, wherein the negative electrode comprises a carbonaceous material or a material containing silicon.

10. The non-aqueous electrolyte secondary battery according to claim 8 or 9, wherein an active material in the positive electrode contains a lithium-manganese composite oxide having a spinel structure.

**Patentansprüche**

1. Eine nicht-wässrige Elektrolytlösung zur Verwendung in einer Sekundärbatterie mit nicht-wässrigem Elektrolyten, die eine positive Elektrode, die Metallionen einschließen und freisetzen kann, eine negative Elektrode, die Metallionen einschließen und freisetzen kann, und eine nicht-wässrige Elektrolytlösung, umfassend ein nichtwässriges Lösungsmittel und einen in dem nicht-wässrigen Lösungsmittel gelösten Elektrolyten, umfasst,
wobei die nicht-wässrige Elektrolytlösung eine Verbindung, dargestellt durch die nachstehende allgemeine Formel (1), in einer Menge von 0,01 bis 4,5 Massen-% enthält, bezogen auf die Masse der nicht-wässrigen Elektrolytlösung,
wobei, wenn die nicht-wässrige Elektrolytlösung Propylencarbonat enthält, die nicht-wässrige Elektrolytlösung Ethylencarbonat und Propylencarbonat enthält und mindestens eine der Anforderungen erfüllt, dass (A) das Volumenverhältnis des Ethylencarbonates zu dem Propylencarbonat 99:1 bis 40:60 beträgt und dass (B) der Gehalt des Propylencarbonates in dem nicht-wässrigen Lösungsmittel 10 Volumen-% oder weniger beträgt:

[Chemische Formel 1]

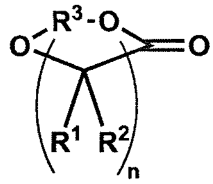

· · · (1)

wobei in der allgemeinen Formel (1) n eine ganze Zahl von 1 bis 4 darstellt; jeder von $R^1$ und $R^2$ unabhängig Wasserstoff, Fluor, oder einen Kohlenwasserstoffrest mit 2 Kohlenstoffatomen oder weniger und gegebenenfalls mit Fluor substituiert darstellt, wobei die Summe der Anzahl der Kohlenstoffatome von $R^1$ und der Anzahl der Kohlenstoffatome von $R^2$ gleich 2 oder weniger ist, wobei, wenn n gleich 2 oder mehr ist, mehrere $R^1$ gleich oder verschieden sind und mehrere $R^2$ gleich oder verschieden sind; und $R^3$ eine Carbonylgruppe, eine Sulfinylgruppe, eine Sulfonylgruppe oder eine Gruppe, dargestellt durch die nachstehende allgemeine Formel (2), darstellt:

[Chemische Formel 2]

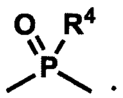

· · · (2)

wobei in der allgemeinen Formel (2) $R^4$ Fluor oder einen Kohlenwasserstoffrest mit 1 bis 10 Kohlenstoffatomen und

gegebenenfalls mit Fluor substituiert darstellt, wobei die nicht-wässrige Elektrolytlösung ein Hexafluorphosphat als den Elektrolyten enthält.

2. Die nicht-wässrige Elektrolytlösung gemäß Anspruch 1, wobei die Verbindung, dargestellt durch die vorstehende allgemeine Formel (1), eine Verbindung, dargestellt durch die nachstehende allgemeine Formel (3), ist:

[Chemische Formel 3]

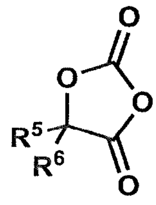

· · · (3)

wobei in der Formel (3) jeder von $R^5$ und $R^6$ unabhängig Wasserstoff, Fluor oder einen Kohlenwasserstoffrest mit 2 Kohlenstoffatomen oder weniger und gegebenenfalls mit Fluor substituiert darstellt und wobei die Summe der Anzahl der Kohlenstoffatome von $R^5$ und der Anzahl der Kohlenstoffatome von $R^6$ gleich 2 oder weniger ist.

3. Die nicht-wässrige Elektrolytlösung gemäß Anspruch 1 oder 2, wobei die negative Elektrode, die Metallionen einschließen und freisetzen kann, ein kohlenstoffhaltiges Material oder siliciumhaltiges Material umfasst.

4. Die nicht-wässrige Elektrolytlösung gemäß Anspruch 2 oder 3, wobei in der allgemeinen Formel (3) $R^5$ Wasserstoff ist und $R^6$ Wasserstoff oder eine Methylgruppe ist.

5. Die nicht-wässrige Elektrolytlösung gemäß einem der Ansprüche 1 bis 4, die mindestens ein cyclisches Carbonat und mindestens ein lineares Carbonat als das nicht-wässrige Lösungsmittel enthält, wobei das Volumenverhältnis (Volumen oder Gesamtvolumen des cyclischen Carbonats oder der Carbonate):(Volumen oder Gesamtvolumen des linearen Carbonats oder der Carbonate) 1,5:8,5 bis 4:6 beträgt.

6. Die nicht-wässrige Elektrolytlösung gemäß Anspruch 5, die mindestens Ethylencarbonat als das cyclische Carbonat in dem nicht-wässrigen Lösungsmittel enthält.

7. Die nicht-wässrige Elektrolytlösung gemäß einem der Ansprüche 1 bis 6, die ferner mindestens eine Verbindung, ausgewählt aus der Gruppe bestehend aus einem cyclischen Carbonat mit einem Fluoratom, einem cyclischen Carbonat mit einer ungesättigten Kohlenstoff-Kohlenstoffbindung, einem Difluorphosphat, einem Fluorsulfat, einer Verbindung mit einer Isocyanatgruppe, einer Verbindung mit einer Cyanogruppe, einem cyclischen Sulfonsäureester und einem Dicarbonsäure-Komplexsalz, enthält.

8. Eine Sekundärbatterie mit nicht-wässrigen Elektrolyten, umfassend eine positive Elektrode, die Metallionen einschließen und freisetzen kann, eine negative Elektrode, die Metallionen einschließen und freisetzen kann, und eine nicht-wässrige Elektrolytlösung,
wobei die nicht-wässrige Elektrolytlösung die nicht-wässrige Elektrolytlösung gemäß einem der Ansprüche 1 bis 7 ist.

9. Die Sekundärbatterie mit nicht-wässrigem Elektrolyten gemäß Anspruch 8, wobei die negative Elektrode ein kohlenstoffhaltiges Material oder ein siliciumhaltiges Material umfasst.

10. Die Sekundärbatterie mit nicht-wässrigem Elektrolyten gemäß Anspruch 8 oder 9, wobei ein Aktivmaterial in der positiven Elektrode ein Lithium-Mangan-Verbundoxid mit einer Spinellstruktur enthält.

**Revendications**

1. Solution électrolytique non aqueuse pour une utilisation dans une batterie secondaire à électrolyte non aqueux qui comprend une électrode positive capable de retenir et de libérer, des ions métalliques, une électrode négative capable de retenir et de libérer, des ions métalliques, et une solution électrolytique non aqueuse comprenant un solvant non aqueux et un électrolyte dissous dans le solvant non aqueux,

la solution électrolytique non aqueuse comprenant un composé représenté par la formule générale (1) ci-dessous en une quantité de 0,01 à 4,5 % en masse, par rapport à la masse de la solution électrolytique non aqueuse, dans laquelle, quand la solution électrolytique non aqueuse contient du carbonate de propylène, la solution électrolytique non aqueuse contient du carbonate d'éthylène et du carbonate de propylène, et satisfait à au moins l'une des exigences selon lesquelles (A) le rapport en volume du carbonate d'éthylène au carbonate de propylène est de 99/1 à 40/60, et (B) la teneur en le carbonate de propylène dans le solvant non aqueux est de 10 % en volume ou moins :

[formule chimique 1]

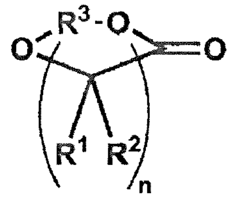

(1)

où, dans la formule générale (1), n représente un entier de 1 à 4 ; chacun de $R^1$ et $R^2$ représente indépendamment l'hydrogène, le fluor, ou un groupe hydrocarboné ayant 2 atomes de carbone ou moins et éventuellement substitué par du fluor, le total du nombre d'atomes de carbone de $R^1$ et du nombre d'atomes de carbone de $R^2$ étant de 2 ou moins et, quand n vaut 2 ou plus, les plusieurs $R^1$ sont identiques ou différents et les plusieurs $R^2$ sont identiques ou différents ; et $R^3$ représente un groupe carbonyle, un groupe sulfinyle, un groupe sulfonyle, ou un groupe représenté par la formule générale (2) suivante :

[formule chimique 2]

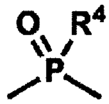

(2)

où, dans la formule générale (2), $R^4$ représente le fluor ou un groupe hydrocarboné ayant 1 à 10 atomes de carbone et éventuellement substitué par du fluor, laquelle solution électrolytique non aqueuse contient un hexafluorophosphate en tant qu'électrolyte.

2. Solution électrolytique non aqueuse selon la revendication 1, dans laquelle le composé représenté par la formule générale (1) ci-dessus est un composé représenté par la formule générale (3) suivante :

[formule chimique 3]

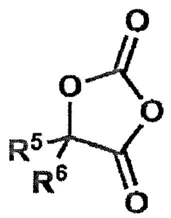

(3)

où, dans la formule (3), chacun de $R^5$ et $R^6$ représente indépendamment l'hydrogène, le fluor, ou un groupe hydrocarboné ayant 2 atomes de carbone ou moins et éventuellement substitué par du fluor, et le total du nombre d'atomes de carbone de $R^5$ et du nombre d'atomes de carbone de $R^6$ est de 2 ou moins.

**3.** Solution électrolytique non aqueuse selon la revendication 1 ou 2, dans laquelle l'électrode négative capable de retenir et de libérer, des ions métalliques, comprend un matériau carboné ou un matériau contenant du silicium.

**4.** Solution électrolytique non aqueuse selon la revendication 2 ou 3, dans laquelle, dans la formule générale (3), $R^5$ est l'hydrogène, et $R^6$ est l'hydrogène ou un groupe méthyle.

**5.** Solution électrolytique non aqueuse selon l'une quelconque des revendications 1 à 4, qui contient au moins un carbonate cyclique et au moins un carbonate linéaire en tant que solvant non aqueux, et dans laquelle le rapport en volume (volume ou volume total du ou des carbonates cycliques) / (volume ou volume total du ou des carbonates linéaires) est de 1,5/8,5 à 4/6.

**6.** Solution électrolytique non aqueuse selon la revendication 5, qui contient au moins du carbonate d'éthylène en tant que carbonate cyclique dans le solvant non aqueux.

**7.** Solution électrolytique non aqueuse selon l'une quelconque des revendications 1 à 6, qui contient en outre au moins un composé choisi dans l'ensemble constitué par un carbonate cyclique ayant un atome de fluor, un carbonate cyclique ayant une liaison insaturée carbone-carbone, un difluorophosphate, un fluorosulfate, un composé ayant un groupe isocyanate, un composé ayant un groupe cyano, un ester sulfonate cyclique, et un sel complexe d'acide dicarboxylique.

**8.** Batterie secondaire à électrolyte non aqueux comprenant une électrode positive capable de retenir et de libérer, des ions métalliques, une électrode négative capable de retenir et de libérer, des ions métalliques, et une solution électrolytique non aqueuse, dans laquelle la solution électrolytique non aqueuse est la solution électrolytique non aqueuse de l'une quelconque des revendications 1 à 7.

**9.** Batterie secondaire à électrolyte non aqueux selon la revendication 8, dans laquelle l'électrode négative comprend un matériau carboné ou un matériau contenant du silicium.

**10.** Batterie secondaire à électrolyte non aqueux selon la revendication 8 ou 9, dans laquelle un matériau actif dans l'électrode positive contient un oxyde composite de lithium-manganèse ayant une structure de spinelle.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020090082780
- JP HEI1134873 B
- JP SHO62290069 B


### Non-patent literature cited in the description


- *Journal of the Chemical Society,* 1951, 1357